(19) Europäisches Patentamt
European Patent Office
Office européen des brevets

(11) EP 4 749 967 A1

(12) EUROPEAN PATENT APPLICATION
published in accordance with Art. 153(4) EPC

(43) Date of publication:
**27.05.2026 Bulletin 2026/22**

(21) Application number: **24853476.0**

(22) Date of filing: **17.07.2024**

(51) International Patent Classification (IPC):
***H04L 5/00*** *(2006.01)*

(52) Cooperative Patent Classification (CPC):
**H04L 5/00; H04L 25/02**

(86) International application number:
**PCT/CN2024/105887**

(87) International publication number:
**WO 2025/036064 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311021987**

(71) Applicant: **HUAWEI TECHNOLOGIES CO., LTD.**
**Shenzhen 518129 (CN)**

(72) Inventors:
- **WANG, Yihong**
  **Shenzhen, Guangdong 518129 (CN)**
- **GAO, Xiang**
  **Shenzhen, Guangdong 518129 (CN)**
- **ZHANG, Zijian**
  **Shenzhen, Guangdong 518129 (CN)**
- **ZHANG, Zhening**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

## (54) COMMUNICATION METHOD AND COMMUNICATION APPARATUS

(57) This application provides a communication method and a communication apparatus. The method may be applied to the communication field. The method includes: obtaining an initial cyclic shift value of an $i^{th}$ port in N ports corresponding to a sounding reference signal SRS resource and first cyclic shift bias sets corresponding to the N ports, where N is a positive integer, i is less than or equal to N, the first cyclic shift bias set is associated with a first bitmap, and a length of the first bitmap is less than or equal to a maximum cyclic shift value; and sending an SRS based on the initial cyclic shift value and a first cyclic bias of the $i^{th}$ port in the first cyclic shift bias set. According to the foregoing method, when there is a conventional UE in a communication system, a degree of freedom for a target UE to perform cyclic shift hopping can be improved, thereby avoiding a case in which poor channel estimation quality is caused by interference to an SRS sent by the target UE.

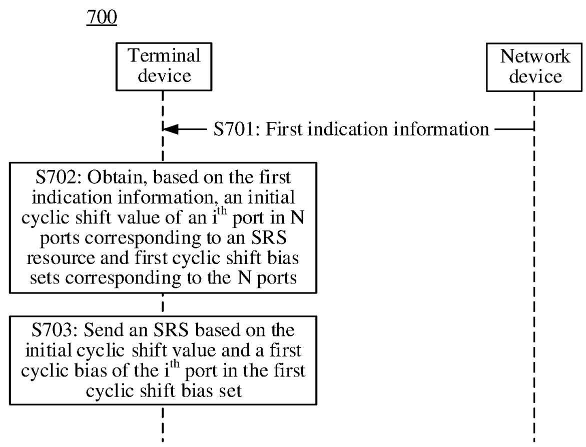


FIG. 7

EP 4 749 967 A1

## Description

This application claims priority to Chinese Patent Application No. 202311021987.0, filed with the China National Intellectual Property Administration on August 11, 2023 and entitled "COMMUNICATION METHOD AND COMMUNICATION APPARATUS", which is incorporated herein by reference in its entirety.

## TECHNICAL FIELD

This application relates to the communication field, and more specifically, to a communication method and a communication apparatus.

## BACKGROUND

A sounding reference signal (sounding reference signal, SRS) is a key reference signal for obtaining channel state information. Especially for a time division duplex (time division duplex, TDD) system, uplink channel information and downlink channel information may be obtained by using the SRS based on uplink and downlink channel reciprocity. In an actual system, considering reference signal overheads and channel estimation performance, a quantity of available orthogonal SRS resources is usually limited. However, there are a large quantity of cells in a network, and a terminal device in each cell sends an SRS to perform channel measurement. Consequently, limited orthogonal SRS resources are reused by a plurality of cells. For example, in an SRS resource allocation policy, an orthogonal SRS resource is allocated to the terminal device in each cell, and non-orthogonal SRS resources are allocated to different cells. Consequently, inter-cell SRS interference is caused. Currently, an SRS interference problem is one of key factors that restrict system performance.

Although enabling of an SRS cyclic shift (cyclic shift, CS) hopping (hopping) or comb offset (comb offset, CO) hopping (hopping) function by the terminal device (user equipment, UE) can effectively alleviate the SRS interference problem, when there is a conventional UE in a communication system (the conventional UE cannot perform CS hopping or CO hopping), a degree of freedom for the terminal device to perform hopping is greatly reduced. As a result, a large quantity of SRS resources cannot be randomized.

## SUMMARY

This application provides a communication method and a communication apparatus, so that when there is a conventional UE in a communication system, a degree of freedom for a target UE to perform hopping can be improved, thereby avoiding a case in which poor channel estimation quality is caused by interference to an SRS sent by the target UE.

According to a first aspect, a communication method is provided. The method includes: obtaining an initial cyclic shift value of an $i^{th}$ port in N ports corresponding to a sounding reference signal SRS resource and first cyclic shift bias sets corresponding to the N ports, where N is a positive integer, i is less than or equal to N, the first cyclic shift bias set is associated with a first bitmap, and a length of the first bitmap is less than or equal to a maximum cyclic shift value; and sending an SRS based on the initial cyclic shift value and a first cyclic bias of the $i^{th}$ port in the first cyclic shift bias set.

Optionally, first indication information sent by a network device may be received to obtain the initial cyclic shift value of the $i^{th}$ port in the N ports corresponding to the SRS resource and the first cyclic shift bias sets corresponding to the N ports.

Optionally, in the first cyclic shift bias sets corresponding to the N ports, the first cyclic shift bias sets corresponding to all the ports may be the same or may be different.

Optionally, that the first cyclic shift bias set is associated with the first bitmap may be understood as that the first cyclic shift bias set is determined based on the first bitmap.

Optionally, the first cyclic bias may be any cyclic bias in the first cyclic shift bias set.

In embodiments of this application, the SRS may be sent based on the initial cyclic shift value of the $i^{th}$ port and the first cyclic bias of the $i^{th}$ port in the first cyclic shift bias set. In this manner, when there is a conventional UE in a communication system, a degree of freedom for a target UE to perform cyclic shift hopping can be improved, thereby avoiding a case in which poor channel estimation quality is caused by interference to the SRS sent by the target UE.

It should be understood that the conventional UE may be a terminal device that does not have a CS hopping or CO hopping function, and the target UE may be a terminal device that has a CS hopping or CO hopping function. The communication method provided in this application may be performed by the target UE.

With reference to the first aspect, in some implementations of the first aspect, the length of the first bitmap is equal to the maximum cyclic shift value.

Optionally, the network device may indicate the maximum cyclic shift value to the terminal device, and the terminal device may determine the first cyclic shift bias set based on the first bitmap whose length is equal to the maximum cyclic shift value.

It should be understood that a bitmap (Bitmap) may be a two-dimensional graphical representation method used to represent an image, and is also referred to as a raster image or a dot matrix image.

With reference to the first aspect, in some implementations of the first aspect, the first cyclic shift bias set is an index of a bit 1 or a bit 0 in the first bitmap.

Optionally, an index of a bit 1 in the first bitmap may be understood as an available CS bias value, and an index of a bit 0 may be understood as an unavailable CS bias value. Alternatively, an index of a bit 0 may be understood as an available CS bias value, and an index of a bit 1 may be understood as an unavailable CS bias value.

With reference to the first aspect, in some implementations of the first aspect, the first bitmap is obtained by adding 0 or 1 to a most significant bit of a bit in a second bitmap, and a length of the second bitmap is the maximum cyclic shift value minus 1.

Optionally, when an index of a bit 1 represents an available CS bias value, a most significant bit in the first bitmap is 1 by default; or when an index of a bit 0 represents an available CS bias value, a most significant bit in the first bitmap is 0 by default.

Optionally, the most significant bit in the first bitmap may be a leftmost bit or a rightmost bit in the first bitmap.

With reference to the first aspect, in some implementations of the first aspect, the first bitmap is associated with a third bitmap and a value of Q, and the maximum cyclic shift value is equal to Q times a length of the third bitmap.

Optionally, that the first bitmap is associated with the third bitmap and the value of Q may be understood as that the first bitmap is determined based on the third bitmap and the value of Q.

With reference to the first aspect, in some implementations of the first aspect, the value of Q is associated with at least one of the following content: a quantity of ports that occupy a same comb in the SRS resource, a quantity of ports that occupy different cyclic shifts in the SRS resource, or the maximum cyclic shift value.

With reference to the first aspect, in some implementations of the first aspect, the first bitmap is associated with an index indicated by a network device.

Optionally, that the first bitmap is associated with the index indicated by the network device may be understood as that the first bitmap is determined based on the index indicated by the network device.

According to a second aspect, a communication method is provided. The method includes: obtaining an initial comb offset value of an $i^{th}$ port in N ports corresponding to an SRS resource and first comb offset bias sets corresponding to the N ports, where N is a positive integer, i is less than or equal to N, the first comb offset bias set is associated with a first bitmap, and a length of the first bitmap is less than or equal to a comb number; and sending an SRS based on the initial comb offset value and a first comb bias of the $i^{th}$ port in the first comb offset bias set.

Optionally, second indication information sent by a network device may be received to obtain the initial comb offset value of the $i^{th}$ port in the N ports corresponding to the SRS resource and the first comb offset bias sets corresponding to the N ports.

Optionally, in the first comb offset bias sets corresponding to the N ports, the first comb offset bias sets corresponding to all the ports may be the same or may be different.

Optionally, that the first comb offset bias set is associated with the first bitmap may be understood as that the first comb offset bias set is determined based on the first bitmap.

Optionally, the first comb bias may be any comb bias in the first comb offset bias set.

In embodiments of this application, the SRS may be sent based on the initial comb offset value and the first comb bias of the $i^{th}$ port in the first comb offset bias set. In this manner, when there is a conventional UE in a communication system, a degree of freedom for a target UE to perform comb offset hopping can be improved, thereby avoiding a case in which poor channel estimation quality is caused by interference to the SRS sent by the target UE.

With reference to the second aspect, in some implementations of the second aspect, the length of the first bitmap is equal to the comb number.

Optionally, the network device may indicate the comb number to a terminal device, and the terminal device may determine the first comb offset bias set based on the first bitmap whose length is equal to the comb number.

With reference to the second aspect, in some implementations of the second aspect, the first comb offset bias set is an index of a bit 1 or a bit 0 in the first bitmap.

Optionally, an index of a bit 1 in the first bitmap may be understood as an available CO bias value, and an index of a bit 0 may be understood as an unavailable CO bias value. Alternatively, an index of a bit 0 may be understood as an available CO bias value, and an index of a bit 1 may be understood as an unavailable CO bias value.

With reference to the second aspect, in some implementations of the second aspect, the first bitmap is obtained by adding 0 or 1 to a most significant bit of a bit in a second bitmap, and a length of the second bitmap is the comb number minus 1.

Optionally, when an index of a bit 1 represents an available CO bias value, a most significant bit in the first bitmap is 1 by default; or when an index of a bit 0 represents an available CO bias value, a most significant bit in the first bitmap is 0 by default.

Optionally, the most significant bit in the first bitmap may be a leftmost bit or a rightmost bit in the first bitmap.

With reference to the second aspect, in some implementations of the second aspect, the first bitmap is associated with a third bitmap and a value of Q, and the comb number is equal to Q times a length of the third bitmap.

Optionally, that the first bitmap is associated with the third bitmap and the value of Q may be understood as that the first bitmap is determined based on the third bitmap and the value of Q.

With reference to the second aspect, in some implementations of the second aspect, the value of Q is associated with at least one of the following content: a quantity of ports that occupy a same cyclic shift in the SRS resource, a quantity of ports that occupy different combs in the SRS resource, or the comb number.

With reference to the second aspect, in some implementations of the second aspect, the first bitmap is associated with an index indicated by a network device.

Optionally, that the first bitmap is associated with the index indicated by the network device may be understood as that the first bitmap is determined based on the index indicated by the network device.

According to a third aspect, a communication method is provided. The method includes: obtaining an initial cyclic shift value of an $i^{th}$ port in N ports corresponding to a sounding reference signal SRS resource and first cyclic shift bias sets corresponding to the N ports, where N is a positive integer, i is less than or equal to N, the first cyclic shift bias set is associated with a third bitmap and a value of Q, and a length of the third bitmap is less than or equal to a maximum cyclic shift value; and sending an SRS based on the initial cyclic shift value and a first cyclic bias of the $i^{th}$ port in the first cyclic shift bias set.

With reference to the third aspect, in some implementations of the third aspect, the value of Q is associated with at least one of the following content: a quantity of ports that occupy a same comb in the SRS resource, a quantity of ports that occupy different cyclic shifts in the SRS resource, or the maximum cyclic shift value.

According to a fourth aspect, a communication method is provided. The method includes: obtaining an initial comb offset value of an $i^{th}$ port in N ports corresponding to an SRS resource and first comb offset bias sets corresponding to the N ports, where N is a positive integer, i is less than or equal to N, the first comb offset bias set is associated with a third bitmap and a value of Q, and a length of the third bitmap is less than or equal to a comb number; and sending an SRS based on the initial comb offset value and a first comb bias of the $i^{th}$ port in the first comb offset bias set.

With reference to the fourth aspect, in some implementations of the fourth aspect, the value of Q is associated with at least one of the following content: a quantity of ports that occupy a same cyclic shift in the SRS resource, a quantity of ports that occupy different combs in the SRS resource, or the comb number.

According to a fifth aspect, a communication method is provided, including: obtaining a port number corresponding to an $i^{th}$ port in N ports corresponding to a sounding reference signal SRS resource, where N is a positive integer, i is less than or equal to N, the N ports are divided into two groups, and the two groups are respectively mapped to different OFDM symbols; determining, based on a cyclic shift reference index and the port number corresponding to the $i^{th}$ port, a cyclic shift value corresponding to the $i^{th}$ port; and determining, based on a comb offset value and the port number corresponding to the $i^{th}$ port, a comb corresponding to the $i^{th}$ port, where the cyclic shift value corresponding to the $i^{th}$ port is different from a cyclic shift value corresponding to an $(i+4)^{th}$ port.

Optionally, the method may be applied when N=8 and a higher-layer parameter tdm is enabled.

In embodiments of this application, the cyclic shift value corresponding to the $i^{th}$ port may be determined by using the port number corresponding to the $i^{th}$ port and the cyclic shift reference index. Because the cyclic shift value corresponding to the $i^{th}$ port is different from the cyclic shift value corresponding to the $(i+4)^{th}$ port, when the SRS resource includes eight ports, and port groups are mapped to different symbols, a resource collision caused by allocating inconsecutive port numbers to a same group can be avoided.

With reference to the fifth aspect, in some implementations of the fifth aspect, the cyclic shift value corresponding to the $i^{th}$ port is determined according to the following formula:

$$n_{\mathrm{SRS}}^{\mathrm{cs},i}=\begin{cases}\left(n_{\mathrm{SRS}}^{\mathrm{cs}}+\frac{n_{\mathrm{SRS}}^{\mathrm{cs,max}}\left\lfloor\left((p_i-1000)+2\lfloor(p_i-1000)/4\rfloor\right)/2\right\rfloor}{N_{\mathrm{ap}}^{\mathrm{SRS}}/2}\right)\bmod n_{\mathrm{SRS}}^{\mathrm{cs,max}} & \text{if } N_{\mathrm{ap}}^{\mathrm{SRS}}=8, \text{higher layer parameter } tdm\ is\ set\ to\ 'enabled' \text{and } n_{\mathrm{SRS}}^{\mathrm{cs,max}}=6\\ \left(n_{\mathrm{SRS}}^{\mathrm{cs}}+\frac{n_{\mathrm{SRS}}^{\mathrm{cs,max}}\left((p_i-1000)+2\lfloor(p_i-1000)/4\rfloor\right)}{N_{\mathrm{ap}}^{\mathrm{SRS}}}\right)\bmod n_{\mathrm{SRS}}^{\mathrm{cs,max}} & \text{if } N_{\mathrm{ap}}^{\mathrm{SRS}}=8 \text{ and higher layer parameter } tdm \text{ is set to 'enabled' } and\ n_{\mathrm{SRS}}^{\mathrm{cs,max}}\neq 6\end{cases}.$$

With reference to the fifth aspect, in some implementations of the fifth aspect, the cyclic shift value corresponding to the $i^{th}$ port is determined according to the following formula:

$$n_{\mathrm{SRS}}^{\mathrm{cs},i}=\begin{cases}\left(n_{\mathrm{SRS}}^{\mathrm{cs}}+\frac{n_{\mathrm{SRS}}^{\mathrm{cs,max}}\left\lfloor\left((p_i-1000)-2\lfloor(p_i-1000)/4\rfloor\right)/2\right\rfloor}{N_{\mathrm{ap}}^{\mathrm{SRS}}/2}\right)\bmod n_{\mathrm{SRS}}^{\mathrm{cs,max}} & \text{if } N_{\mathrm{ap}}^{\mathrm{SRS}}=8, \text{higher layer parameter } tdm \text{ is set to 'enabled'and } n_{\mathrm{SRS}}^{\mathrm{cs,max}}=6\\ \left(n_{\mathrm{SRS}}^{\mathrm{cs}}+\frac{n_{\mathrm{SRS}}^{\mathrm{cs,max}}\left((p_i-1000)-2\lfloor(p_i-1000)/4\rfloor\right)}{N_{\mathrm{ap}}^{\mathrm{SRS}}}\right)\bmod n_{\mathrm{SRS}}^{\mathrm{cs,max}} & \text{if } N_{\mathrm{ap}}^{\mathrm{SRS}}=8 \text{ and higher layer parameter } tdm \text{ is set to 'enabled' } and\ n_{\mathrm{SRS}}^{\mathrm{cs,max}}\neq 6\end{cases}.$$

With reference to the fifth aspect, in some implementations of the fifth aspect, the cyclic shift value corresponding to the i^th port is determined according to the following formula:

$$k_{\mathrm{TC}}^{(p_i)} = \begin{cases} \left(\bar{k}_{\mathrm{TC}} + K_{\mathrm{TC}}/2\right) \bmod K_{\mathrm{TC}} \text{ if } N_{\mathrm{ap}}^{\mathrm{SRS}} = 8,\ p_i \in \{1001, 1003, 1005, 1007\}, \text{ higher layer parameter } tdm \text{ is set to 'enabled' and } n_{\mathrm{SRS}}^{\mathrm{cs,max}} = 6 \\ \left(\bar{k}_{\mathrm{TC}} + K_{\mathrm{TC}}/2\right) \bmod K_{\mathrm{TC}} \text{ if } N_{\mathrm{ap}}^{\mathrm{SRS}} = 8,\ p_i \in \{1001, 1003, 1005, 1007\}, \text{ higher layer parameter } tdm \text{ is set to 'enabled' and } n_{\mathrm{SRS}}^{\mathrm{cs}} \in \left\{n_{\mathrm{SRS}}^{\mathrm{cs,max}}/2, \ldots, n_{\mathrm{SRS}}^{\mathrm{cs,max}} - 1\right\}. \\ \bar{k}_{\mathrm{TC}} \text{ otherwise} \end{cases}$$

With reference to the fifth aspect, in some implementations of the fifth aspect, the comb corresponding to the i^th port is determined according to the following formula:

$$k_{\mathrm{TC}}^{(p_i)} = \begin{cases} \left(\bar{k}_{\mathrm{TC}} + K_{\mathrm{TC}}/2\right) \bmod K_{\mathrm{TC}} \text{ if } N_{\mathrm{ap}}^{\mathrm{SRS}} = 8,\ p_i \in \{1001, 1003, 1005, 1007\}, \text{ higher layer parameter } tdm \text{ is set to 'enabled' and } n_{\mathrm{SRS}}^{\mathrm{cs,max}} = 6 \\ \left(\bar{k}_{\mathrm{TC}} + K_{\mathrm{TC}}/2\right) \bmod K_{\mathrm{TC}} \text{ if } N_{\mathrm{ap}}^{\mathrm{SRS}} = 8,\ p_i \in \{1001, 1003, 1005, 1007\}, \text{ higher layer parameter } tdm \text{ is set to 'enabled' and } n_{\mathrm{SRS}}^{\mathrm{cs}} \in \{n_{\mathrm{SRS}}^{\mathrm{cs,max}}/2, \ldots, n_{\mathrm{SRS}}^{\mathrm{cs,max}} - 1\}. \\ \bar{k}_{\mathrm{TC}} \text{ otherwise} \end{cases}$$

With reference to the fifth aspect, in some implementations of the fifth aspect, N=8, a port 0, a port 4, and a port 5 occupy a first OFDM symbol, a port 2, a port 3, a port 6, and a port 7 occupy a second symbol, and the first symbol is different from the second symbol.

According to a sixth aspect, a communication method is provided, including: configuring an initial cyclic shift value of an i^th port in N ports corresponding to an SRS resource and first cyclic shift bias sets corresponding to the N ports, where N is a positive integer, i is less than or equal to N, the first cyclic shift bias set is associated with a first bitmap, and a length of the first bitmap is less than or equal to a maximum cyclic shift value; and sending first indication information to a terminal device, where the first indication information includes the initial cyclic shift value and the first cyclic shift bias sets.

With reference to the sixth aspect, in some implementations of the sixth aspect, the length of the first bitmap is equal to the maximum cyclic shift value.

With reference to the sixth aspect, in some implementations of the sixth aspect, the first cyclic shift bias set is an index of a bit 1 or a bit 0 in the first bitmap.

With reference to the sixth aspect, in some implementations of the sixth aspect, the first bitmap is obtained by adding 0 or 1 to a most significant bit of a bit in a second bitmap, and a length of the second bitmap is the maximum cyclic shift value minus 1.

With reference to the sixth aspect, in some implementations of the sixth aspect, the first bitmap is associated with a third bitmap and a value of Q, and the maximum cyclic shift value is equal to Q times a length of the third bitmap.

With reference to the sixth aspect, in some implementations of the sixth aspect, the value of Q is associated with at least one of the following content: a quantity of ports that occupy a same comb in the SRS resource, a quantity of ports that occupy different cyclic shifts in the SRS resource, or the maximum cyclic shift value.

According to a seventh aspect, a communication method is provided, including: configuring an initial comb offset value of an i^th port in N ports corresponding to an SRS resource and first comb offset bias sets corresponding to the N ports, where N is a positive integer, i is less than or equal to N, the first comb offset bias set is associated with a first bitmap, and a length of the first bitmap is less than or equal to a comb number; and sending second indication information to a terminal device, where the second indication information includes the initial comb offset value and the first comb offset bias sets.

With reference to the seventh aspect, in some implementations of the seventh aspect, the length of the first bitmap is equal to the comb number.

With reference to the seventh aspect, in some implementations of the seventh aspect, the first comb offset bias set is an index of a bit 1 or a bit 0 in the first bitmap.

With reference to the seventh aspect, in some implementations of the seventh aspect, the first bitmap is obtained by adding 0 or 1 to a most significant bit of a bit in a second bitmap, and a length of the second bitmap is the comb number minus 1.

With reference to the seventh aspect, in some implementations of the seventh aspect, the first bitmap is associated with a third bitmap and a value of Q, and the comb number is equal to Q times a length of the third bitmap.

With reference to the seventh aspect, in some implementations of the seventh aspect, the value of Q is associated with at least one of the following content: a quantity of ports that occupy a same cyclic shift in the SRS resource, a quantity of ports that occupy different combs in the SRS resource, or the comb number.

With reference to the seventh aspect, in some implementations of the seventh aspect, the first bitmap is associated with an index indicated by a network device.

According to an eighth aspect, a communication apparatus is provided. The apparatus includes: a processing unit, configured to obtain an initial cyclic shift value of an i^th port in N ports corresponding to a sounding reference signal SRS resource and first cyclic shift bias sets corresponding to the N ports, where N is a positive integer, i is less than or equal to N, the first cyclic shift bias set is associated with a first bitmap, and a length of the first bitmap is less than or equal to a maximum cyclic shift value; and a transceiver unit, configured to send an SRS based on the initial cyclic shift value and a first cyclic bias of the i^th port in the first cyclic shift bias set.

With reference to the eighth aspect, in some implementations of the eighth aspect, the length of the first bitmap is equal to the maximum cyclic shift value.

With reference to the eighth aspect, in some implementations of the eighth aspect, the first cyclic shift bias set is an index of a bit 1 or a bit 0 in the first bitmap.

With reference to the eighth aspect, in some implementations of the eighth aspect, the first bitmap is obtained by adding 0 or 1 to a most significant bit of a bit in a second bitmap, and a length of the second bitmap is the maximum cyclic shift value minus 1.

With reference to the eighth aspect, in some implementations of the eighth aspect, the first bitmap is associated with a third bitmap and a value of Q, and the maximum cyclic shift value is equal to Q times a length of the third bitmap.

With reference to the eighth aspect, in some implementations of the eighth aspect, the value of Q is associated with at least one of the following content: a quantity of ports that occupy a same comb in the SRS resource, a quantity of ports that occupy different cyclic shifts in the SRS resource, or the maximum cyclic shift value.

With reference to the eighth aspect, in some implementations of the eighth aspect, the first bitmap is associated with an index indicated by a network device.

According to a ninth aspect, a communication apparatus is provided. The apparatus includes: a processing unit, configured to obtain an initial comb offset value of an $i^{th}$ port in N ports corresponding to an SRS resource and first comb offset bias sets corresponding to the N ports, where N is a positive integer, i is less than or equal to N, the first comb offset bias set is associated with a first bitmap, and a length of the first bitmap is less than or equal to a comb number; and a transceiver unit, configured to send an SRS based on the initial comb offset value and a first comb bias of the $i^{th}$ port in the first comb offset bias set.

With reference to the ninth aspect, in some implementations of the ninth aspect, the length of the first bitmap is equal to the comb number.

With reference to the ninth aspect, in some implementations of the ninth aspect, the first comb offset bias set is an index of a bit 1 or a bit 0 in the first bitmap.

With reference to the ninth aspect, in some implementations of the ninth aspect, the first bitmap is obtained by adding 0 or 1 to a most significant bit of a bit in a second bitmap, and a length of the second bitmap is the comb number minus 1.

With reference to the ninth aspect, in some implementations of the ninth aspect, the first bitmap is associated with a third bitmap and a value of Q, and the comb number is equal to Q times a length of the third bitmap.

With reference to the ninth aspect, in some implementations of the ninth aspect, the value of Q is associated with at least one of the following content: a quantity of ports that occupy a same cyclic shift in the SRS resource, a quantity of ports that occupy different combs in the SRS resource, or the comb number.

With reference to the ninth aspect, in some implementations of the ninth aspect, the first bitmap is associated with an index indicated by a network device.

According to a tenth aspect, a communication apparatus is provided. The apparatus includes: a processing unit, configured to obtain an initial cyclic shift value of an $i^{th}$ port in N ports corresponding to a sounding reference signal SRS resource and first cyclic shift bias sets corresponding to the N ports, where N is a positive integer, i is less than or equal to N, the first cyclic shift bias set is associated with a third bitmap and a value of Q, and a length of the third bitmap is less than or equal to a maximum cyclic shift value; and a transceiver unit, configured to send an SRS based on the initial cyclic shift value and a first cyclic bias of the $i^{th}$ port in the first cyclic shift bias set.

With reference to the tenth aspect, in some implementations of the tenth aspect, the value of Q is associated with at least one of the following content: a quantity of ports that occupy a same comb in the SRS resource, a quantity of ports that occupy different cyclic shifts in the SRS resource, or the maximum cyclic shift value.

According to an eleventh aspect, a communication apparatus is provided. The apparatus includes: a processing unit, configured to obtain an initial comb offset value of an $i^{th}$ port in N ports corresponding to an SRS resource and first comb offset bias sets corresponding to the N ports, where N is a positive integer, i is less than or equal to N, the first comb offset bias set is associated with a third bitmap and a value of Q, and a length of the third bitmap is less than or equal to a comb number; and a transceiver unit, configured to send an SRS based on the initial comb offset value and a first comb bias of the $i^{th}$ port in the first comb offset bias set.

With reference to the eleventh aspect, in some implementations of the eleventh aspect, the value of Q is associated with at least one of the following content: a quantity of ports that occupy a same cyclic shift in the SRS resource, a quantity of ports that occupy different combs in the SRS resource, or the comb number.

According to a twelfth aspect, a communication apparatus is provided, including: a processing unit, configured to obtain a port number corresponding to an $i^{th}$ port in N ports corresponding to a sounding reference signal SRS resource, where N is a positive integer, i is less than or equal to N, the N ports are divided into two groups, and the two groups are respectively mapped to different OFDM symbols; determine, based on a cyclic shift reference index and the port number corresponding to the $i^{th}$ port, a cyclic shift value corresponding to the $i^{th}$ port; and determine, based on a comb offset value and the port number corresponding to the $i^{th}$ port, a comb corresponding to the $i^{th}$ port, where the cyclic shift value corresponding to the $i^{th}$ port is different from a cyclic shift value corresponding to an $(i+4)^{th}$ port.

With reference to the twelfth aspect, in some implementations of the twelfth aspect, the cyclic shift value corresponding to the $i^{th}$ port is determined according to the following formula:

$$n_{\mathrm{SRS}}^{\mathrm{cs},i} = \begin{cases} \left( n_{\mathrm{SRS}}^{\mathrm{cs}} + \frac{n_{\mathrm{SRS}}^{\mathrm{cs,max}} \left\lfloor \left( (p_i - 1000) + 2\lfloor (p_i - 1000)/4 \rfloor \right)/2 \right\rfloor}{N_{\mathrm{ap}}^{\mathrm{SRS}}/2} \right) \bmod n_{\mathrm{SRS}}^{\mathrm{cs,max}} & \text{if } N_{\mathrm{ap}}^{\mathrm{SRS}} = 8, \text{higher layer parameter } tdm\ is\ set\ to\ 'enabled' \text{and } n_{\mathrm{SRS}}^{\mathrm{cs,max}} = 6 \\ \left( n_{\mathrm{SRS}}^{\mathrm{cs}} + \frac{n_{\mathrm{SRS}}^{\mathrm{cs,max}} \left( (p_i - 1000) + 2\lfloor (p_i - 1000)/4 \rfloor \right)}{N_{\mathrm{ap}}^{\mathrm{SRS}}} \right) \bmod n_{\mathrm{SRS}}^{\mathrm{cs,max}} & \text{if } N_{\mathrm{ap}}^{\mathrm{SRS}} = 8 \text{ and higher layer parameter } tdm \text{ is set to 'enabled' } and\ n_{\mathrm{SRS}}^{\mathrm{cs,max}} \neq 6 \end{cases}.$$

With reference to the twelfth aspect, in some implementations of the twelfth aspect, the cyclic shift value corresponding to the $i^{th}$ port is determined according to the following formula:

$$n_{\mathrm{SRS}}^{\mathrm{cs},i} = \begin{cases} \left( n_{\mathrm{SRS}}^{\mathrm{cs}} + \frac{n_{\mathrm{SRS}}^{\mathrm{cs,max}} \left\lfloor \left( (p_i - 1000) - 2\lfloor (p_i - 1000)/4 \rfloor \right)/2 \right\rfloor}{N_{\mathrm{ap}}^{\mathrm{SRS}}/2} \right) \bmod n_{\mathrm{SRS}}^{\mathrm{cs,max}} & \text{if } N_{\mathrm{ap}}^{\mathrm{SRS}} = 8, \text{higher layer parameter } tdm \text{ is set to 'enabled' and } n_{\mathrm{SRS}}^{\mathrm{cs,max}} = 6 \\ \left( n_{\mathrm{SRS}}^{\mathrm{cs}} + \frac{n_{\mathrm{SRS}}^{\mathrm{cs,max}} \left( (p_i - 1000) - 2\lfloor (p_i - 1000)/4 \rfloor \right)}{N_{\mathrm{ap}}^{\mathrm{SRS}}} \right) \bmod n_{\mathrm{SRS}}^{\mathrm{cs,max}} & \text{if } N_{\mathrm{ap}}^{\mathrm{SRS}} = 8 \text{ and higher layer parameter } tdm \text{ is set to 'enabled' } and\ n_{\mathrm{SRS}}^{\mathrm{cs,max}} \neq 6 \end{cases}.$$

With reference to the twelfth aspect, in some implementations of the twelfth aspect, the cyclic shift value corresponding to the $i^{th}$ port is determined according to the following formula:

$$k_{\mathrm{TC}}^{(p_i)} = \begin{cases} \left( \bar{k}_{\mathrm{TC}} + K_{\mathrm{TC}}/2 \right) \bmod K_{\mathrm{TC}} \text{ if } N_{\mathrm{ap}}^{\mathrm{SRS}} = 8, p_i \in \{1001, 1003, 1005, 1007\}, \text{higher layer parameter } tdm \text{ is set to 'enabled' and } n_{\mathrm{SRS}}^{\mathrm{cs,max}} = 6 \\ \left( \bar{k}_{\mathrm{TC}} + K_{\mathrm{TC}}/2 \right) \bmod K_{\mathrm{TC}} \text{ if } N_{\mathrm{ap}}^{\mathrm{SRS}} = 8, p_i \in \{1001, 1003, 1005, 1007\}, \text{higher layer parameter } tdm \text{ is set to 'enabled' and } n_{\mathrm{SRS}}^{\mathrm{cs}} \in \{ n_{\mathrm{SRS}}^{\mathrm{cs,max}}/2, \ldots, n_{\mathrm{SRS}}^{\mathrm{cs,max}} - 1 \} \\ \bar{k}_{\mathrm{TC}} \text{ otherwise} \end{cases}.$$

With reference to the twelfth aspect, in some implementations of the twelfth aspect, the comb corresponding to the $i^{th}$ port is determined according to the following formula:

$$k_{\mathrm{TC}}^{(p_i)} = \begin{cases} \left( \bar{k}_{\mathrm{TC}} + K_{\mathrm{TC}}/2 \right) \bmod K_{\mathrm{TC}} \text{ if } N_{\mathrm{ap}}^{\mathrm{SRS}} = 8, p_i \in \{1001, 1003, 1005, 1007\}, \text{higher layer parameter } tdm \text{ is set to 'enabled' and } n_{\mathrm{SRS}}^{\mathrm{cs,max}} = 6 \\ \left( \bar{k}_{\mathrm{TC}} + K_{\mathrm{TC}}/2 \right) \bmod K_{\mathrm{TC}} \text{ if } N_{\mathrm{ap}}^{\mathrm{SRS}} = 8, p_i \in \{1001, 1003, 1005, 1007\}, \text{higher layer parameter } tdm \text{ is set to 'enabled' and } n_{\mathrm{SRS}}^{\mathrm{cs}} \in \{ n_{\mathrm{SRS}}^{\mathrm{cs,max}}/2, \ldots, n_{\mathrm{SRS}}^{\mathrm{cs,max}} - 1 \} \\ \bar{k}_{\mathrm{TC}} \text{ otherwise} \end{cases}.$$

With reference to the twelfth aspect, in some implementations of the twelfth aspect, N=8, a port 0, a port 4, and a port 5 occupy a first OFDM symbol, a port 2, a port 3, a port 6, and a port 7 occupy a second symbol, and the first symbol is different from the second symbol.

According to a thirteenth aspect, a communication apparatus is provided, including: a processing unit, configured to configure an initial cyclic shift value of an $i^{th}$ port in N ports corresponding to an SRS resource and first cyclic shift bias sets corresponding to the N ports, where N is a positive integer, i is less than or equal to N, the first cyclic shift bias set is associated with a first bitmap, and a length of the first bitmap is less than or equal to a maximum cyclic shift value; and a transceiver unit, configured to send first indication information to a terminal device, where the first indication information includes the initial cyclic shift value and the first cyclic shift bias sets.

With reference to the thirteenth aspect, in some implementations of the thirteenth aspect, the length of the first bitmap is equal to the maximum cyclic shift value.

With reference to the thirteenth aspect, in some implementations of the thirteenth aspect, the first cyclic shift bias set is an index of a bit 1 or a bit 0 in the first bitmap.

With reference to the thirteenth aspect, in some implementations of the thirteenth aspect, the first bitmap is obtained by adding 0 or 1 to a most significant bit of a bit in a second bitmap, and a length of the second bitmap is the maximum cyclic shift value minus 1.

With reference to the thirteenth aspect, in some implementations of the thirteenth aspect, the first bitmap is associated with a third bitmap and a value of Q, and the maximum cyclic shift value is equal to Q times a length of the third bitmap.

With reference to the thirteenth aspect, in some implementations of the thirteenth aspect, the value of Q is associated with at least one of the following content: a quantity of ports that occupy a same comb in the SRS resource, a quantity of ports that occupy different cyclic shifts in the SRS resource, or the maximum cyclic shift value.

According to a fourteenth aspect, a communication apparatus is provided, including: a processing unit, configured to configure an initial comb offset value of an $i^{th}$ port in N ports corresponding to an SRS resource and first comb offset bias sets corresponding to the N ports, where N is a positive integer, i is less than or equal to N, the first comb offset bias set is associated with a first bitmap, and a length of the first bitmap is less than or equal to a comb number; and a transceiver unit, configured to send second indication information to a terminal device, where the second indication information includes the initial comb offset value and the first comb offset bias sets.

With reference to the fourteenth aspect, in some implementations of the fourteenth aspect, the length of the first bitmap is equal to the comb number.

With reference to the fourteenth aspect, in some implementations of the fourteenth aspect, the first comb offset bias set is an index of a bit 1 or a bit 0 in the first bitmap.

With reference to the fourteenth aspect, in some implementations of the fourteenth aspect, the first bitmap is obtained by adding 0 or 1 to a most significant bit of a bit in a second bitmap, and a length of the second bitmap is the comb number minus 1.

With reference to the fourteenth aspect, in some implementations of the fourteenth aspect, the first bitmap is associated with a third bitmap and a value of Q, and the comb number is equal to Q times a length of the third bitmap.

With reference to the fourteenth aspect, in some implementations of the fourteenth aspect, the value of Q is associated with at least one of the following content: a quantity of ports that occupy a same cyclic shift in the SRS resource, a quantity of ports that occupy different combs in the SRS resource, or the comb number.

With reference to the fourteenth aspect, in some implementations of the fourteenth aspect, the first bitmap is associated with an index indicated by a network device.

According to a fifteenth aspect, a communication apparatus is provided. The apparatus includes a processor. The processor is configured to: be coupled to a memory, and read and execute instructions and/or program code in the memory, to perform the method according to any one of the implementations of the first aspect to the fifth aspect.

According to a sixteenth aspect, a communication apparatus is provided. The apparatus includes a processor. The processor is configured to: be coupled to a memory, and read and execute instructions and/or program code in the memory, to perform the method according to the sixth aspect or the seventh aspect.

According to a seventeenth aspect, a computer-readable storage medium is provided. The computer-readable storage medium stores program code, and when the computer program code is run on a computer, the computer is enabled to perform the method according to any one of the implementations of the first aspect to the seventh aspect.

According to an eighteenth aspect, a chip is provided. The chip includes a circuit. The circuit is configured to perform the method according to any one of the implementations of the first aspect to the seventh aspect.

According to a nineteenth aspect, a computer program product is provided. The computer program product includes a computer program, and when the computer program is run, a computer is enabled to perform the method according to any one of the implementations of the first aspect to the seventh aspect.

According to a twentieth aspect, a terminal device is provided, including the apparatus in any one of the implementations of the eighth aspect to the twelfth aspect.

According to a twenty-first aspect, a network device is provided, including the apparatus according to any one of the implementations of the thirteenth aspect or the fourteenth aspect.

## BRIEF DESCRIPTION OF DRAWINGS

FIG. 1 is a diagram of frequency domain subcarriers occupied by combs under different comb numbers according to an embodiment of this application;

FIG. 2 is a diagram of a frequency domain resource occupied for SRS frequency hopping according to an embodiment of this application;

FIG. 3 is a diagram of sending an SRS in a CJT scenario according to an embodiment of this application;

FIG. 4 is a diagram of SRS interference caused by a delay difference between responses of channel estimation results of an $SRS_1$ and an $SRS_2$ in delay domain according to an embodiment of this application;

FIG. 5 is a diagram of distribution of channel estimation responses corresponding to $SRS_4$ ports in delay domain according to an embodiment of this application;

FIG. 6 is a diagram of SRS resource mapping according to an embodiment of this application;

FIG. 7 shows a communication method according to an embodiment of this application;

FIG. 8 shows a communication method according to an embodiment of this application;

FIG. 9 is a diagram of distribution of resources occupied by a target UE and a conventional UE according to an embodiment of this application;

FIG. 10 is a diagram of distribution of resources occupied by a target UE and a conventional UE in different cases according to an embodiment of this application;

FIG. 11 is another diagram of distribution of resources occupied by a target UE and a conventional UE according to an embodiment of this application;

FIG. 12 is another diagram of distribution of resources occupied by a target UE and a conventional UE in different cases according to an embodiment of this application;

FIG. 13 is a diagram of CSs allocated to eight ports according to an embodiment of this application;
FIG. 14 is another diagram of CSs allocated to eight ports according to an embodiment of this application;
FIG. 15 shows another communication method according to an embodiment of this application;
FIG. 16 shows a communication apparatus according to an embodiment of this application; and
FIG. 17 shows another communication apparatus according to an embodiment of this application.

## DESCRIPTION OF EMBODIMENTS

The following describes technical solutions of embodiments of this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, a TDD system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

A terminal device in embodiments of this application may be referred to as user equipment, an access terminal, a subscriber unit, a subscriber station, a mobile station, a remote station, a remote terminal, a mobile device, a user terminal, a terminal, a wireless communication device, a user agent, or a user apparatus. Alternatively, a terminal device may be a cellular phone, a cordless phone, a session initiation protocol (session initiation Protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN). This is not limited in embodiments of this application.

A network device in embodiments of this application may be a device configured to communicate with the terminal device. The network device may be a base station (base transceiver station, BTS) in a global system for mobile communications (global system for mobile communications, GSM) or a code division multiple access (code division multiple access, CDMA) system, may be a NodeB (NodeB, NB) in a wideband code division multiple access (Wideband Code Division Multiple Access, WCDMA) system, may be an evolved NodeB (evolved NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in a future 5G network, a network device in a future evolved PLMN network, or the like. This is not limited in embodiments of this application.

For ease of understanding of embodiments of this application, concepts and technologies used in embodiments of this application are first briefly described.

(1) SRS: The SRS is an uplink reference signal sent by the terminal device to the network device. After receiving the SRS signal, the network device may obtain a UL channel from the terminal device to the network device based on the SRS signal. If an uplink channel and a downlink channel have channel reciprocity (for a TDD system), downlink channel information from the network device to the terminal device may be further obtained based on the channel reciprocity through SRS-based uplink channel measurement. After obtaining the downlink channel information corresponding to the terminal device, the network device may perform data transmission resource scheduling or precoding processing on the terminal device based on the channel information.

(2) Port: The port may also be referred to as an SRS port or an antenna port. The SRS port is used to carry an SRS signal, and each port corresponds to one SRS signal. Different ports may be multiplexed in a code division manner, a frequency division manner, a time division manner, or a space division manner. In an implementation, one SRS resource may include $N_{\mathrm{ap}}^{\mathrm{SRS}} \in \{1,2,4\}$ SRS ports, and each SRS port corresponds to a configured time-frequency-code resource. Each SRS port usually occupies different time-frequency-code domain resources, to reduce mutual interference. Each SRS port corresponds to a physical antenna or a virtual antenna of the terminal device.

(3) Cyclic shift: Sending may be performed on a same time-frequency resource in a code division multiplexing manner through different SRS ports. An SRS sequence is multiplied by a phase offset factor in frequency domain, so that a cyclic shift offset can be generated based on an equivalent time domain response. With a feature that a maximum delay of a channel is usually limited, code division orthogonality of different SRS ports can be implemented by using an appropriate cyclic shift offset. An appropriate cyclic shift may be referred to as a CS. Specifically, the cyclic shift is acted on a sending sequence. Due to a feature of the sending sequence, applying the cyclic shift to the sending sequence is equivalent to offsetting a signal in delay domain. When different signals have different offsets, a multiplexing effect is achieved.

(4) Comb (Comb): Sending may be performed on different frequency domain subcarriers in a frequency division multiplexing manner through different SRS ports. The frequency domain subcarriers are divided into a plurality of groups through the comb, and a frequency domain spacing between two adjacent subcarriers in each group of subcarriers is a fixed value. A CO is a manner of distinguishing different subcarriers in frequency domain, and different comb offset values represent subcarrier groups with different values or subcarrier positions in frequency domain. Frequency division multiplexing of SRS resources between ports is implemented by allocating different comb offset values to different ports. FIG. 1 is used as an example. The comb is some subcarriers extracted at equal spacings in frequency domain. The extraction spacing is referred to as a comb number $\boldsymbol{K}_{TC}$, and is preconfigured through RRC. A value of the comb number is usually 2, 4, or 8. When the value of $\boldsymbol{K}_{TC}$ is 2, two combs may be obtained through division in frequency domain, for two groups of SRS ports to perform frequency division multiplexing. In the following figure, one grid represents one subcarrier, and shaded grids are examples of subcarrier positions occupied by combs corresponding to a comb offset value of 0 under different comb numbers.

(5) SRS measurement bandwidth and frequency hopping bandwidth: The SRS measurement bandwidth is a total bandwidth used by the network device to perform channel measurement by using an SRS. At each SRS sending moment, an SRS resource may be used to send a signal on the entire measurement bandwidth, or may be used to send a signal only on a part of the measurement bandwidth. When the signal is sent only on the part of the measurement bandwidth, this is referred to as that the SRS is sent through frequency hopping, and a length of the part of bandwidth on which sending is performed each time is the frequency hopping bandwidth. The network device may obtain, by using a plurality of SRS sending moments, a channel corresponding to the entire SRS measurement bandwidth. FIG. 2 is used as an example. One grid in the figure represents one subband (for example, may be one RB) in frequency domain. The SRS measurement bandwidth is 16 RBs, and the SRS frequency hopping bandwidth is four RBs. Measurement of the measurement bandwidth may be completed through four times of SRS sending.

The following describes technical problems to be resolved and technical solutions used in this application with reference to the accompanying drawings.

An SRS is a key reference signal for obtaining channel state information. Especially for a TDD system, uplink channel information and downlink channel information may be obtained by using the SRS by using uplink and downlink channel reciprocity. In an actual system, considering reference signal overheads and channel estimation performance, a quantity of available orthogonal SRS resources is usually limited. However, there are a large quantity of cells in a network, and a terminal device in each cell sends an SRS to perform channel measurement. Consequently, limited orthogonal SRS resources are reused by a plurality of cells. For example, in an SRS resource allocation policy, an orthogonal SRS resource is allocated to the terminal device in each cell, and non-orthogonal SRS resources are allocated to different cells. Consequently, inter-cell SRS interference is caused. Currently, the SRS interference problem is one of key factors that restrict system performance.

Coherent joint transmission (coherent joint transmission, CJT) of a plurality of stations (or a plurality of transmission reception points (transmission reception points, TRPs)) is a key technology for further improving a spatial degree of freedom and improving system transmission performance. As shown in FIG. 3, an example in which two TRPs perform CJT transmission is used. A $TRP_1$ and a $TRP_2$ jointly serve a $UE_1$ and a $UE_2$. The $TRP_1$ and the $TRP_2$ need to obtain channel information between the $UE_1$ and the $TRP_1$, between the $UE_1$ and the $TRP_2$, between the $UE_2$ and the $TRP_1$, and between the $UE_2$ and the $TRP_2$ by using SRSs. One SRS resource $SRS_1$ and one SRS resource $SRS_2$ are respectively configured for the $UE_1$ and the $UE_2$, so that both the $TRP_1$ and the $TRP_2$ can receive the $SRS_1$ and the $SRS_2$ sent by the $UE_1$ and the $UE_2$, and obtain respective channels based on the $SRS_1$ and the $SRS_2$. In different SRS resource allocation manners, because there is a "near-far effect" between the $UE_1$/the $UE_2$ and the $TRP_1$/the $TRP_2$, a serious SRS interference problem is caused.

The SRS interference problem is described below by using an example in which the $SRS_1$ and the $SRS_2$ are non-orthogonal or orthogonal SRS resources.

(1) The $SRS_1$ and the $SRS_2$ are non-orthogonal SRS resources.

In a possible implementation, the $TRP_1$ and the $TRP_2$ respectively configure SRS resources for served users, where the $SRS_1$ and the $SRS_2$ are non-orthogonal SRS resources. For example, the $SRS_1$ and the $SRS_2$ occupy a same time-frequency resource, and use non-orthogonal SRS sequences (for example, different base sequences). For example, in FIG. 3, the $TRP_2$ is used as an example. Because the $TRP_2$ is a coordinated station of the $UE_1$ and a serving station of the

$UE_2$, a distance between the $TRP_2$ and the $UE_1$ is greater than a distance between the $TRP_2$ and the $UE_2$. When receiving the $SRS_1$ sent by the $UE_1$, the $TRP_2$ suffers from strong interference from the $SRS_2$ sent by the $UE_2$. Considering the near-far effect, interference power from the $SRS_2$ to the $SRS_1$ is even greater than signal power of the $SRS_1$.

(2) The $SRS_1$ and the $SRS_2$ are orthogonal SRS resources.

In a possible implementation, the $TRP_1$ and the $TRP_2$ perform joint orthogonal SRS resource allocation, to configure mutually orthogonal SRS resources for the served users $UE_1$ and $UE_2$. The SRSi and the $SRS_2$ are usually configured with a same base sequence and occupy different time domain/frequency domain/code domain resources to keep orthogonal. However, because distances from the $UE_1$ and the $UE_2$ to different TPRs are different, delays of SRS signals sent by the UEs to different TRPs are also different. To be specific, in FIG. 3, $\tau_{1,1} < \tau_{1,2}$ and $\tau_{2,1} > \tau_{2,2}$, where $\tau_{i,j}$ represents a propagation delay from a UE i to a TRP j. The $SRS_1$ and the $SRS_2$ can ensure orthogonality through code division multiplexing. For example, code domain orthogonality is ensured by using different SRS cyclic shift values.

It is assumed that a maximum quantity of SRS CSs configured for the $UE_1$ and the $UE_2$ is 12, the $SRS_1$ occupies a CS 0, a CS 3, a CS 6, and a CS 9, and the $SRS_2$ occupies a CS 1, a CS 4, a CS 7, and a CS 10. When there is no delay difference, the $SRS_1$ and the $SRS_2$ occupy different delay ranges in delay domain, so that code division orthogonality can be ensured. However, as shown in FIG. 4, when there is a delay difference, a propagation delay between the $TRP_2$ and the $UE_1$ is greater than a propagation delay between the $TRP_2$ and the $UE_2$. Assuming that the $TRP_2$ and the $UE_2$ are time-aligned, a channel result obtained through $SRS_1$ measurement has an offset in delay domain, causing interference to the $SRS_2$, and affecting channel measurement accuracy.

An SRS sequence and a time-frequency resource mapping method are described below.

Currently, the network device may configure an SRS resource for the terminal device. According to an NR protocol, a quantity of ports in one SRS resource configured by the network device for the terminal device may be determined based on a parameter $N_{\mathrm{ap}}^{\mathrm{SRS}}$. The parameter may be configured as 1, 2, 4, or 8. A plurality of ports in one SRS resource correspond to different time-frequency resources or sequences, to ensure orthogonality between different ports.

An SRS sequence corresponding to one port $p_i$ in the SRS resource may be represented as:

$$r^{(p_i)}(n) = r_{u,v}^{(\alpha_i,\delta)}(n), \text{where } 0 \leq n < M_{\mathrm{sc},b}^{\mathrm{SRS}} - 1.$$

$r_{u,v}^{(\alpha,\delta)}(n) = e^{j\alpha n}\bar{r}_{u,v}(n)$, $\bar{r}_{u,v}(n)$ is an SRS base sequence, and a ZC sequence may be usually used. A specific generation manner is determined based on a sequence length. v and u are respectively numbers of a base sequence in an SRS base sequence group. For different SRS sequence lengths, at least 30 base sequences may be used. Each group corresponds to a group sequence number u (u=0, 1, 2, ..., 29). Based on different SRS sequence lengths, each group further includes one or two base sequences, which respectively correspond to sequence numbers v (v=0, 1). $\delta = \log_2(K_{TC})$, $M_{\mathrm{sc},b}^{\mathrm{SRS}}$ is a length of the SRS sequence, and a calculation manner thereof is $M_{\mathrm{sc},b}^{\mathrm{SRS}} = mN_{\mathrm{sc}}^{\mathrm{RB}}/2^{\delta}$, where $N_{\mathrm{sc}}^{\mathrm{RB}}$ is a quantity of subcarriers in one RB, m is a quantity of RBs occupied for sending an SRS during one frequency hopping, and n is a number of a sequence element.

Therefore, it can be learned that one SRS port corresponds to one cyclic shift (CS) in code domain, and is represented by a parameter $\alpha$. An SRS frequency domain sequence is a phase offset (which is obtained by multiplying a signal by $e^{j\alpha n}$ in frequency domain) additionally acting on a base sequence, and is equivalent to performing a cyclic shift of a corresponding delay on the signal in delay domain. Specifically, for a port $p_i$ of an SRS resource, a CS $\alpha_i$ is defined as:

$$\alpha_i = 2\pi \frac{n_{\mathrm{SRS}}^{\mathrm{cs},i}}{n_{\mathrm{SRS}}^{\mathrm{cs,max}}},$$

where

$$n_{\mathrm{SRS}}^{\mathrm{cs},i} = \begin{cases} \left(n_{\mathrm{SRS}}^{\mathrm{cs}} + \frac{n_{\mathrm{SRS}}^{\mathrm{cs,max}}\lfloor (p_i - 1000)/2 \rfloor}{N_{\mathrm{ap}}^{\mathrm{SRS}}/2}\right) \bmod n_{\mathrm{SRS}}^{\mathrm{cs,max}} & \text{if } N_{\mathrm{ap}}^{\mathrm{SRS}} = 4 \text{ and } n_{\mathrm{SRS}}^{\mathrm{cs,max}} = 6 \\ \left(n_{\mathrm{SRS}}^{\mathrm{cs}} + \frac{n_{\mathrm{SRS}}^{\mathrm{cs,max}}(p_i - 1000)}{N_{\mathrm{ap}}^{\mathrm{SRS}}}\right) \bmod n_{\mathrm{SRS}}^{\mathrm{cs,max}} & \text{otherwise} \end{cases} \quad (1)$$

The parameter $n_{\mathrm{SRS}}^{\mathrm{cs}} \in \{0,1,\dots,n_{\mathrm{SRS}}^{\mathrm{cs,max}}-1\}$ represents reference positions (or referred to as start positions) of CSs occupied by a plurality of ports corresponding to an SRS resource allocated to the terminal device. The parameter may be configured based on a parameter transmissionComb in radio resource control (radio resource control, RRC). The parameter $n_{\mathrm{SRS}}^{\mathrm{cs,max}}$ represents a maximum value of CSs that can be supported, or a maximum quantity of CSs that can be configured. Currently, in an NR protocol, $n_{\mathrm{SRS}}^{\mathrm{cs,max}}$ and a supported comb number $\boldsymbol{K}_{\mathrm{TC}}$ (as described above, a spacing between two contiguous REs in a same comb) may be jointly configured. A correspondence between $n_{\mathrm{SRS}}^{\mathrm{cs,max}}$ and $\boldsymbol{K}_{\mathrm{TC}}$ is shown in the following Table 1.

Table 1

| $\boldsymbol{K}_{\mathrm{TC}}$ | $\boldsymbol{n}_{\mathrm{SRS}}^{\mathrm{cs,max}}$ |
|---|---|
| 2 | 8 |
| 4 | 12 |
| 8 | 6 |

For example, assuming that the network device configures, for the terminal device, a quantity of ports $N_{\mathrm{ap}}^{\mathrm{SRS}}=4$ and a comb number $\boldsymbol{K}_{\mathrm{TC}}$ = 4 that correspond to an SRS resource 1, based on Table 1, a maximum CS $n_{\mathrm{SRS}}^{\mathrm{cs,max}}=8$. When a CS start position $n_{\mathrm{SRS}}^{\mathrm{cs}}=0$, distribution, in delay domain, of estimated channel responses corresponding to four ports corresponding to the SRS resource 1 is shown in FIG. 5.

As shown in FIG. 5, in this configuration, four ports of an $SRS_1$ respectively occupy a CS 0, a CS 2, a CS 4, and a CS 6, and a cluster of vertical lines in a frame represents a delay domain channel response corresponding to one port. In an implementation, when CS allocation of an SRS resource is performed, CSs corresponding to ports of the SRS resource may be evenly distributed within a length $n_{\mathrm{SRS}}^{\mathrm{cs,max}}$ based on a maximum spacing as much as possible, to ensure minimum interference between a plurality of ports of an SRS resource.

In addition, one SRS port $p_i$ corresponds to one comb offset (comb offset, CO) in frequency domain, and may be represented by using a parameter $k_{\mathrm{TC}}^{(p_i)}$. A start frequency domain position $k_0^{(p_i)}$ of the SRS port $p_i$ is specifically determined according to the following formula:

$$k_0^{(p_i)}=\bar{k}_0^{(p_i)}+n_{\mathrm{offset}}^{\mathrm{FH}}+n_{\mathrm{offset}}^{\mathrm{RPFS}},$$

where

$$\bar{k}_0^{(p_i)}=n_{\mathrm{shift}}N_{\mathrm{sc}}^{\mathrm{RB}}+\left(k_{\mathrm{TC}}^{(p_i)}+k_{\mathrm{offset}}^{l'}\right) \bmod K_{\mathrm{TC}}, \text{ and}$$

$$k_{\mathrm{TC}}^{(p_i)}=\begin{cases}\left(\bar{k}_{\mathrm{TC}}+K_{\mathrm{TC}}/2\right) \bmod K_{\mathrm{TC}} & \text{if } N_{\mathrm{ap}}^{\mathrm{SRS}}=4,\ p_i\in\{1001,1003\}, \text{ and } n_{\mathrm{SRS}}^{\mathrm{cs,max}}=6\\ \left(\bar{k}_{\mathrm{TC}}+K_{\mathrm{TC}}/2\right) \bmod K_{\mathrm{TC}} & \text{if } N_{\mathrm{ap}}^{\mathrm{SRS}}=4,\ p_i\in\{1001,1003\}, \text{ and } n_{\mathrm{SRS}}^{\mathrm{cs}}\in\{n_{\mathrm{SRS}}^{\mathrm{cs,max}}/2,\dots,n_{\mathrm{SRS}}^{\mathrm{cs,max}}-1\}\\ \bar{k}_{\mathrm{TC}} & \text{otherwise}\end{cases} \quad (2).$$

$\bar{k}_{\mathrm{TC}} \in \{0,1, \dots, K_{\mathrm{TC}}-1\}$ may be configured by using higher-layer signaling *transmissionComb*. $n_{\mathrm{shift}}N_{\mathrm{sc}}^{\mathrm{RB}}$ represents a configured frequency domain RB offset, and $n_{\mathrm{offset}}^{\mathrm{FH}}+n_{\mathrm{offset}}^{\mathrm{RPFS}}$ represents a frequency domain subband offset. It can be learned from Formula (2) that, for different port quantity values and $n_{\mathrm{SRS}}^{\mathrm{cs}}$, a plurality of ports of one SRS resource may be distributed on a same comb, or may be distributed on two combs.

An SRS interference randomization method is described below.

As described above, the SRS interference problem is one of key factors that affect performance of the communication system. To reduce impact of SRS interference on the system, and avoid a problem of poor channel estimation quality caused by continuous strong interference to a target SRS, SRS interference randomization is an effective means.

SRS CS hopping is an effective interference randomization method. At different SRS sending moments, a cyclic shift offset value CS corresponding to an SRS port of a target SRS resource may randomly change, to avoid continuous impact of strong interference. When the SRS CS hopping is enabled, according to Formula (1), a CS $\alpha_i$ corresponding to an SRS port $p_i$ may be represented as:

$$\alpha_i = 2\pi\left(\frac{n_{\mathrm{SRS}}^{\mathrm{cs},i}}{n_{\mathrm{SRS}}^{\mathrm{cs,max}}} + \frac{n_{\mathrm{SRS}}^{CSH}}{n_{\mathrm{SRS}}^{\mathrm{cs,max}}}\right), \text{ or } \alpha_i = 2\pi\left(\frac{\left(n_{\mathrm{SRS}}^{\mathrm{cs},i} + n_{\mathrm{SRS}}^{CSH}\right) mod\ n_{\mathrm{SRS}}^{\mathrm{cs,max}}}{n_{\mathrm{SRS}}^{\mathrm{cs,max}}}\right) (3).$$

$n_{\mathrm{SRS}}^{CSH}$ represents a CS offset, and a value may be randomly selected from $\{0,1,\ldots,n_{\mathrm{SRS}}^{\mathrm{cs,max}}-1\}$ for $n_{\mathrm{SRS}}^{CSH}$ on each SRS sending occasion.

SRS CO hopping is another interference randomization method. At different SRS sending moments, a comb offset value CO corresponding to an SRS port of a target SRS resource may randomly change, to avoid continuous impact of strong interference. When the SRS CO hopping is enabled, according to Formula (2), a frequency domain start position corresponding to an SRS port $p_i$ may be represented as:

$$k_0^{(p_i)} = \bar{k}_0^{(p_i)} + n_{\mathrm{offset}}^{\mathrm{FH}} + n_{\mathrm{offset}}^{\mathrm{RPFS}},$$

where

$$\bar{k}_0^{(p_i)} = n_{\mathrm{shift}} N_{\mathrm{sc}}^{\mathrm{RB}} + \left(k_{\mathrm{TC}}^{(p_i)} + k_{\mathrm{offset}}^{l'} + k_{COH}\right) \bmod K_{\mathrm{TC}}.$$

$k_{COH}$ represents a CO offset, and a value may be randomly selected from {0,1, ..., $K_{TC}$ - 1} for $k_{COH}$ on each SRS sending occasion.

However, for a current SRS configuration method and a time-frequency resource mapping manner, as described above, when a plurality of stations do not perform joint orthogonal SRS resource allocation, SRSs of different cells are not orthogonal to each other. Consequently, inter-cell SRS interference is generated. Especially for a cell edge user, SRS interference is strong and severely affects channel measurement performance. When the plurality of stations perform coordinated transmission, and the plurality of stations perform joint orthogonal SRS resource allocation, because distances from a UE to a plurality of sending stations are different, a propagation delay difference is caused, causing interference between SRSs.

When the SRS CS hopping or the comb offset hopping is enabled, the SRS interference problem can be resolved to a specific extent. However, as shown in Formula (3) and Formula (4), when the CS hopping and the comb offset hopping are enabled, to avoid a more serious interference problem caused by random hopping, it is required that an SRS resource in which a plurality of ports occupy a same comb offset or CS as a plurality of ports corresponding to the target SRS resource needs to ensure that no collision occurs after hopping is enabled. However, random hopping occurs on a frequency domain resource position and a code domain CS occupied for sending an SRS each time. To avoid a collision, in a feasible manner, an identical hopping random sequence is configured for all SRS resources in which a plurality of ports occupy a same comb offset or CS as the plurality of ports corresponding to the target SRS resource. For example, an identical random initialization ID needs to be configured for the terminal devices, to ensure that a CS offset or a CO offset calculated in CS hopping or CO hopping when an SRS is sent each time is identical. However, in some scenarios, it is difficult to achieve a gain of interference randomization in this configuration.

For example, when there is a conventional UE, the conventional UE does not have an SRS CS hopping or comb offset hopping capability. As shown in FIG. 6, it is assumed that an SRS resource allocated to a target UE includes four SRS ports, which respectively occupy two COs and four CSs (in gray blocks in FIG. 6, a CS 0 and a CS 6 corresponding to a CO 0 are occupied and a CS 3 and a CS 9 corresponding to a CO 2 are occupied). An SRS resource allocated to the conventional UE includes two SRS ports, which occupy a CS 3 and a CS 9 (in black blocks in FIG. 6) corresponding to a CO 3.

CO hopping is used as an example. It is assumed that the target UE enables CO hopping. If the target UE may randomly send an SRS on the CO 0 to the CO 3 each time, when the SRS is sent on the CO 3, a collision with sending of the SRS resource corresponding to the conventional UE is caused, causing a serious interference problem. Consequently, the target UE cannot perform CO hopping. In addition, because the SRS of the target UE occupies four CSs, when the target UE cannot perform CO hopping, another terminal device whose SRS resource occupies the CS 0, the CS 3, the CS 6, and the CS 9 cannot perform CO hopping (if the another terminal device whose SRS resource occupies the CS 0, the CS 3, the CS 6, and the CS 9 performs CO hopping, a collision with the SRS of the target terminal device may also be caused).

CS hopping is used as an example. It is assumed that there is another conventional UE, and an SRS resource allocated to the conventional UE includes two SRS ports that occupy a CS 3 and a CS 9 (light blue blocks in the figure) of a CO 0. If the target UE enables CS hopping, an SRS may be randomly sent on a CS 0 to a CS 11 each time. When the SRS is sent on the CS 3 or the CS 6, a collision with the SRS resource corresponding to the conventional UE occurs, causing a serious interference problem. Consequently, the target UE cannot perform CS hopping. In addition, because the SRS of the target UE occupies two combs, which are respectively a comb 0 and a comb 2, when the target UE cannot perform CS hopping, another terminal device whose SRS resource occupies the comb 0 and the comb 2 cannot perform CS hopping (if the another terminal device whose SRS resource occupies the comb 0 and the comb 2 performs CS hopping, a collision with the SRS of the target terminal device may also be caused).

Therefore, when there is a conventional UE in a communication system, a degree of freedom for a target UE to perform hopping is greatly reduced. Consequently, a large quantity of SRS resources cannot be randomized.

Embodiments of this application provide a communication method and a communication apparatus, so that when there is a conventional UE in a communication system, a degree of freedom for a target UE to perform hopping can be improved, thereby avoiding a case in which poor channel estimation quality is caused by interference to an SRS sent by the target UE.

FIG. 7 shows a communication method according to an embodiment of this application. The method 700 may include step S701 to step S703.

S701: A terminal device receives first indication information sent by a network device.

The first indication information may include at least one of a start cyclic shift value, a first bitmap, a second bitmap, a third bitmap, or a bitmap index corresponding to an SRS resource.

The start cyclic shift value corresponding to the SRS resource may be a parameter $n_{\mathrm{SRS}}^{\mathrm{cs}}$ defined in a protocol.

Optionally, before step S701, the network device may configure an initial cyclic shift value of an $i^{\mathrm{th}}$ port in N ports corresponding to the RS resource and first cyclic shift bias sets corresponding to the N ports.

S702: The terminal device obtains, based on the first indication information, the initial cyclic shift value of the $i^{\mathrm{th}}$ port in the N ports corresponding to the SRS resource and the first cyclic shift bias sets corresponding to the N ports.

N is a positive integer, i is less than or equal to N, the first cyclic shift bias set is associated with the first bitmap, and a length of the first bitmap is less than or equal to a maximum cyclic shift value.

Alternatively, the first cyclic shift bias set may be associated with the third bitmap and a value of Q.

Optionally, in the first cyclic shift bias sets corresponding to the N ports, the first cyclic shift bias sets corresponding to all the ports may be the same or may be different.

Optionally, that the first cyclic shift bias set is associated with the first bitmap may be understood as that the first cyclic shift bias set is determined based on the first bitmap.

Optionally, a first cyclic bias may be any cyclic bias in the first cyclic shift bias set.

In an embodiment, the length of the first bitmap is equal to the maximum cyclic shift value.

Optionally, the network device may indicate the maximum cyclic shift value to the terminal device, and the terminal device may determine the first cyclic shift bias set based on the first bitmap whose length is equal to the maximum cyclic shift value.

In an embodiment, the first cyclic shift bias set is an index of a bit 1 or a bit 0 in the first bitmap.

Optionally, an index of a bit 1 in the first bitmap may be understood as an available CS bias value, and an index of a bit 0 may be understood as an unavailable CS bias value. Alternatively, an index of a bit 0 may be understood as an available CS bias value, and an index of a bit 1 may be understood as an unavailable CS bias value.

In an embodiment, the first bitmap is obtained by adding 0 or 1 to a most significant bit of a bit in the second bitmap, and a length of the second bitmap is the maximum cyclic shift value minus 1.

Optionally, when an index of a bit 1 represents an available CS bias value, a most significant bit in the first bitmap is 1 by default; or when an index of a bit 0 represents an available CS bias value, a most significant bit in the first bitmap is 0 by default.

For example, when an index of a bit 1 represents an available CS bias value, and the second bitmap is 100, the first bitmap is 1100.

For another example, when an index of a bit 0 represents an available CS bias value, and the second bitmap is 100, the first bitmap is 0100.

Optionally, the most significant bit in the first bitmap may be a leftmost bit or a rightmost bit in the first bitmap. In other words, in the foregoing example, when the second bitmap is 100, the most significant bit may be 1 on the leftmost or 0 on the rightmost.

In an embodiment, the first bitmap is associated with the third bitmap and the value of Q, and the maximum cyclic shift value is equal to Q times a length of the third bitmap.

Optionally, that the first bitmap is associated with the third bitmap and the value of Q may be understood as that the first bitmap is determined based on the third bitmap and the value of Q. A specific manner of determining the first bitmap is specifically described in embodiments corresponding to FIG. 9 and FIG. 10.

Optionally, the value of Q is associated with at least one of the following content: a quantity of ports that occupy a same comb in the SRS resource, a quantity of ports that occupy different cyclic shifts in the SRS resource, or the maximum cyclic shift value.

In an embodiment, the first bitmap is associated with an index indicated by the network device.

Optionally, that the first bitmap is associated with the index indicated by the network device may be understood as that the first bitmap is determined based on the index indicated by the network device. A specific manner of determining the first bitmap is specifically described in embodiments corresponding to FIG. 9 and FIG. 10.

S703: The terminal device sends an SRS based on the initial cyclic shift value and a first cyclic bias of the $i^{th}$ port in the first cyclic shift bias set.

In embodiments of this application, the SRS may be sent based on the initial cyclic shift value of the $i^{th}$ port and the first cyclic bias of the $i^{th}$ port in the first cyclic shift bias set. In this manner, when there is a conventional UE in a communication system, a degree of freedom for a target UE to perform cyclic shift hopping can be improved, thereby avoiding a case in which poor channel estimation quality is caused by interference to the SRS sent by the target UE.

It should be understood that in embodiments of this application, the conventional UE may be a terminal device that does not have a CS hopping or CO hopping function, and the target UE may be a terminal device that has a CS hopping or CO hopping function. The communication method provided in this application may be performed by the target UE, that is, the terminal device in the method 700 may be the target UE.

FIG. 8 shows another communication method according to an embodiment of this application. The method 800 may include step S801 to step S803.

S801: A terminal device receives second indication information sent by a network device.

The second indication information may include at least one of a start comb offset value, a first bitmap, a second bitmap, a third bitmap, or a bitmap index corresponding to an SRS resource.

The start comb offset value corresponding to the SRS resource is a parameter $\bar{k}_{TC}$ defined in a protocol.

Optionally, before step S801, the network device may configure an initial cyclic shift value of an $i^{th}$ port in N ports corresponding to the RS resource and first cyclic shift bias sets corresponding to the N ports.

S802: The terminal device obtains an initial comb offset value of the $i^{th}$ port in the N ports corresponding to the SRS resource and first comb offset bias sets corresponding to the N ports.

N is a positive integer, i is less than or equal to N, the first comb offset bias set is associated with the first bitmap, and a length of the first bitmap is less than or equal to a comb number.

Alternatively, the first comb offset bias set may be associated with the third bitmap and a value of Q.

Optionally, in the first comb offset bias sets corresponding to the N ports, the first comb offset bias sets corresponding to all the ports may be the same or may be different.

Optionally, that the first comb offset bias set is associated with the first bitmap may be understood as that the first comb offset bias set is determined based on the first bitmap.

Optionally, a first comb bias may be any comb bias in the first comb offset bias set.

In an embodiment, the length of the first bitmap is equal to the comb number.

Optionally, the network device may indicate the comb number to the terminal device, and the terminal device may determine the first comb offset bias set based on the first bitmap whose length is equal to the comb number.

In an embodiment, the first comb offset bias set is an index of a bit 1 or a bit 0 in the first bitmap.

Optionally, an index of a bit 1 in the first bitmap may be understood as an available CO bias value, and an index of a bit 0 may be understood as an unavailable CO bias value. Alternatively, an index of a bit 0 may be understood as an available CO bias value, and an index of a bit 1 may be understood as an unavailable CO bias value.

In an embodiment, the first bitmap is obtained by adding 0 or 1 to a most significant bit of a bit in the second bitmap, and a length of the second bitmap is the comb number minus 1.

Optionally, when an index of a bit 1 represents an available CO bias value, a most significant bit in the first bitmap is 1 by default; or when an index of a bit 0 represents an available CO bias value, a most significant bit in the first bitmap is 0 by default.

Optionally, the most significant bit in the first bitmap may be a leftmost bit or a rightmost bit in the first bitmap.

For example, when an index of a bit 1 represents an available CO bias value, and the second bitmap is 100, the first bitmap is 1100.

For another example, when an index of a bit 0 represents an available CO bias value, and the second bitmap is 100, the first bitmap is 0100.

Optionally, the most significant bit in the first bitmap may be a leftmost bit or a rightmost bit in the first bitmap. In other words, in the foregoing example, when the second bitmap is 100, the most significant bit may be 1 on the leftmost or 0 on the rightmost.

In an embodiment, the first bitmap is associated with the third bitmap and a value of Q, and the comb number is equal to Q times a length of the third bitmap.

Optionally, that the first bitmap is associated with the third bitmap and the value of Q may be understood as that the first bitmap is determined based on the third bitmap and the value of Q. A specific manner of determining the first bitmap is specifically described in embodiments corresponding to FIG. 11 and FIG. 12.

Optionally, the value of Q is associated with at least one of the following content: a quantity of ports that occupy a same cyclic shift in the SRS resource, a quantity of ports that occupy different combs in the SRS resource, or the comb number.

In an embodiment, that the first bitmap is associated with an index indicated by the network device may be understood as that the first bitmap is determined based on the index indicated by the network device. A specific manner of determining the first bitmap is specifically described in embodiments corresponding to FIG. 11 and FIG. 12.

S803: The terminal device sends an SRS based on the initial comb offset value and the first comb bias of the $i^{th}$ port in the first comb offset bias set.

In embodiments of this application, the SRS may be sent based on the initial comb offset value and the first comb bias of the $i^{th}$ port in the first comb offset bias set. In this manner, when there is a conventional UE in a communication system, a degree of freedom for a target UE to perform comb offset hopping can be improved, thereby avoiding a case in which poor channel estimation quality is caused by interference to the SRS sent by the target UE.

It should be understood that in embodiments of this application, the conventional UE may be a terminal device that does not have a CS hopping or CO hopping function, and the target UE may be a terminal device that has a CS hopping or CO hopping function. The communication method provided in this application may be performed by the target UE, that is, the terminal device in the method 800 may be the target UE.

Specific content in which the terminal device performs CS hopping is described below with reference to FIG. 9 and FIG. 10.

The terminal device may receive indication information sent by the network device. The indication information may indicate a CS and a CO corresponding to an allocated SRS resource. The indication information may be the first indication information in the method 700 or the second indication information in the method 800. The SRS resource may include one or more SRS ports, and each port corresponds to one CS value and one CO value. Based on an NR protocol, the network device indicates a comb number $K_{TC}$ and determines a maximum quantity $n_{SRS}^{cs,max}$ of CSs based on the comb number $K_{TC}$. The network device further indicates a CS value $n_{SRS}^{cs} \in \{0,1,\ldots,n_{SRS}^{cs,max}-1\}$ and a CO value $\bar{k}_{TC} \in \{0,1,\ldots,K_{TC}-1\}$ that correspond to the SRS resource. Based on the indication information, the CS value and the CO value that respectively correspond to the one or more ports corresponding to the SRS resource are calculated according to Formula (1) and Formula (2).

For example, as shown in FIG. 9, it is assumed that configuration information that is of a target SRS resource and that is indicated by the network device to a target terminal device is $N_{ap}^{SRS}=4$, $K_{TC}=4$, $n_{SRS}^{cs,max}=12$, $n_{SRS}^{cs}=0$, and $\bar{k}_{TC}=0$. It indicates that the SRS resource includes four ports (ports 0 to 3), and the four ports respectively correspond to a CS 0, a CS 3, a CS 6, and a CS 9 in FIG. 9. It is assumed that configuration information that is of a target SRS resource and that is indicated by the network device to a conventional terminal device is $N_{ap}^{SRS}=4$, $K_{TC}=4$, $n_{SRS}^{cs,max}=12$, $n_{SRS}^{cs}=2$, and $\bar{k}_{TC}=0$. It indicates that the SRS resource includes four ports (ports 0 to 3), and the four ports respectively correspond to a CS 2, a CS 5, a CS 8, and a CS 11 in FIG. 9. The target terminal device may be a terminal device having an SRS CS hopping or CO hopping capability, and the conventional terminal device may be a terminal device that does not have an SRS CS hopping or CO hopping capability.

After the target terminal device enables CS hopping, each port of the target SRS resource may one to one correspond to one CS value region in which CS hopping can be performed or one CS value region in which CS hopping cannot be performed. A quantity of CS values included in the CS value region in which CS hopping can be performed or the CS value region in which CS hopping cannot be performed is referred to as a region length $L_1$ in which CS hopping can be performed or a region length $L_2$ in which CS hopping cannot be performed. It should be noted that, the CS value region in which CS hopping can be performed or the CS value region in which CS hopping cannot be performed is equivalent. In other words, a union set of a CS value set in which CS hopping can be performed and a CS value set in which CS hopping cannot be performed is $\{0,1,\ldots,n_{SRS}^{cs,max}-1\}$. $L_1+L_2=n_{SRS}^{cs,max}$. An example of the CS value region in which CS hopping can be performed is used for description in the following embodiments.

A region set in which CS hopping can be performed and that corresponds to each port of the target SRS resource may be a set preset in a protocol or a set that is indicated by the network device and that includes a result obtained by performing a modulo operation on a sum of a CS value $n_{CS}^{start,i}$ and each CS bias value in a CS bias value set and $n_{SRS}^{cs,max}$.

The CS bias value set is determined by using a bitmap (bitmap) (where the bitmap is denoted as $\varphi_b$, and a length of the bitmap is a quantity of bits included in the bitmap). Specifically, an index of a bit 1 (or a bit 0) in the bitmap represents an available CS bias value. In this case, the CS bias value set corresponding to the target SRS resource is a set $\{I_1(0, (\varphi_b), I_1(1, \varphi_b), ..., I_1(F(1, \varphi_b) - 1, \varphi_b)\}$ or $\{I_0(0, \varphi_b), I_0(1, \varphi_b), ..., I_0(F(0, \varphi_b), \varphi_b)\}$ including available CS biases indicated in the bitmap.

$I_m(n, \varphi_b)$ represents an index of an nth element whose value is m in $\varphi_b$, and $F(x, \varphi_b)$ represents a quantity of elements whose values are x in $\varphi_b$. N is a length of $\varphi_b$, that is, a quantity of elements in $\varphi_b$, and N is a positive integer less than or equal to $n_{SRS}^{cs,max}$. A function $F(1, \varphi_b)$ may be represented as $F(1, \varphi_b) = \sum_{n=0}^{N-1} \varphi_{b,n}$, where $\varphi_{b,n}$ represents an nth element in $\varphi_b$. A function $F(0, \varphi_b)$ may be represented as $F(0, \varphi_b) = N - \sum_{n=0}^{N-1} \varphi_{b,n}$. Alternatively, $F(x, \varphi_b)$ may be replaced with a symbol $N_{x,\varphi b}$, where $N_{x,\varphi b}$ represents a quantity of elements whose values are x in $\varphi_b$.

For example, if $\varphi_b$ = 110110110110, $N$ = , $F(1, \varphi_b) = 8$, $I_1(0, \varphi_b) = 0$, $I_1(1, \varphi_b) = 1$, $I_1(2, \varphi_b) = 3$, $I_1(3, \varphi_b) = 4$, $I_1(4, \varphi_b) = 6$, $I_1(5, \varphi_b) = 7$, $I_1(6, \varphi_b) = 9$, and $I_1(7, \varphi_b) = 10$. In this case, the CS bias value set is CS= {0, 1, 3, 4, 6, 7, 9, 10}. If the network device configures $n_{CS}^{start,i} = 0$ and $n_{SRS}^{cs,max} = 12$, the region set in which CS hopping can be performed is CS={0, 1, 3, 4, 6, 7, 9, 10}. If the network device configures $n_{CS}^{start,i} = 3$ and $n_{SRS}^{CS,max} = 12$, the region set in which CS hopping can be performed is CS={3, 4, 6, 7, 9, 10, 0, 1}. $\varphi_b$ may be the first bitmap in the method 700, $n_{CS}^{start,i}$ may be the initial cyclic shift value in the method 700, $n_{SRS}^{cs,max}$ may be the maximum cyclic shift value in the method 700, and the CS bias value set may be the first cyclic shift bias set in the method 700.

In a possible implementation, all the ports of the target SRS resource may correspond to different $n_{CS}^{start,i}$.

In a possible implementation, $n_{CS}^{start,i}$ corresponding to each port of the target SRS resource is preset as an initial cyclic shift $n_{SRS}^{cs,i}$ of the port.

In a possible implementation, each port of the target SRS resource corresponds to a same bitmap.

The network device may configure a CS bias value set for the target SRS resource, where the CS bias value set includes at least two optional CS bias values, and one of the CS bias values is 0. The following configuration manners may be included.

Manner 1: The network device sends indication information, where the indication information indicates a bitmap whose length is $n_{SRS}^{cs,max}$.

For example, as shown in FIG. 10, if the network device configures $n_{SRS}^{cs,max} = 12$, $n_{CS}^{start,i}$ corresponding to ports 0, 1, 2, and 3 of an SRS resource corresponding to the target terminal device are sequentially 0, 3, 6, and 9, and $\varphi_b$ = 110110110110, a CS bias value set is CS={0, 1, 3, 4, 6, 7, 9, 10}, and region sets in which CS hopping can be performed and that correspond to all the ports are sequentially CS={0, 1, 3, 4, 6, 7, 9, 10}, CS={3, 4, 6, 7, 9, 10, 0, 1}, CS={6, 7, 9, 10, 0, 1, 3, 4}, and CS={9, 10, 0, 1, 3, 4, 6, 7}.

On an $(n_{SRS})^{th}$ SRS sending occasion, a CS corresponding to a port $p_i$ may be calculated according to the following formula:

$$\alpha_i = 2\pi \frac{n_{SRS}^{cs,i}}{n_{SRS}^{cs,max}} + 2\pi \frac{n_{SRS}^{cs,offset}}{K n_{SRS}^{cs,max}},$$

where

$$n_{SRS}^{cs,offset} = S(f(n_{SRS}) \mathrm{mod} Y).$$

When neither 'cyclicShiftHoppingSubset' nor 'cyclicShiftHoppingFinerGranularity' is configured,

$$S(l) = l, Y = n_{\text{SRS}}^{\text{cs,max}}, \text{and } K = 1.$$

When 'cyclicShiftHoppingSubset' is not configured and 'cyclicShiftHoppingFinerGranularity' is configured, $S(l) = l$, $Y = K \cdot n_{\text{SRS}}^{\text{cs,max}}$, and $K$ is a value of the higher-layer parameter 'cyclicShiftHoppingFinerGranularity' configured by the network device or a preset value.

When 'cyclicShiftHoppingSubset' is configured,

$$S(l) = I_1(l, \varphi_b), Y = N_{1,\varphi_b}, \text{and } K = 1.$$

$n_{\text{SRS}}^{\text{cs},i}$ may be calculated according to the following formula:

$$n_{\text{SRS}}^{\text{cs},i} = \begin{cases} \left(n_{\text{SRS}}^{\text{cs}} + \dfrac{n_{\text{SRS}}^{\text{cs,max}} \lfloor (p_i - 1000)/2 \rfloor}{N_{\text{ap}}^{\text{SRS}}/2}\right) \bmod n_{\text{SRS}}^{\text{cs,max}} & \text{if } N_{\text{ap}}^{\text{SRS}} = 4 \text{ and } n_{\text{SRS}}^{\text{cs,max}} = 6 \\ \left(n_{\text{SRS}}^{\text{cs}} + \dfrac{n_{\text{SRS}}^{\text{cs,max}} (p_i - 1000)}{N_{\text{ap}}^{\text{SRS}}}\right) \bmod n_{\text{SRS}}^{\text{cs,max}} & \text{otherwise} \end{cases}.$$

A specific calculation manner of $n_{\text{SRS}}^{\text{cs},i}$ may not be limited to the foregoing formula. The specific calculation manner of $n_{\text{SRS}}^{\text{cs},i}$ is not limited in embodiments of this application.

$f(n_{\text{SRS}})$ is a random value generated according to a random sequence generation formula. For example, $f(n_{\text{SRS}})$ may be calculated according to the following formula:

$$f(n_{\text{SRS}}) = \left[\sum_{m=0}^{7} c\left(\text{M}\left(n_{\text{s,f}}^{\mu} N_{symb}^{slot} + l_0 + l'\right) + m\right) \cdot 2^m\right] mod\ L_{g,1},$$

or

$$f(n_{\text{SRS}}) = \sum_{m=0}^{7} c\left(\text{M}\left(n_{\text{slot}}^{\text{frame},\mu}\left(n_f \bmod N\right) N_{symb}^{slot} + n_{\text{s,f}}^{\mu} N_{symb}^{slot} + l_0 + l'\right) + m\right) \cdot 2^m,$$

or

$$f(n_{\text{SRS}}) = \sum_{m=0}^{7} c\left(\text{M}\left(n_{\text{slot}}^{\text{frame},\mu}\left(n_f \bmod N\right) N_{symb}^{slot} + n_{\text{s,f}}^{\mu} N_{symb}^{slot} + l_0 + \left\lfloor \frac{l'}{R} \right\rfloor\right) + m\right) \cdot 2^m,$$

or

$$f(n_{\text{SRS}}) = \sum_{m=0}^{7} \text{M}\left(8\left(n_{\text{slot}}^{\text{frame},\mu}\left(n_f \bmod N\right) N_{symb}^{slot} + n_{\text{s,f}}^{\mu} N_{symb}^{slot} + l'\right) + m\right) \cdot 2^m,$$

or

$$f(n_{\text{SRS}}) = \sum_{m=0}^{7} c\left(\text{M}\left(n_{\text{slot}}^{\text{frame},\mu}\left(n_f \bmod N\right) N_{symb}^{slot} + n_{\text{s,f}}^{\mu} N_{symb}^{slot} + \left\lfloor \frac{l'}{R} \right\rfloor\right) + m\right) \cdot 2^m.$$

M and N are positive integers, and a random sequence c(i) is generated according to the following formula:

$$c(n) = \left(x_1(n + N_C) + x_2(n + N_C)\right) \bmod 2$$

$$x_1(n+31) = \left(x_1(n+3) + x_1(n)\right) \bmod 2$$

$$x_2(n+31) = \left(x_2(n+3) + x_2(n+2) + x_2(n+1) + x_2(n)\right) \bmod 2$$

$N_C$ = 1600, and a 1st m sequence $x_1(n)$ is initialized to $x_1(0)=0$, where n=1, 2, ..., 30. A 2nd m sequence $x_2(n)$ is initialized to $C_{init} = \sum_{i=0}^{30} X_2(i) \cdot 2^i$, where a parameter $c_{init}$ herein may be independently configured for different terminal devices. For example, $c_{init}$ may be calculated based on a configured initialization ID, for example, $c_{\text{init}} = n_{\text{ID}}^{\text{SRS}}$, $c_{init}$ is a cell ID, or $c_{\text{init}} = n_{\text{ID}}^{\text{hop}}$. 'cyclicShiftHoppingSubset' and 'cyclicShiftHoppingFinerGranularity' are parameters configured by the network device, and respectively indicate whether a CS hopping subset is enabled and whether a CS hopping finer granularity is enabled.

Manner 2: The network device sends indication information, where the indication information indicates a bitmap whose length is $n_{\text{SRS}}^{\text{cs,max}} - 1$, which is denoted as $\varphi_{b'}$, $\varphi_b$ is determined based on $\varphi_{b'}$, and $\varphi_b$ is obtained by adding 1 to a leftmost side in $\varphi_{b'}$. For example, if ($\varphi_{b'}$ = 011, $\varphi_b$ is 1011.

In this implementation, when an index of an element 1 in the bitmap represents an available CS bias, a most significant bit in $\varphi_b$ is definitely 1 (a left side in the bitmap is a high-order bit, and a right side is a low bit). In other words, a 0th bit in $\varphi_b$ is definitely 1 (a leftmost bit in the bitmap is a 1st bit, for example, if bitmap=10, the 0th bit is 1, and the 1st bit is 0). Alternatively, when an index of an element 0 in the bitmap represents an available CS bias, a most significant bit in $\varphi_b$ is definitely 0, or a 0th bit in $\varphi_b$ is definitely 0.

For example, as shown in FIG. 10, if the network device configures $n_{\text{SRS}}^{\text{cs,max}} = 12$, $n_{\text{CS}}^{\text{start,i}}$ corresponding to ports 0, 1, 2, and 3 of an SRS resource corresponding to the target terminal device are sequentially 0, 3, 6, and 9, and $\varphi_{b'}$ = 10110110110, $\varphi_b$ = 110110110110 may be determined based on $\varphi_{b'}$, a CS bias value set is CS={0, 1, 3, 4, 6, 7, 9, 10}, and region sets in which CS hopping can be performed and that correspond to all the ports are sequentially CS={0, 1, 3, 4, 6, 7, 9, 10}, CS={3, 4, 6, 7, 9, 10, 0, 1}, CS={6, 7, 9, 10, 0, 1, 3, 4}, and CS={9, 10, 0, 1, 3, 4, 6, 7}. $\varphi_{b'}$ may be the second bitmap in the method 700.

On an ($n_{\text{SRS}}$)th SRS sending occasion, a CS corresponding to a port $p_i$ may be calculated according to the following formula:

$$\alpha_i = 2\pi \frac{n_{\text{SRS}}^{\text{cs},i}}{n_{\text{SRS}}^{\text{cs,max}}} + 2\pi \frac{n_{\text{SRS}}^{\text{cs,offset}}}{K n_{\text{SRS}}^{\text{cs,max}}},$$

where

$$n_{\text{SRS}}^{\text{cs,offset}} = S(f(n_{\text{SRS}}) \text{mod} \text{Y}).$$

When neither 'cyclicShiftHoppingSubset' nor 'cyclicShiftHoppingFinerGranularity' is configured,

$$\text{S}(l) = \text{l}, \text{Y}= n_{\text{SRS}}^{\text{cs,max}}, \text{and } K = 1.$$

When 'cyclicShiftHoppingSubset' is not configured and 'cyclicShiftHoppingFinerGranularity' is configured, S($l$) = $l$, $\text{Y} = \text{K} \cdot n_{\text{SRS}}^{\text{cs,max}}$, and $K$ is a value of the higher-layer parameter 'cyclicShiftHoppingFinerGranularity' configured by the network device or a preset value.

When 'cyclicShiftHoppingSubset' is configured,

$$\text{S}(l) = I_1(l, \varphi_b), \text{Y}= N_{1,\varphi_b}, \text{and } K = 1.$$

$n_{\text{SRS}}^{\text{cs},i}$ may be calculated according to the following formula:

$$n_{SRS}^{cs,i} = \begin{cases} \left(n_{SRS}^{cs} + \frac{n_{SRS}^{cs,max} \lfloor (p_i - 1000)/2 \rfloor}{N_{ap}^{SRS}/2}\right) \bmod n_{SRS}^{cs,max} & \text{if } N_{ap}^{SRS} = 4 \text{ and } n_{SRS}^{cs,max} = 6 \\ \left(n_{SRS}^{cs} + \frac{n_{SRS}^{cs,max} (p_i - 1000)}{N_{ap}^{SRS}}\right) \bmod n_{SRS}^{cs,max} & \text{otherwise} \end{cases}.$$

A specific calculation manner of $n_{SRS}^{cs,i}$ may not be limited to the foregoing formula. The specific calculation manner of $n_{SRS}^{cs,i}$ is not limited in embodiments of this application.

Manner 3: The network device sends indication information, where the indication information indicates a bitmap whose length is $n_{SRS}^{cs,max}/Q$, which is denoted as $\varphi_{b'}$, and $\varphi_b$ is determined based on $\varphi_{b'}$.

There are two possible manners of determining $\varphi_b$ based on $\varphi_{b'}$. In one manner, $\varphi_b$ is obtained by performing Q times of periodic extension on $\varphi_{b'}$, for example, Q = 2, $\varphi_{b'}$ = 110, and $\varphi_b$ = 110110. In the other manner, $\varphi_b$ is obtained by padding $\varphi_{b'}$ with 0 to a length $n_{SRS}^{cs,max}$, for example, Q = 2, $\varphi_{b'}$ = 110, $n_{SRS}^{cs,max} = 6$, and $\varphi_b$ = 110000. $\varphi_{b'}$ may be the third bitmap in the method 700.

Q may be indicated, may be preset, or may be determined according to some rules. The following are several manners of determining Q according to the rules.

Manner 3.1: Q may be determined based on a quantity $N_{ap,comb}^{SRS}$ of ports that occupy a same comb in the SRS resource, and $Q = N_{ap,comb}^{SRS}$, where

$$N_{ap,comb}^{SRS} = \begin{cases} 1, \text{if } N_{ap}^{SRS} = 1 \\ 2, \text{if } N_{ap}^{SRS} = 2 \\ 2, \text{if } N_{ap}^{SRS} = 4, n_{SRS}^{cs,max} \in \{8,12\}, \text{and } n_{SRS}^{cs} \geq n_{SRS}^{cs,max}/2 \\ 2, \text{if } N_{ap}^{SRS} = 4 \text{ and } n_{SRS}^{cs,max} = 6 \\ 2, \text{if } N_{ap}^{SRS} = 8 \text{ and } n_{SRS}^{cs,max} = 6 \\ 4, \text{if } N_{ap}^{SRS} = 4, n_{SRS}^{cs,max} \in \{8,12\}, \text{and } n_{SRS}^{cs} < n_{SRS}^{cs,max}/2 \\ 4, \text{if } N_{ap}^{SRS} = 8, n_{SRS}^{cs,max} = 8 \text{ and } n_{SRS}^{cs} < n_{SRS}^{cs,max}/2 \\ 4, \text{if } N_{ap}^{SRS} = 8 \text{ and } n_{SRS}^{cs,max} = 12 \\ 8, \text{otherwise} \end{cases}$$

A periodic extension manner is used as an example for description. As shown in FIG. 10, if the network device configures $N_{ap}^{SRS} = 4$, $n_{SRS}^{cs,max} = 12$, $n_{SRS}^{cs} = 0$, and $\varphi_{b'}$ = 110, $N_{ap,comb}^{SRS} = 4$, that is, $Q = 4$ may be determined according to the foregoing formula, and $\varphi_b$ = 110110110110 may be determined based on $\varphi_{b'}$. If $n_{CS}^{start,i}$ corresponding to ports 0, 1, 2, and 3 of an SRS resource corresponding to the target terminal device are sequentially 0, 3, 6, and 9, a CS bias value set is CS={0, 1, 3, 4, 6, 7, 9, 10}, and region sets in which CS hopping can be performed and that correspond to all the ports are sequentially CS={0, 1, 3, 4, 6, 7, 9, 10}, CS={3, 4, 6, 7, 9, 10, 0, 1}, CS={6, 7, 9, 10, 0, 1, 3, 4}, and CS={9, 10, 0, 1, 3, 4, 6, 7}.

On an ($n_{SRS}$ )th SRS sending occasion, a CS corresponding to a port $p_i$ may be calculated according to the following formula:

$$\alpha_i = 2\pi \frac{n_{SRS}^{cs,i}}{n_{SRS}^{cs,max}} + 2\pi \frac{n_{SRS}^{cs,offset}}{K n_{SRS}^{cs,max}},$$

where

$$n_{\mathrm{SRS}}^{\mathrm{cs,offset}} = S(f(n_{\mathrm{SRS}})\mathrm{mod}Y).$$

When neither 'cyclicShiftHoppingSubset' nor 'cyclicShiftHoppingFinerGranularity' is configured,

$$\mathrm{S}(l) = l, \mathrm{Y} = n_{\mathrm{SRS}}^{\mathrm{cs,max}}, \text{ and } K = 1.$$

When 'cyclicShiftHoppingSubset' is not configured and 'cyclicShiftHoppingFinerGranularity' is configured, S($l$) = $l$, $\mathrm{Y} = K \cdot n_{\mathrm{SRS}}^{\mathrm{cs,max}}$, and $K$ is a value of the higher-layer parameter 'cyclicShiftHoppingFinerGranularity' configured by the network device or a preset value.

When 'cyclicShiftHoppingSubset' is configured,

$$\mathrm{S}(l) = I_1(l, \varphi_b), \mathrm{Y} = N_{1,\varphi_b}, \text{ and } K = 1.$$

$n_{\mathrm{SRS}}^{\mathrm{cs},i}$ may be calculated according to the following formula:

$$n_{\mathrm{SRS}}^{\mathrm{cs},i} = \begin{cases} \left(n_{\mathrm{SRS}}^{\mathrm{cs}} + \frac{n_{\mathrm{SRS}}^{\mathrm{cs,max}} \lfloor (p_i - 1000)/2 \rfloor}{N_{\mathrm{ap}}^{\mathrm{SRS}}/2}\right) \bmod n_{\mathrm{SRS}}^{\mathrm{cs,max}} & \text{if } N_{\mathrm{ap}}^{\mathrm{SRS}} = 4 \text{ and } n_{\mathrm{SRS}}^{\mathrm{cs,max}} = 6 \\ \left(n_{\mathrm{SRS}}^{\mathrm{cs}} + \frac{n_{\mathrm{SRS}}^{\mathrm{cs,max}} (p_i - 1000)}{N_{\mathrm{ap}}^{\mathrm{SRS}}}\right) \bmod n_{\mathrm{SRS}}^{\mathrm{cs,max}} & \text{otherwise} \end{cases}.$$

'cyclicShiftHoppingSubset' and 'cyclicShiftHoppingFinerGranularity' are parameters configured by the network device.

Alternatively, on an $(n_{\mathrm{SRS}})^{\mathrm{th}}$ SRS sending occasion, a CS corresponding to a port $p_i$ may be determined by using $\varphi_{b'}$ and Q. On the $(n_{\mathrm{SRS}})^{\mathrm{th}}$ SRS sending occasion, the CS corresponding to the port $p_i$ may be calculated according to the following formula:

$$\alpha_i = 2\pi \frac{n_{\mathrm{SRS}}^{\mathrm{cs},i}}{n_{\mathrm{SRS}}^{\mathrm{cs,max}}} + 2\pi \frac{n_{\mathrm{SRS}}^{\mathrm{cs,offset}}}{K n_{\mathrm{SRS}}^{\mathrm{cs,max}}},$$

where

$$n_{\mathrm{SRS}}^{\mathrm{cs,offset}} = S(f(n_{\mathrm{SRS}})\mathrm{mod}Y).$$

When neither 'cyclicShiftHoppingSubset' nor 'cyclicShiftHoppingFinerGranularity' is configured,

$$\mathrm{S}(l) = l, \mathrm{Y} = n_{\mathrm{SRS}}^{\mathrm{cs,max}}, \text{ and } K = 1.$$

When 'cyclicShiftHoppingSubset' is not configured and 'cyclicShiftHoppingFinerGranularity' is configured, S($l$) = $l$, $\mathrm{Y} = K \cdot n_{\mathrm{SRS}}^{\mathrm{cs,max}}$, and $K$ is a value of the higher-layer parameter 'cyclicShiftHoppingFinerGranularity' configured by the network device or a preset value.

When 'cyclicShiftHoppingSubset' is configured,

$$\mathrm{S}(l) = \left(\left\lfloor \frac{l}{N_{1,\varphi_{b'}}} \right\rfloor \times \frac{n_{\mathrm{SRS}}^{\mathrm{cs,max}}}{Q} + I_1\left(l \mathrm{mod} N_{1,\varphi_{b'}}, \varphi_{b'}\right)\right), \mathrm{Y} = Q \times N_{1,\varphi_{b'}}, \text{ and } K = 1.$$

$n_{\mathrm{SRS}}^{\mathrm{cs},i}$ may be calculated according to the following formula:

$$n_{\mathrm{SRS}}^{\mathrm{cs},i}=\begin{cases}\left(n_{\mathrm{SRS}}^{\mathrm{cs}}+\frac{n_{\mathrm{SRS}}^{\mathrm{cs,max}}\lfloor(p_i-1000)/2\rfloor}{N_{\mathrm{ap}}^{\mathrm{SRS}}/2}\right)\bmod n_{\mathrm{SRS}}^{\mathrm{cs,max}} & \text{if } N_{\mathrm{ap}}^{\mathrm{SRS}}=4 \text{ and } n_{\mathrm{SRS}}^{\mathrm{cs,max}}=6\\ \left(n_{\mathrm{SRS}}^{\mathrm{cs}}+\frac{n_{\mathrm{SRS}}^{\mathrm{cs,max}}(p_i-1000)}{N_{\mathrm{ap}}^{\mathrm{SRS}}}\right)\bmod n_{\mathrm{SRS}}^{\mathrm{cs,max}} & \text{otherwise}\end{cases}.$$

A specific calculation manner of $n_{\mathrm{SRS}}^{\mathrm{cs},i}$ may not be limited to the foregoing formula. The specific calculation manner of $n_{\mathrm{SRS}}^{\mathrm{cs},i}$ is not limited in embodiments of this application.

Manner 3.2: Q may be determined based on a quantity $\mathrm{N}_{\mathrm{ap,comb}}^{\mathrm{SRS}}$ of ports that occupy a same comb in the SRS resource, and $Q=\mathrm{MAX}(\mathrm{N}_{\mathrm{ap,comb}}^{\mathrm{SRS}},2)$, where

$$N_{\mathrm{ap,comb}}^{\mathrm{SRS}}=\begin{cases}1, \text{if } N_{\mathrm{ap}}^{\mathrm{SRS}}=1\\ 2, \text{if } N_{\mathrm{ap}}^{\mathrm{SRS}}=2\\ 2, \text{if } N_{\mathrm{ap}}^{\mathrm{SRS}}=4, n_{\mathrm{SRS}}^{\mathrm{cs,max}}\in\{8,12\}, \text{and } n_{\mathrm{SRS}}^{\mathrm{cs}}\geq n_{\mathrm{SRS}}^{\mathrm{cs,max}}/2\\ 2, \text{if } N_{\mathrm{ap}}^{\mathrm{SRS}}=4 \text{ and } n_{\mathrm{SRS}}^{\mathrm{cs,max}}=6\\ 2, \text{if } N_{\mathrm{ap}}^{\mathrm{SRS}}=8 \text{ and } n_{\mathrm{SRS}}^{\mathrm{cs,max}}=6\\ 4, \text{if } N_{\mathrm{ap}}^{\mathrm{SRS}}=4, n_{\mathrm{SRS}}^{\mathrm{cs,max}}\in\{8,12\}, \text{and } n_{\mathrm{SRS}}^{\mathrm{cs}}< n_{\mathrm{SRS}}^{\mathrm{cs,max}}/2\\ 4, \text{if } N_{\mathrm{ap}}^{\mathrm{SRS}}=8, n_{\mathrm{SRS}}^{\mathrm{cs,max}}=8 \text{ and } n_{\mathrm{SRS}}^{\mathrm{cs}}< n_{\mathrm{SRS}}^{\mathrm{cs,max}}/2\\ 4, \text{if } N_{\mathrm{ap}}^{\mathrm{SRS}}=8 \text{ and } n_{\mathrm{SRS}}^{\mathrm{cs,max}}=12\\ 8, \text{otherwise}\end{cases}.$$

A periodic extension manner is used as an example for description. As shown in FIG. 10, if the network device configures $N_{\mathrm{ap}}^{\mathrm{SRS}}=4$, $n_{\mathrm{SRS}}^{\mathrm{cs,max}}=12$, $n_{\mathrm{SRS}}^{\mathrm{cs}}=0$, and $\varphi_{b'}$ = 110, $\mathrm{N}_{\mathrm{ap,comb}}^{\mathrm{SRS}}=4$, that is, $Q$ = 4 may be determined according to the foregoing formula, and $\varphi_b$ = 110110110110 may be determined based on $\varphi_{b'}$. If $n_{\mathrm{CS}}^{\mathrm{start,i}}$ corresponding to ports 0, 1, 2, and 3 of an SRS resource corresponding to the target terminal device are sequentially 0, 3, 6, and 9, a CS bias value set is CS={0, 1, 3, 4, 6, 7, 9, 10}, and region sets in which CS hopping can be performed and that correspond to all the ports are sequentially CS= {0, 1, 3, 4, 6, 7, 9, 10}, CS= {3, 4, 6, 7, 9, 10, 0, 1}, CS={6, 7, 9, 10, 0, 1, 3, 4}, and CS={9, 10, 0, 1, 3, 4, 6, 7}.

On an $(n_{\mathrm{SRS}})^{\mathrm{th}}$ SRS sending occasion, a CS corresponding to a port $p_i$ may be calculated according to the following formula:

$$\alpha_i=2\pi\frac{n_{\mathrm{SRS}}^{\mathrm{cs},i}}{n_{\mathrm{SRS}}^{\mathrm{cs,max}}}+2\pi\frac{n_{\mathrm{SRS}}^{\mathrm{cs,offset}}}{Kn_{\mathrm{SRS}}^{\mathrm{cs,max}}},$$

where

$$n_{\mathrm{SRS}}^{\mathrm{cs,offset}}=S(f(n_{\mathrm{SRS}})\mathrm{mod}Y).$$

When neither 'cyclicShiftHoppingSubset' nor 'cyclicShiftHoppingFinerGranularity' is configured,

$$\mathrm{S}(l)=l, \mathrm{Y}=n_{\mathrm{SRS}}^{\mathrm{cs,max}}, \text{and } K=1.$$

When 'cyclicShiftHoppingSubset' is not configured and 'cyclicShiftHoppingFinerGranularity' is configured, S($l$) = $l$, $\mathrm{Y}=K\cdot n_{\mathrm{SRS}}^{\mathrm{cs,max}}$, and $K$ is a value of the higher-layer parameter 'cyclicShiftHoppingFinerGranularity' configured by the network device or a preset value.

When 'cyclicShiftHoppingSubset' is configured,

$$S(l) = I_1(l, \varphi_b), \text{Y} = N_{1,\varphi_b}, \text{ and } K = 1.$$

$n_{\text{SRS}}^{\text{cs},i}$ may be calculated according to the following formula:

$$n_{\text{SRS}}^{\text{cs},i} = \begin{cases} \left(n_{\text{SRS}}^{\text{cs}} + \frac{n_{\text{SRS}}^{\text{cs,max}} \lfloor (p_i - 1000)/2 \rfloor}{N_{\text{ap}}^{\text{SRS}}/2}\right) \bmod n_{\text{SRS}}^{\text{cs,max}} & \text{if } N_{\text{ap}}^{\text{SRS}} = 4 \text{ and } n_{\text{SRS}}^{\text{cs,max}} = 6 \\ \left(n_{\text{SRS}}^{\text{cs}} + \frac{n_{\text{SRS}}^{\text{cs,max}} (p_i - 1000)}{N_{\text{ap}}^{\text{SRS}}}\right) \bmod n_{\text{SRS}}^{\text{cs,max}} & \text{otherwise} \end{cases}.$$

'cyclicShiftHoppingSubset' and 'cyclicShiftHoppingFinerGranularity' are parameters configured by the network device.

Alternatively, on an $(n_{\text{SRS}})^{\text{th}}$ SRS sending occasion, a CS corresponding to a port $p_i$ may be determined by using $\varphi_{b'}$ and Q. On the $(n_{\text{SRS}})^{\text{th}}$ SRS sending occasion, the CS corresponding to the port $p_i$ may be calculated according to the following formula:

$$\alpha_i = 2\pi \frac{n_{\text{SRS}}^{\text{cs},i}}{n_{\text{SRS}}^{\text{cs,max}}} + 2\pi \frac{n_{\text{SRS}}^{\text{cs,offset}}}{K n_{\text{SRS}}^{\text{cs,max}}},$$

where

$$n_{\text{SRS}}^{\text{cs,offset}} = S(f(n_{\text{SRS}}) \text{mod} Y).$$

When neither 'cyclicShiftHoppingSubset' nor 'cyclicShiftHoppingFinerGranularity' is configured,

$$S(l) = l, \text{Y} = n_{\text{SRS}}^{\text{cs,max}}, \text{ and } K = 1.$$

When 'cyclicShiftHoppingSubset' is not configured and 'cyclicShiftHoppingFinerGranularity' is configured, $S(l) = l$, $\text{Y} = K \cdot n_{\text{SRS}}^{\text{cs,max}}$, and $K$ is a value of the higher-layer parameter 'cyclicShiftHoppingFinerGranularity' configured by the network device or a preset value.

When 'cyclicShiftHoppingSubset' is configured,

$$S(l) = \left(\left\lfloor \frac{l}{N_{1,\varphi_{b'}}} \right\rfloor \times \frac{n_{\text{SRS}}^{\text{cs,max}}}{Q} + I_1\left(l \text{mod} N_{1,\varphi_{b'}}, \varphi_{b'}\right)\right), \text{Y} = Q \times N_{1,\varphi_{b'}}, \text{ and } K = 1.$$

$n_{\text{SRS}}^{\text{cs},i}$ may be calculated according to the following formula:

$$n_{\text{SRS}}^{\text{cs},i} = \begin{cases} \left(n_{\text{SRS}}^{\text{cs}} + \frac{n_{\text{SRS}}^{\text{cs,max}} \lfloor (p_i - 1000)/2 \rfloor}{N_{\text{ap}}^{\text{SRS}}/2}\right) \bmod n_{\text{SRS}}^{\text{cs,max}} & \text{if } N_{\text{ap}}^{\text{SRS}} = 4 \text{ and } n_{\text{SRS}}^{\text{cs,max}} = 6 \\ \left(n_{\text{SRS}}^{\text{cs}} + \frac{n_{\text{SRS}}^{\text{cs,max}} (p_i - 1000)}{N_{\text{ap}}^{\text{SRS}}}\right) \bmod n_{\text{SRS}}^{\text{cs,max}} & \text{otherwise} \end{cases}.$$

A specific calculation manner of $n_{\text{SRS}}^{\text{cs},i}$ may not be limited to the foregoing formula. The specific calculation manner of $n_{\text{SRS}}^{\text{cs},i}$ is not limited in embodiments of this application.

Manner 3.3: Q may be determined based on a quantity $N_{\text{ap,diffcs}}^{\text{SRS}}$ of ports that occupy different CSs in the SRS resource, and $Q = N_{\text{ap,diffcs}}^{\text{SRS}}$ , where

$$N_{\text{ap,diffcs}}^{\text{SRS}} = \begin{cases} N_{\text{ap}}^{\text{SRS}}/2, \text{if } N_{\text{ap}}^{\text{SRS}} = 4 \text{ and } n_{\text{SRS}}^{\text{cs,max}} = 6; \text{ or if } N_{\text{ap}}^{\text{SRS}} = 8 \text{ and } n_{\text{SRS}}^{\text{cs,max}} = 12 \\ N_{\text{ap}}^{\text{SRS}}/4, \text{if } N_{\text{ap}}^{\text{SRS}} = 8 \text{ and } n_{\text{SRS}}^{\text{cs,max}} = 6 \\ N_{\text{ap}}^{\text{SRS}}, \text{otherwise} \end{cases}.$$

A periodic extension manner is used as an example for description. As shown in FIG. 10, if the network device configures $N_{\text{ap}}^{\text{SRS}} = 4$, $n_{\text{SRS}}^{\text{cs,max}} = 12$, $n_{\text{SRS}}^{\text{cs}} = 0$, and $\varphi_{b'} = 110$, $N_{\text{ap,diffcs}}^{\text{SRS}} = 4$, that is, $Q = 4$ may be determined according to the foregoing formula, and $\varphi_b = 110110110110$ may be determined based on $\varphi_{b'}$. If $n_{\text{CS}}^{\text{start,i}}$ corresponding to ports 0, 1, 2, and 3 of an SRS resource corresponding to the target terminal device are sequentially 0, 3, 6, and 9, a CS bias value set is CS={0, 1, 3, 4, 6, 7, 9, 10}, and region sets in which CS hopping can be performed and that correspond to all the ports are sequentially CS={0, 1, 3, 4, 6, 7, 9, 10}, CS={3, 4, 6, 7, 9, 10, 0, 1}, CS={6, 7, 9, 10, 0, 1, 3, 4}, and CS={9, 10, 0, 1, 3, 4, 6, 7}.

On an ($n_{\text{SRS}}$)[th] SRS sending occasion, a CS corresponding to a port $p_i$ may be calculated according to the following formula:

$$\alpha_i = 2\pi \frac{n_{\text{SRS}}^{\text{cs},i}}{n_{\text{SRS}}^{\text{cs,max}}} + 2\pi \frac{n_{\text{SRS}}^{\text{cs,offset}}}{K n_{\text{SRS}}^{\text{cs,max}}},$$

where

$$n_{\text{SRS}}^{\text{cs,offset}} = S(f(n_{\text{SRS}}) \bmod Y).$$

When neither 'cyclicShiftHoppingSubset' nor 'cyclicShiftHoppingFinerGranularity' is configured,

$$S(l) = l, \text{Y} = n_{\text{SRS}}^{\text{cs,max}}, \text{and } K = 1.$$

When 'cyclicShiftHoppingSubset' is not configured and 'cyclicShiftHoppingFinerGranularity' is configured, $S(l) = l$, $Y = K \cdot n_{\text{SRS}}^{\text{cs,max}}$, and $K$ is a value of the higher-layer parameter 'cyclicShiftHoppingFinerGranularity' configured by the network device or a preset value.

When 'cyclicShiftHoppingSubset' is configured,

$$S(l) = I_1(l, \varphi_b), \text{Y} = N_{1,\varphi_b}, \text{and } K = 1.$$

$n_{\text{SRS}}^{\text{cs},i}$ may be calculated according to the following formula:

$$n_{\text{SRS}}^{\text{cs},i} = \begin{cases} \left( n_{\text{SRS}}^{\text{cs}} + \frac{n_{\text{SRS}}^{\text{cs,max}} \lfloor (p_i - 1000)/2 \rfloor}{N_{\text{ap}}^{\text{SRS}}/2} \right) \bmod n_{\text{SRS}}^{\text{cs,max}} & \text{if } N_{\text{ap}}^{\text{SRS}} = 4 \text{ and } n_{\text{SRS}}^{\text{cs,max}} = 6 \\ \left( n_{\text{SRS}}^{\text{cs}} + \frac{n_{\text{SRS}}^{\text{cs,max}} (p_i - 1000)}{N_{\text{ap}}^{\text{SRS}}} \right) \bmod n_{\text{SRS}}^{\text{cs,max}} & \text{otherwise} \end{cases}.$$

'cyclicShiftHoppingSubset' and 'cyclicShiftHoppingFinerGranularity' are parameters configured by the network device.

Alternatively, on an ($n_{\text{SRS}}$)[th] SRS sending occasion, a CS corresponding to a port $p_i$ may be determined by using $\varphi_{b'}$ and Q. On the ($n_{\text{SRS}}$)[th] SRS sending occasion, the CS corresponding to the port $p_i$ may be calculated according to the following formula:

$$\alpha_i = 2\pi \frac{n_{\mathrm{SRS}}^{\mathrm{cs},i}}{n_{\mathrm{SRS}}^{\mathrm{cs,max}}} + 2\pi \frac{n_{\mathrm{SRS}}^{\mathrm{cs,offset}}}{K n_{\mathrm{SRS}}^{\mathrm{cs,max}}},$$

where

$$n_{\mathrm{SRS}}^{\mathrm{cs,offset}} = S(f(n_{\mathrm{SRS}}) \mathrm{mod} Y).$$

When neither 'cyclicShiftHoppingSubset' nor 'cyclicShiftHoppingFinerGranularity' is configured,

$$\mathrm{S}(l) = l, \mathrm{Y} = n_{\mathrm{SRS}}^{\mathrm{cs,max}}, \text{ and } K = 1.$$

When 'cyclicShiftHoppingSubset' is not configured and 'cyclicShiftHoppingFinerGranularity' is configured, S(*l*) = *l* , $\mathrm{Y} = K \cdot n_{\mathrm{SRS}}^{\mathrm{cs,max}}$ , and *K* is a value of the higher-layer parameter 'cyclicShiftHoppingFinerGranularity' configured by the network device or a preset value.

When 'cyclicShiftHoppingSubset' is configured,

$$\mathrm{S}(l) = \left( \left\lfloor \frac{l}{N_{1,\varphi_{b'}}} \right\rfloor \times \frac{n_{\mathrm{SRS}}^{\mathrm{cs,max}}}{Q} + I_1\left( l \mathrm{mod} N_{1,\varphi_{b'}}, \varphi_{b'} \right) \right), \mathrm{Y} = Q \times N_{1,\varphi_{b'}}, \text{ and } K = 1.$$

$n_{\mathrm{SRS}}^{\mathrm{cs},i}$ may be calculated according to the following formula:

$$n_{\mathrm{SRS}}^{\mathrm{cs},i} = \begin{cases} \left( n_{\mathrm{SRS}}^{\mathrm{cs}} + \frac{n_{\mathrm{SRS}}^{\mathrm{cs,max}} \lfloor (p_i - 1000)/2 \rfloor}{N_{\mathrm{ap}}^{\mathrm{SRS}}/2} \right) \bmod n_{\mathrm{SRS}}^{\mathrm{cs,max}} & \text{if } N_{\mathrm{ap}}^{\mathrm{SRS}} = 4 \text{ and } n_{\mathrm{SRS}}^{\mathrm{cs,max}} = 6 \\ \left( n_{\mathrm{SRS}}^{\mathrm{cs}} + \frac{n_{\mathrm{SRS}}^{\mathrm{cs,max}} (p_i - 1000)}{N_{\mathrm{ap}}^{\mathrm{SRS}}} \right) \bmod n_{\mathrm{SRS}}^{\mathrm{cs,max}} & \text{otherwise} \end{cases}.$$

A specific calculation manner of $n_{\mathrm{SRS}}^{\mathrm{cs},i}$ may not be limited to the foregoing formula. The specific calculation manner of $n_{\mathrm{SRS}}^{\mathrm{cs},i}$ is not limited in embodiments of this application.

Manner 3.4: Q may be determined based on a quantity $N_{\mathrm{ap,diffcs}}^{\mathrm{SRS}}$ of ports that occupy different CSs in the SRS resource, and $Q = \mathrm{MAX}(N_{\mathrm{ap,diffcs}}^{\mathrm{SRS}}, 2)$ , where

$$N_{\mathrm{ap,diffcs}}^{\mathrm{SRS}} = \begin{cases} N_{\mathrm{ap}}^{\mathrm{SRS}}/2, \text{if } N_{\mathrm{ap}}^{\mathrm{SRS}} = 4 \text{ and } n_{\mathrm{SRS}}^{\mathrm{cs,max}} = 6; \text{ or if } N_{\mathrm{ap}}^{\mathrm{SRS}} = 8 \text{ and } n_{\mathrm{SRS}}^{\mathrm{cs,max}} = 12 \\ N_{\mathrm{ap}}^{\mathrm{SRS}}/4, \text{if } N_{\mathrm{ap}}^{\mathrm{SRS}} = 8 \text{ and } n_{\mathrm{SRS}}^{\mathrm{cs,max}} = 6 \\ N_{\mathrm{ap}}^{\mathrm{SRS}}, \text{otherwise} \end{cases}$$

A periodic extension manner is used as an example for description. As shown in FIG. 10, if the network device configures $N_{\mathrm{ap}}^{\mathrm{SRS}} = 4$, $n_{\mathrm{SRS}}^{\mathrm{cs,max}} = 12$, $n_{\mathrm{SRS}}^{\mathrm{cs}} = 0$ , and $\varphi_{b'}$ = 110, $\mathrm{N}_{\mathrm{ap,diffcs}}^{\mathrm{SRS}} = 4$, that is, *Q* = 4 may be determined according to the foregoing formula, and $\varphi_b$ = 110110110110 may be determined based on $\varphi_{b'}$. If $n_{\mathrm{CS}}^{\mathrm{start,i}}$ corresponding to ports 0, 1, 2, and 3 of an SRS resource corresponding to the target terminal device are sequentially 0, 3, 6, and 9, a CS bias value set is CS={0, 1, 3, 4, 6, 7, 9, 10}, and region sets in which CS hopping can be performed and that correspond to all the ports are sequentially CS={0, 1, 3, 4, 6, 7, 9, 10}, CS={3, 4, 6, 7, 9, 10, 0, 1}, CS={6, 7, 9, 10, 0, 1, 3, 4}, and CS={9, 10, 0, 1, 3, 4, 6, 7}.

On an $(n_{\mathrm{SRS}})^{\mathrm{th}}$ SRS sending occasion, a CS corresponding to a port $p_i$ may be calculated according to the following formula:

$$\alpha_i = 2\pi \frac{n_{\mathrm{SRS}}^{\mathrm{cs},i}}{n_{\mathrm{SRS}}^{\mathrm{cs,max}}} + 2\pi \frac{n_{\mathrm{SRS}}^{\mathrm{cs,offset}}}{K n_{\mathrm{SRS}}^{\mathrm{cs,max}}},$$

where

$$n_{\mathrm{SRS}}^{\mathrm{cs,offset}} = S(f(n_{\mathrm{SRS}}) \mathrm{mod} Y).$$

When neither 'cyclicShiftHoppingSubset' nor 'cyclicShiftHoppingFinerGranularity' is configured,

$$\mathrm{S}(l) = l, \mathrm{Y} = n_{\mathrm{SRS}}^{\mathrm{cs,max}}, \text{ and } K = 1.$$

When 'cyclicShiftHoppingSubset' is not configured and 'cyclicShiftHoppingFinerGranularity' is configured, S($l$) = $l$, $\mathrm{Y} = K \cdot n_{\mathrm{SRS}}^{\mathrm{cs,max}}$, and $K$ is a value of the higher-layer parameter 'cyclicShiftHoppingFinerGranularity' configured by the network device or a preset value.

When 'cyclicShiftHoppingSubset' is configured,

$$\mathrm{S}(l) = I_1(l, \varphi_b), \mathrm{Y} = N_{1,\varphi_b}, \text{ and } K = 1.$$

$n_{\mathrm{SRS}}^{\mathrm{cs},i}$ may be calculated according to the following formula:

$$n_{\mathrm{SRS}}^{\mathrm{cs},i} = \begin{cases} \left(n_{\mathrm{SRS}}^{\mathrm{cs}} + \frac{n_{\mathrm{SRS}}^{\mathrm{cs,max}} \lfloor (p_i - 1000)/2 \rfloor}{N_{\mathrm{ap}}^{\mathrm{SRS}}/2}\right) \bmod n_{\mathrm{SRS}}^{\mathrm{cs,max}} & \text{if } N_{\mathrm{ap}}^{\mathrm{SRS}} = 4 \text{ and } n_{\mathrm{SRS}}^{\mathrm{cs,max}} = 6 \\ \left(n_{\mathrm{SRS}}^{\mathrm{cs}} + \frac{n_{\mathrm{SRS}}^{\mathrm{cs,max}} (p_i - 1000)}{N_{\mathrm{ap}}^{\mathrm{SRS}}}\right) \bmod n_{\mathrm{SRS}}^{\mathrm{cs,max}} & \text{otherwise} \end{cases}.$$

'cyclicShiftHoppingSubset' and 'cyclicShiftHoppingFinerGranularity' are parameters configured by the network device.

Alternatively, on an ($n_{\mathrm{SRS}}$)th SRS sending occasion, a CS corresponding to a port $p_i$ may be determined by using $\varphi_{b'}$ and Q. On the ($n_{\mathrm{SRS}}$ )th SRS sending occasion, the CS corresponding to the port $p_i$ may be calculated according to the following formula:

$$\alpha_i = 2\pi \frac{n_{\mathrm{SRS}}^{\mathrm{cs},i}}{n_{\mathrm{SRS}}^{\mathrm{cs,max}}} + 2\pi \frac{n_{\mathrm{SRS}}^{\mathrm{cs,offset}}}{K n_{\mathrm{SRS}}^{\mathrm{cs,max}}},$$

where

$$n_{\mathrm{SRS}}^{\mathrm{cs,offset}} = S(f(n_{\mathrm{SRS}}) \mathrm{mod} Y).$$

When neither 'cyclicShiftHoppingSubset' nor 'cyclicShiftHoppingFinerGranularity' is configured,

$$\mathrm{S}(l) = l, \mathrm{Y} = n_{\mathrm{SRS}}^{\mathrm{cs,max}}, \text{ and } K = 1.$$

When 'cyclicShiftHoppingSubset' is not configured and 'cyclicShiftHoppingFinerGranularity' is configured, S($l$) = $l$, $\mathrm{Y} = K \cdot n_{\mathrm{SRS}}^{\mathrm{cs,max}}$, and $K$ is a value of the higher-layer parameter 'cyclicShiftHoppingFinerGranularity' configured by the network device or a preset value.

When 'cyclicShiftHoppingSubset' is configured,

$$\mathrm{S}(l) = \left(\left\lfloor \frac{l}{N_{1,\varphi_{b'}}} \right\rfloor \times \frac{n_{\mathrm{SRS}}^{\mathrm{cs,max}}}{Q} + I_1\left(l \mathrm{mod} N_{1,\varphi_{b'}}, \varphi_{b'}\right)\right), \mathrm{Y} = Q \times N_{1,\varphi_{b'}}, \text{ and } K = 1.$$

$n_{\text{SRS}}^{\text{cs},i}$ may be calculated according to the following formula:

$$n_{\text{SRS}}^{\text{cs},i} = \begin{cases} \left(n_{\text{SRS}}^{\text{cs}} + \frac{n_{\text{SRS}}^{\text{cs,max}} \lfloor (p_i - 1000)/2 \rfloor}{N_{\text{ap}}^{\text{SRS}}/2}\right) \bmod n_{\text{SRS}}^{\text{cs,max}} & \text{if } N_{\text{ap}}^{\text{SRS}} = 4 \text{ and } n_{\text{SRS}}^{\text{cs,max}} = 6 \\ \left(n_{\text{SRS}}^{\text{cs}} + \frac{n_{\text{SRS}}^{\text{cs,max}} (p_i - 1000)}{N_{\text{ap}}^{\text{SRS}}}\right) \bmod n_{\text{SRS}}^{\text{cs,max}} & \text{otherwise} \end{cases}.$$

A specific calculation manner of $n_{\text{SRS}}^{\text{cs},i}$ may not be limited to the foregoing formula. The specific calculation manner of $n_{\text{SRS}}^{\text{cs},i}$ is not limited in embodiments of this application.

Manner 3.5: Q may be determined based on $n_{\text{SRS}}^{\text{cs,max}}$, and $Q = \begin{cases} 4, \text{if } n_{\text{SRS}}^{\text{cs,max}} = 8 \text{ or } 12 \\ 2, \text{otherwise} \end{cases}$.

A periodic extension manner is used as an example for description. As shown in FIG. 10, if the network device configures $N_{\text{ap}}^{\text{SRS}} = 4, n_{\text{SRS}}^{\text{cs,max}} = 12, n_{\text{SRS}}^{\text{cs}} = 0$, and $\varphi_{b'}$ = *110,* *Q* = 4 may be determined according to the foregoing formula, and $\varphi_b$ = 110110110110 may be determined based on $\varphi_{b'}$. If $n_{\text{CS}}^{\text{start,i}}$ corresponding to ports 0, 1, 2, and 3 of an SRS resource corresponding to the target terminal device are sequentially 0, 3, 6, and 9, a CS bias value set is CS={0, 1, 3, 4, 6, 7, 9, 10}, and region sets in which CS hopping can be performed and that correspond to all the ports are sequentially CS={0, 1, 3, 4, 6, 7, 9, 10}, CS={3, 4, 6, 7, 9, 10, 0, 1}, CS={6, 7, 9, 10, 0, 1, 3, 4}, and CS={9, 10, 0, 1, 3, 4, 6, 7}.

On an ($n_{\text{SRS}}$ )[th] SRS sending occasion, a CS corresponding to a port $p_i$ may be calculated according to the following formula:

$$\alpha_i = 2\pi \frac{n_{\text{SRS}}^{\text{cs},i}}{n_{\text{SRS}}^{\text{cs,max}}} + 2\pi \frac{n_{\text{SRS}}^{\text{cs,offset}}}{K n_{\text{SRS}}^{\text{cs,max}}},$$

where

$$n_{\text{SRS}}^{\text{cs,offset}} = S(f(n_{\text{SRS}}) \text{mod} Y).$$

When neither 'cyclicShiftHoppingSubset' nor 'cyclicShiftHoppingFinerGranularity' is configured,

$$S(l) = l, \text{Y} = n_{\text{SRS}}^{\text{cs,max}}, \text{and } K = 1.$$

When 'cyclicShiftHoppingSubset' is not configured and 'cyclicShiftHoppingFinerGranularity' is configured, S(*l*) = *l* , $\text{Y} = K \cdot n_{\text{SRS}}^{\text{cs,max}}$, and *K* is a value of the higher-layer parameter 'cyclicShiftHoppingFinerGranularity' configured by the network device or a preset value.

When 'cyclicShiftHoppingSubset' is configured,

$$S(l) = I_1(l, \varphi_b), \text{Y} = N_{1,\varphi_b}, \text{and } K = 1.$$

$n_{\text{SRS}}^{\text{cs},i}$ may be calculated according to the following formula:

$$n_{\text{SRS}}^{\text{cs},i} = \begin{cases} \left(n_{\text{SRS}}^{\text{cs}} + \frac{n_{\text{SRS}}^{\text{cs,max}} \lfloor (p_i - 1000)/2 \rfloor}{N_{\text{ap}}^{\text{SRS}}/2}\right) \bmod n_{\text{SRS}}^{\text{cs,max}} & \text{if } N_{\text{ap}}^{\text{SRS}} = 4 \text{ and } n_{\text{SRS}}^{\text{cs,max}} = 6 \\ \left(n_{\text{SRS}}^{\text{cs}} + \frac{n_{\text{SRS}}^{\text{cs,max}} (p_i - 1000)}{N_{\text{ap}}^{\text{SRS}}}\right) \bmod n_{\text{SRS}}^{\text{cs,max}} & \text{otherwise} \end{cases}.$$

'cyclicShiftHoppingSubset' and 'cyclicShiftHoppingFinerGranularity' are parameters configured by the network device.

Alternatively, on an $(n_{\mathrm{SRS}})^{\mathrm{th}}$ SRS sending occasion, a CS corresponding to a port $p_i$ may be determined by using $\varphi_{b'}$ and Q. On the $(n_{\mathrm{SRS}})^{\mathrm{th}}$ SRS sending occasion, the CS corresponding to the port $p_i$ may be calculated according to the following formula:

$$\alpha_i = 2\pi \frac{n_{\mathrm{SRS}}^{\mathrm{cs},i}}{n_{\mathrm{SRS}}^{\mathrm{cs,max}}} + 2\pi \frac{n_{\mathrm{SRS}}^{\mathrm{cs,offset}}}{K n_{\mathrm{SRS}}^{\mathrm{cs,max}}},$$

where

$$n_{\mathrm{SRS}}^{\mathrm{cs,offset}} = S(f(n_{\mathrm{SRS}}) \mathrm{mod} Y).$$

When neither 'cyclicShiftHoppingSubset' nor 'cyclicShiftHoppingFinerGranularity' is configured,

$$\mathrm{S}(l) = l, \mathrm{Y} = n_{\mathrm{SRS}}^{\mathrm{cs,max}}, \text{ and } K = 1.$$

When 'cyclicShiftHoppingSubset' is not configured and 'cyclicShiftHoppingFinerGranularity' is configured,

S($l$) = $l$, $\mathrm{Y} = K \cdot n_{\mathrm{SRS}}^{\mathrm{cs,max}}$, and $K$ is a value of the higher-layer parameter 'cyclicShiftHoppingFinerGranularity' configured by the network device or a preset value.

When 'cyclicShiftHoppingSubset' is configured,

$$\mathrm{S}(l) = \left(\left\lfloor \frac{l}{N_{1,\varphi_{b'}}} \right\rfloor \times \frac{n_{\mathrm{SRS}}^{\mathrm{cs,max}}}{Q} + I_1\left(l \mathrm{mod} N_{1,\varphi_{b'}}, \varphi_{b'}\right)\right), \mathrm{Y} = Q \times N_{1,\varphi_{b'}}, \text{ and } K = 1.$$

$n_{\mathrm{SRS}}^{\mathrm{cs},i}$ may be calculated according to the following formula:

$$n_{\mathrm{SRS}}^{\mathrm{cs},i} = \begin{cases} \left(n_{\mathrm{SRS}}^{\mathrm{cs}} + \frac{n_{\mathrm{SRS}}^{\mathrm{cs,max}} \lfloor (p_i - 1000)/2 \rfloor}{N_{\mathrm{ap}}^{\mathrm{SRS}}/2}\right) \mathrm{mod}\ n_{\mathrm{SRS}}^{\mathrm{cs,max}} & \text{if } N_{\mathrm{ap}}^{\mathrm{SRS}} = 4 \text{ and } n_{\mathrm{SRS}}^{\mathrm{cs,max}} = 6 \\ \left(n_{\mathrm{SRS}}^{\mathrm{cs}} + \frac{n_{\mathrm{SRS}}^{\mathrm{cs,max}} (p_i - 1000)}{N_{\mathrm{ap}}^{\mathrm{SRS}}}\right) \mathrm{mod}\ n_{\mathrm{SRS}}^{\mathrm{cs,max}} & \text{otherwise} \end{cases}.$$

A specific calculation manner of $n_{\mathrm{SRS}}^{\mathrm{cs},i}$ may not be limited to the foregoing formula. The specific calculation manner of $n_{\mathrm{SRS}}^{\mathrm{cs},i}$ is not limited in embodiments of this application.

Manner 4: A bitmap is preset, and the network device indicates an index R of the bitmap to notify the bitmap, where the index R may be the index indicated by the network device in the method 700.

For example, the bitmap may be determined based on Table 2.

Table 2

| $n_{\mathrm{SRS}}^{\mathrm{cs,max}}$ | Q | R | Bitmap |
|---|---|---|---|
| 8 | 1 or 2 | 0 | 11011101 |
| | | 1 | 11001100 |
| 12 | 1 or 2 | 0 | 111011111011 |
| | | 1 | 110101110101 |
| | | 2 | 100101100101 |
| | | 3 | 100100100100 |

(continued)

| $n_{SRS}^{cs,max}$ | Q | R | Bitmap |
|---|---|---|---|
| | 4 | 0 | 110110110110 |
| 6 | 1 or 2 | 0 | 110110 |

A periodic extension manner is used as an example for description. As shown in FIG. 10, if the network device configures $N_{ap}^{SRS} = 4$, $n_{SRS}^{cs,max} = 12$, $n_{SRS}^{cs} = 0$, and $Q = 4$, $\varphi_b$ = 110110110110 may be learned by looking up Table 2. If $n_{CS}^{start,i}$ corresponding to ports 0, 1, 2, and 3 corresponding to the target terminal device are sequentially 0, 3, 6, and 9, a CS bias value set is CS={0, 1, 3, 4, 6, 7, 9, 10}, and region sets in which CS hopping can be performed and that correspond to all the ports are sequentially CS={0, 1, 3, 4, 6, 7, 9, 10}, CS={3, 4, 6, 7, 9, 10, 0, 1}, CS={6, 7, 9, 10, 0, 1, 3, 4}, and CS={9, 10, 0, 1, 3, 4, 6, 7}.

On an ($n_{SRS}$)$^{th}$ SRS sending occasion, a CS corresponding to a port $p_i$ may be calculated according to the following formula:

$$\alpha_i = 2\pi \frac{n_{SRS}^{cs,i}}{n_{SRS}^{cs,max}} + 2\pi \frac{n_{SRS}^{cs,offset}}{K n_{SRS}^{cs,max}},$$

where

$$n_{SRS}^{cs,offset} = S(f(n_{SRS}) \bmod Y).$$

When neither 'cyclicShiftHoppingSubset' nor 'cyclicShiftHoppingFinerGranularity' is configured,

$$S(l) = l, \mathrm{Y} = n_{SRS}^{cs,max}, \text{ and } K = 1.$$

When 'cyclicShiftHoppingSubset' is not configured and 'cyclicShiftHoppingFinerGranularity' is configured, $S(l) = l$, $\mathrm{Y} = K \cdot n_{SRS}^{cs,max}$, and $K$ is a value of the higher-layer parameter 'cyclicShiftHoppingFinerGranularity' configured by the network device or a preset value.

When 'cyclicShiftHoppingSubset' is configured,

$$S(l) = I_1(l, \varphi_b), \mathrm{Y} = N_{1,\varphi_b}, \text{ and } K = 1.$$

$n_{SRS}^{cs,i}$ may be calculated according to the following formula:

$$n_{SRS}^{cs,i} = \begin{cases} \left(n_{SRS}^{cs} + \frac{n_{SRS}^{cs,max} \lfloor (p_i - 1000)/2 \rfloor}{N_{ap}^{SRS}/2}\right) \bmod n_{SRS}^{cs,max} & \text{if } N_{ap}^{SRS} = 4 \text{ and } n_{SRS}^{cs,max} = 6 \\ \left(n_{SRS}^{cs} + \frac{n_{SRS}^{cs,max} (p_i - 1000)}{N_{ap}^{SRS}}\right) \bmod n_{SRS}^{cs,max} & \text{otherwise} \end{cases}.$$

'cyclicShiftHoppingSubset' and 'cyclicShiftHoppingFinerGranularity' are parameters configured by the network device.

Alternatively, on an ($n_{SRS}$)$^{th}$ SRS sending occasion, a CS corresponding to a port $p_i$ may be determined by using $\varphi_b$, and Q. On the ($n_{SRS}$)$^{th}$ SRS sending occasion, the CS corresponding to the port $p_i$ may be calculated according to the following formula:

$$\alpha_i = 2\pi \frac{n_{\text{SRS}}^{\text{cs},i}}{n_{\text{SRS}}^{\text{cs,max}}} + 2\pi \frac{n_{\text{SRS}}^{\text{cs,offset}}}{K n_{\text{SRS}}^{\text{cs,max}}},$$

where

$$n_{\text{SRS}}^{\text{cs,offset}} = S(f(n_{\text{SRS}}) \bmod Y).$$

When neither 'cyclicShiftHoppingSubset' nor 'cyclicShiftHoppingFinerGranularity' is configured,

$$S(l) = l, \text{Y} = n_{\text{SRS}}^{\text{cs,max}}, \text{ and } K = 1.$$

When 'cyclicShiftHoppingSubset' is not configured and 'cyclicShiftHoppingFinerGranularity' is configured, S($l$) = $l$, $\text{Y} = K \cdot n_{\text{SRS}}^{\text{cs,max}}$, and $K$ is a value of the higher-layer parameter 'cyclicShiftHoppingFinerGranularity' configured by the network device or a preset value.

When 'cyclicShiftHoppingSubset' is configured,

$$S(l) = \left(\left\lfloor \frac{l}{N_{1,\varphi_{b'}}} \right\rfloor \times \frac{n_{\text{SRS}}^{\text{cs,max}}}{Q} + I_1\left(l \bmod N_{1,\varphi_{b'}}, \varphi_{b'}\right)\right), \text{Y} = Q \times N_{1,\varphi_{b'}}, \text{ and } K = 1.$$

$n_{\text{SRS}}^{\text{cs},i}$ may be calculated according to the following formula:

$$n_{\text{SRS}}^{\text{cs},i} = \begin{cases} \left(n_{\text{SRS}}^{\text{cs}} + \frac{n_{\text{SRS}}^{\text{cs,max}} \lfloor (p_i - 1000)/2 \rfloor}{N_{\text{ap}}^{\text{SRS}}/2}\right) \bmod n_{\text{SRS}}^{\text{cs,max}} & \text{if } N_{\text{ap}}^{\text{SRS}} = 4 \text{ and } n_{\text{SRS}}^{\text{cs,max}} = 6 \\ \left(n_{\text{SRS}}^{\text{cs}} + \frac{n_{\text{SRS}}^{\text{cs,max}} (p_i - 1000)}{N_{\text{ap}}^{\text{SRS}}}\right) \bmod n_{\text{SRS}}^{\text{cs,max}} & \text{otherwise} \end{cases}.$$

A specific calculation manner of $n_{\text{SRS}}^{\text{cs},i}$ may not be limited to the foregoing formula. The specific calculation manner of $n_{\text{SRS}}^{\text{cs},i}$ is not limited in embodiments of this application.

Specific content in which the terminal device performs CO hopping is described below with reference to FIG. 11 and FIG. 12.

The terminal device receives indication information sent by the network device. The indication information indicates a CS and a CO corresponding to an allocated SRS resource. The indication information may be the first indication information in the method 700 or the second indication information in the method 800. The SRS resource includes one or more SRS ports, and each port corresponds to one CS value and one CO value. Based on an NR protocol, the network device indicates a comb number $K_{\text{TC}}$ and determines a maximum quantity $n_{\text{SRS}}^{\text{cs,max}}$ of CSs based on the comb number $K_{\text{TC}}$. The network device further indicates a CS value $n_{\text{SRS}}^{\text{cs}} \in \{0,1, \ldots, n_{\text{SRS}}^{\text{cs,max}} - 1\}$ and a CO value $\bar{k}_{\text{TC}} \in \{0,1, \ldots, K_{\text{TC}} - 1\}$ that correspond to the SRS resource. Based on the indication information, the CS value and the CO value that respectively correspond to the one or more ports corresponding to the SRS resource are calculated according to Formula (1) and Formula (2).

As shown in FIG. 11, it is assumed that configuration information that is of a target SRS resource and that is indicated by the network device to the terminal device is $N_{\text{ap}}^{\text{SRS}} = 4$, $K_{\text{TC}} = 8$, $n_{\text{SRS}}^{\text{cs,max}} = 6$, $n_{\text{SRS}}^{\text{cs}} = 0$, and $\bar{k}_{\text{TC}} = 0$. It indicates that the SRS resource includes four ports (ports 0 to 3), a port 0 and a port 1 correspond to a CS 0, a port 2 and a port 3 correspond to a CS 3, the port 0 and the port 2 correspond to a CO 0, and the port 1 and the port 3 correspond to a CO 4. It is assumed that configuration information that is of a target SRS resource and that is indicated by the network device to the terminal device is $K_{\text{TC}} = 8$, $n_{\text{SRS}}^{\text{cs,max}} = 6$, $n_{\text{SRS}}^{\text{cs}} = 0$, and $\bar{k}_{\text{TC}} = 3$. It indicates that the SRS resource includes four ports (ports 0 to 3), a port 0 and a port 1 correspond to a CS 0, a port 2 and a port 3 correspond to a CS 3, the port 0 and the port 2 correspond to a CO 3, and the port 1 and the port 3 correspond to a CO 7.

After CO hopping is enabled, each port of the target SRS resource one to one corresponds to one CO value region in which CO hopping can be performed or one CO value region in which CO hopping cannot be performed. A quantity of CO values included in the CO value region in which CO hopping can be performed or the CO value region in which CO hopping cannot be performed is referred to as a region length $L_3$ in which CO hopping can be performed or a region length $L_4$ in which CO hopping cannot be performed. Specifically, the CO value region in which CO hopping can be performed or the CO value region in which CO hopping cannot be performed is equivalent. In other words, a union set of a CO value set in which CO hopping can be performed and a CO value set in which CO hopping cannot be performed is {0,1, ..., $K_{TC}$ - 1}. $L_3 + L_4 = K_{TC}$. An example of the CO value region in which CO hopping can be performed is used for description in the following embodiments.

The CO bias value set is determined by using a bitmap (where the bitmap is denoted as $\varphi_b$, and a length of the bitmap is a quantity of bits included in the bitmap). Specifically, an index of a bit 1 (or a bit 0) in the bitmap represents an available CO bias value. In this case, the CS bias value set corresponding to the target SRS resource is a set $\{I_1(0, \varphi_b), I_1(1, \varphi_b), ..., I_1(F(1, \varphi_b) - 1, \varphi_b)\}$ or $\{I_0(0, \varphi_b), I_0(1, \varphi_b), ..., I_0(F(0, \varphi_b) - 1, \varphi_b)\}$ including available CS biases indicated in the bitmap.

$I_m(n, \varphi_b)$ represents an index of an n<sup>th</sup> element whose value is m in $\varphi_b$, and $F(x, \varphi_b)$ represents a quantity of elements whose values are x in $\varphi_b$. N is a length of $\varphi_b$, that is, a quantity of elements in $\varphi_b$, and N is a positive integer less than or equal to $K_{TC}$. A function $F(1, \varphi_b)$ may be represented as $F(1, \varphi_b) = \sum_{n=0}^{N-1} \varphi_{b,n}$, where $\varphi_{b,n}$ represents an n<sup>th</sup> element in $\varphi_b$, A function $F(0, \varphi_b)$ may be represented as $F(0, \varphi_b) = N - \sum_{n=0}^{N-1} \varphi_{b,n}$. Alternatively, $F(x, \varphi_b)$ may be replaced with a symbol $N_{x,\varphi b}$, where $N_{x,\varphi b}$ represents a quantity of elements whose values are x in $\varphi_b$.

For example, if $\varphi_b$ = 11101110, $N$ = 8, $F(1, \varphi_b) = 6$, $I_1(0, \varphi_b) = 0$, $I_1(1, \varphi_b) = 1$, $I_1(2, \varphi_b) = 2$, $I_1(3, \varphi_b) = 4$, $I_1(4, \varphi_b) = 5$, and $I_1(5, \varphi_b) = 6$. In this case, the CO bias value set is CO={0, 1, 2, 4, 5, 6}. If the network device configures $n_{\text{comb}}^{\text{start,i}} = 0$ and $K_{TC}$ = 8, a region set in which CO hopping can be performed is CO={0, 1, 2, 4, 5, 6}. If the network device configures $n_{\text{CS}}^{\text{start,i}} = 4$ and $K_{TC}$ = 12, a region set in which CO hopping can be performed is CO={4, 5, 6, 0, 1, 2}. $\varphi_b$ may be the first bitmap in the method 800, $n_{\text{comb}}^{\text{start,i}}$ a may be the initial comb offset value in the method 800, and the CO bias value set may be the first comb offset bias set in the method 800.

In a possible implementation, all the ports of the target SRS resource may correspond to different $n_{\text{comb}}^{\text{start,i}}$.

In a possible implementation, $n_{\text{comb}}^{\text{start,i}}$ corresponding to each port of the target SRS resource is preset as an initial cyclic shift $k_{\text{TC}}^{(p_i)}$ of the port.

In a possible implementation, each port of the target SRS resource corresponds to a same bitmap.

The network device may configure a CS bias value set for the target SRS resource, where the CS bias value set includes at least two optional CS bias values, and one of the CS bias values is 0. The following configuration manners may be included.

Manner 1: The network device sends indication information, where the indication information indicates a bitmap whose length is $K_{TC}$.

For example, as shown in FIG. 12, if the network device configures $N_{\text{ap}}^{\text{SRS}} = 4$, $K_{TC}$ = 8, $n_{\text{SRS}}^{\text{cs,max}} = 6, n_{\text{SRS}}^{\text{cs}} = 0$, $\bar{k}_{TC}$ = 0, and $\varphi_b$ = 11101110, the CO bias value set is CO={0, 1, 2, 4, 5, 6}. If $n_{\text{CS}}^{\text{start,i}}$ corresponding to ports 0, 1, 2, and 3 of an SRS resource corresponding to the target terminal device are sequentially 0, 4, 0, and 4, region sets in which CO hopping can be performed and that correspond to all the ports are sequentially CO={0, 1, 2, 4, 5, 6}, CO={4, 5, 6, 0, 1, 2}, CO={0, 1, 2, 4, 5, 6}, and CO={4, 5, 6, 0, 1, 2}.

On an ($n_{SRS}$)<sup>th</sup> SRS sending occasion, a CS corresponding to a port $p_i$ may be calculated according to the following formula:

$$\bar{k}_0^{(p_i)} = n_{\text{shift}} N_{\text{sc}}^{\text{RB}} + \left(k_{\text{TC}}^{(p_i)} + n_{\text{SRS}}^{\text{comb,offset}} + k_{\text{offset}}^{l'}\right) \bmod K_{\text{TC}},$$

where

$$n_{\text{SRS}}^{\text{comb,offset}} = S(f(n_{\text{SRS}}) \text{mod} \text{Y}).$$

When 'combOffsetHoppingSubset' is not configured,

$$S(l) = l, and\ Y = K_{TC}.$$

When 'combOffsetHoppingSubset' is configured,

$$S(l) = I_1(l, \varphi_b), \text{ and } Y = N_{1,\varphi_b}.$$

'combOffsetHoppingSubset' is a parameter configured by the network device and is a switch indicating whether a CO hopping subset is enabled.

Manner 2: The network device sends indication information, where the indication information indicates a bitmap whose length is $K_{TC}$ - 1, which is denoted as $\varphi_{b'}$, $\varphi_b$ is determined based on $\varphi_{b'}$, and $\varphi_b$ is obtained by adding 1 to a leftmost side in $\varphi_{b'}$. For example, if $\varphi_{b'}$ = 011, $\varphi_b$ is 1011, where $\varphi_{b'}$ may be the second bitmap in the method 800.

When an index of an element 1 in the bitmap represents an available CO bias, a most significant bit in $\varphi_b$ is definitely 1 (a left side in the bitmap is a high-order bit, and a right side is a low bit). In other words, a $0^{th}$ bit in $\varphi_b$ is definitely 1 (a leftmost bit in the bitmap is a $1^{st}$ bit, for example, if bitmap=10, the $0^{th}$ bit is 1, and the $1^{st}$ bit is 0). Alternatively, when an index of an element 0 in the bitmap represents an available CO bias, a most significant bit in $\varphi_b$ is definitely 0, or a $0^{th}$ bit in $\varphi_b$ is definitely 0.

For example, as shown in FIG. 12, if the network device configures $N_{\text{ap}}^{\text{SRS}} = 4$, $K_{TC}$ = 8, $n_{\text{SRS}}^{\text{cs,max}} = 6$, $n_{\text{SRS}}^{\text{cs}} = 0$, $\bar{k}_{TC}$ = 0, and $\varphi_{b'}$ = 1101110, $\varphi_b$ = 11101110 may be determined based on $\varphi_{b'}$, and the CO bias value set is CO={0, 1, 2, 4, 5, 6}. If $n_{\text{CS}}^{\text{start,i}}$ corresponding to ports 0, 1, 2, and 3 of an SRS resource corresponding to the target terminal device are sequentially 0, 4, 0, and 4, region sets in which CO hopping can be performed and that correspond to all the ports are sequentially CO={0, 1, 2, 4, 5, 6}, CO={4, 5, 6, 0, 1, 2}, CO={0, 1, 2, 4, 5, 6}, and CO={4, 5, 6, 0, 1, 2}.

After CO hopping is enabled in the SRS resource configuration, on an $(n_{SRS})^{th}$ SRS sending occasion, a CS corresponding to a port $p_i$ may be calculated according to the following formula:

$$\bar{k}_0^{(p_i)} = n_{\text{shift}} N_{\text{sc}}^{\text{RB}} + \left(k_{\text{TC}}^{(p_i)} + n_{\text{SRS}}^{\text{comb,offset}} + k_{\text{offset}}^{l'}\right) \bmod K_{\text{TC}},$$

where

$$n_{\text{SRS}}^{\text{comb,offset}} = S(f(n_{\text{SRS}})\text{mod}\text{Y}).$$

When 'combOffsetHoppingSubset' is not configured,

$$S(l) = l, and\ Y = K_{TC}.$$

When 'combOffsetHoppingSubset' is configured,

$$S(l) = I_1(l, \varphi_b), \text{ and } Y = N_{1,\varphi_b}.$$

'combOffsetHoppingSubset' is a parameter configured by the network device and is a switch indicating whether a CO hopping subset is enabled.

Manner 3: The network device sends indication information, where the indication information indicates a bitmap whose length is $K_{TC}$/Q, which is denoted as $\varphi_{b'}$, and $\varphi_b$ is determined based on $\varphi_{b'}$, where $\varphi_{b'}$ may be the third bitmap in the method 800.

There are two possible manners of determining $\varphi_b$ based on $\varphi_{b'}$. In one manner, $\varphi_b$ is obtained by performing Q times of periodic extension on $\varphi_{b'}$, for example, Q = 2, $\varphi_{b'}$ = 110, and $\varphi_b$ = 110110. In the other manner, $\varphi_b$ is obtained by padding $\varphi_{b'}$ with 0 to a length $n_{\text{SRS}}^{\text{cs,max}}$, for example, Q = 2, $\varphi_{b'}$ = 110, $n_{\text{SRS}}^{\text{cs,max}} = 6$, and $\varphi_b$ = 110000.

Q may be indicated, may be preset, or may be determined according to some rules. The following are several manners of determining Q according to the rules.

Manner 3.1: Q may be determined based on a quantity $\mathrm{N}_{\mathrm{ap,cs}}^{\mathrm{SRS}}$ of ports that occupy a same CS in the SRS resource, and $Q = \mathrm{N}_{\mathrm{ap,cs}}^{\mathrm{SRS}}$, where

$$N_{\mathrm{ap,cs}}^{\mathrm{SRS}} = \begin{cases} 4, \text{if } N_{\mathrm{ap}}^{\mathrm{SRS}} = 8 \text{ and } K_{TC} = 8 \\ 2, \text{if } N_{\mathrm{ap}}^{\mathrm{SRS}} = 8 \text{ and } K_{TC} = 4; \text{ or if } N_{\mathrm{ap}}^{\mathrm{SRS}} = 4 \text{ and } K_{TC} = 8 \\ 1, \text{otherwise} \end{cases}.$$

A periodic extension manner is used as an example for description. As shown in FIG. 12, if the network device configures $N_{\mathrm{ap}}^{\mathrm{SRS}} = 4$, $K_{\mathrm{TC}} = 8$, $n_{\mathrm{SRS}}^{\mathrm{cs,max}} = 6$, $n_{\mathrm{SRS}}^{\mathrm{cs}} = 0$, $\bar{k}_{\mathrm{TC}} = 0$, and $\varphi_{b'} = 1110$, $\mathrm{N}_{\mathrm{ap,cs}}^{\mathrm{SRS}} = 2$, that is $Q = 2$ may be determined according to the foregoing formula, $\varphi_b = 11101110$ may be determined based on $\varphi_{b'}$, and the CO bias value set is CO={0, 1, 2, 4, 5, 6}. If $n_{\mathrm{CS}}^{\mathrm{start,i}}$ corresponding to ports 0, 1, 2, and 3 of an SRS resource corresponding to the target terminal device are sequentially 0, 4, 0, and 4, region sets in which CO hopping can be performed and that correspond to all the ports are sequentially CO={0, 1, 2, 4, 5, 6}, CO={4, 5, 6, 0, 1, 2}, CO={0, 1, 2, 4, 5, 6}, and CO={4, 5, 6, 0, 1, 2}.

On an $(n_{\mathrm{SRS}})^{\mathrm{th}}$ SRS sending occasion, a CO corresponding to a port $p_i$ may be calculated according to the following formula:

$$\bar{k}_0^{(p_i)} = n_{\mathrm{shift}} N_{\mathrm{sc}}^{\mathrm{RB}} + \left(k_{\mathrm{TC}}^{(p_i)} + n_{\mathrm{SRS}}^{\mathrm{comb,offset}} + k_{\mathrm{offset}}^{l'}\right) \bmod K_{\mathrm{TC}},$$

where

$$n_{\mathrm{SRS}}^{\mathrm{comb,offset}} = S(f(n_{\mathrm{SRS}}) \bmod Y).$$

When 'combOffsetHoppingSubset' is not configured,

$$\mathrm{S}(l) = l, \text{ and } \mathrm{Y} = K_{\mathrm{TC}}.$$

When 'combOffsetHoppingSubset' is configured,

$$\mathrm{S}(l) = I_1(l, \varphi_b), \text{ and } \mathrm{Y} = N_{1,\varphi_b}.$$

'combOffsetHoppingSubset' is a parameter configured by the network device and is a switch indicating whether a CO hopping subset is enabled.

Alternatively, on an $(n_{\mathrm{SRS}})^{\mathrm{th}}$ SRS sending occasion, a CO corresponding to a port $p_i$ may be determined by using $\varphi_{b'}$ and Q. On the $(n_{\mathrm{SRS}})^{\mathrm{th}}$ SRS sending occasion, the CO corresponding to the port $p_i$ may be calculated according to the following formula:

$$\bar{k}_0^{(p_i)} = n_{\mathrm{shift}} N_{\mathrm{sc}}^{\mathrm{RB}} + \left(k_{\mathrm{TC}}^{(p_i)} + n_{\mathrm{SRS}}^{\mathrm{comb,offset}} + k_{\mathrm{offset}}^{l'}\right) \bmod K_{\mathrm{TC}},$$

where

$$n_{\mathrm{SRS}}^{\mathrm{comb,offset}} = S(f(n_{\mathrm{SRS}}) \bmod Y).$$

When 'combOffsetHoppingSubset' is configured,

$$\mathrm{S}(l) = I_1(l, \varphi_b), \text{ and } \mathrm{Y} = N_{1,\varphi_b}.$$

When 'combOffsetHoppingSubset' is not configured,

$$S(l)=\left(\left\lfloor\frac{l}{N_{1,\varphi_{b`}}}\right\rfloor\times\frac{K_{TC}}{Q}+I_1\left(l\bmod N_{1,\varphi_{b`}},\varphi_{b`}\right)\right),\text{ and }Y=Q\times N_{1,\varphi_{b`}}.$$

'combOffsetHoppingSubset' is a parameter configured by the network device and is a switch indicating whether a CO hopping subset is enabled.

Manner 3.2: Q may be determined based on a quantity $N_{ap,cs}^{SRS}$ of ports that occupy a same CS in the SRS resource, and $Q=MAX(N_{ap,cs}^{SRS},2)$, where

$$N_{ap,cs}^{SRS}=\begin{cases}4,\text{ if }N_{ap}^{SRS}=8\text{ and }K_{TC}=8\\2,\text{ if }N_{ap}^{SRS}=8\text{ and }K_{TC}=4;\text{ or if }N_{ap}^{SRS}=4\text{ and }K_{TC}=8\\1,\text{ otherwise}\end{cases}$$

A periodic extension manner is used as an example for description. As shown in FIG. 12, if the network device configures $N_{ap}^{SRS}=4$, $K_{TC}=8$, $n_{SRS}^{cs,max}=6$, $n_{SRS}^{cs}=0$, $\bar{k}_{TC}=0$, and $\varphi_{b'}=1110$, $N_{ap,cs}^{SRS}=2$, that is, $Q=2$ may be determined according to the foregoing formula, $\varphi_b$ = 11101110 may be determined based on $\varphi_{b'}$, and the CO bias value set is CO={0, 1, 2, 4, 5, 6}. If $n_{CS}^{start,i}$ corresponding to ports 0, 1, 2, and 3 of an SRS resource corresponding to the target terminal device are sequentially 0, 4, 0, and 4, region sets in which CO hopping can be performed and that correspond to all the ports are sequentially CO={0, 1, 2, 4, 5, 6}, CO={4, 5, 6, 0, 1, 2}, CO={0, 1, 2, 4, 5, 6}, and CO={4, 5, 6, 0, 1, 2}.

On an ( $n_{SRS}$ )th SRS sending occasion, a CO corresponding to a port $p_i$ may be calculated according to the following formula:

$$\bar{k}_0^{(p_i)}=n_{shift}N_{sc}^{RB}+\left(k_{TC}^{(p_i)}+n_{SRS}^{comb,offset}+k_{offset}^{l'}\right)\bmod K_{TC},$$

where

$$n_{SRS}^{comb,offset}=S(f(n_{SRS})\bmod Y).$$

When 'combOffsetHoppingSubset' is not configured,

$$S(l)=l,\text{ and }Y=K_{TC}.$$

When 'combOffsetHoppingSubset' is configured,

$$S(l)=I_1(l,\varphi_b),\text{ and }Y=N_{1,\varphi_b}.$$

'combOffsetHoppingSubset' is a parameter configured by the network device and is a switch indicating whether a CO hopping subset is enabled.

Alternatively, on an ($n_{SRS}$)th SRS sending occasion, a CO corresponding to a port $p_i$ may be determined by using $\varphi_{b'}$ and Q. On the ( $n_{SRS}$ )th SRS sending occasion, the CO corresponding to the port $p_i$ may be calculated according to the following formula:

$$\bar{k}_0^{(p_i)}=n_{shift}N_{sc}^{RB}+\left(k_{TC}^{(p_i)}+n_{SRS}^{comb,offset}+k_{offset}^{l'}\right)\bmod K_{TC},$$

where

$$n_{SRS}^{comb,offset}=S(f(n_{SRS})\bmod Y).$$

When 'combOffsetHoppingSubset' is configured,

$$S(l) = I_1(l, \varphi_b), \text{ and } Y = N_{1,\varphi_b}.$$

When 'combOffsetHoppingSubset' is not configured,

$$S(l) = \left(\left\lfloor \frac{l}{N_{1,\varphi_{b`}}} \right\rfloor \times \frac{K_{TC}}{Q} + I_1\left(l \bmod N_{1,\varphi_{b`}}, \varphi_{b`}\right)\right), \text{ and } Y = Q \times N_{1,\varphi_{b`}}.$$

'combOffsetHoppingSubset' is a parameter configured by the network device and is a switch indicating whether a CO hopping subset is enabled.

Manner 3.3: Q may be determined based on a quantity $N_{\text{ap,diffcomb}}^{\text{SRS}}$ of ports that occupy different combs in the SRS resource, and $Q = N_{\text{ap,diffcomb}}^{\text{SRS}}$, where

$$N_{\text{ap,diffcomb}}^{\text{SRS}} = \begin{cases} 4, \text{if } N_{\text{ap}}^{\text{SRS}} = 8 \text{ and } K_{\text{TC}} = 8 \\ 2, \text{if } N_{\text{ap}}^{\text{SRS}} = 8 \text{ and } K_{\text{TC}} = 4; \text{ or } N_{\text{ap}}^{\text{SRS}} = 4 \text{ and } K_{\text{TC}} = 8; \text{ or } N_{\text{ap}}^{\text{SRS}} = 4, K_{\text{TC}} = 4 \text{ and } n_{\text{SRS}}^{\text{cs}} \geq n_{\text{SRS}}^{\text{cs,max}}/2; \\ \qquad \text{or } N_{\text{ap}}^{\text{SRS}} = 4, K_{\text{TC}} = 2 \text{ and } n_{\text{SRS}}^{\text{cs}} \geq n_{\text{SRS}}^{\text{cs,max}}/2 \\ 1, \text{otherwise} \end{cases}.$$

A periodic extension manner is used as an example for description. As shown in FIG. 12, if the network device configures $N_{\text{ap}}^{\text{SRS}} = 4$, $K_{\text{TC}} = 8$, $n_{\text{SRS}}^{\text{cs,max}} = 6$, $n_{\text{SRS}}^{\text{cs}} = 0$, $\bar{k}_{\text{TC}} = 0$, and $\varphi_{b'} = 1110$, $N_{\text{ap,diffcomb}}^{\text{SRS}} = 2$, that is, Q = 2 may be determined according to the foregoing formula, $\varphi_b = 11101110$ may be determined based on $\varphi_{b'}$, and the CO bias value set is CO={0, 1, 2, 4, 5, 6}. If $n_{\text{CS}}^{\text{start,i}}$ corresponding to ports 0, 1, 2, and 3 corresponding to the target terminal device are sequentially 0, 4, 0, and 4, region sets in which CO hopping can be performed and that correspond to all the ports are sequentially CO={0, 1, 2, 4, 5, 6}, CO={4, 5, 6, 0, 1, 2}, CO={0, 1, 2, 4, 5, 6}, and CO={4, 5, 6, 0, 1, 2}.

On an $(n_{\text{SRS}})^{\text{th}}$ SRS sending occasion, a CO corresponding to a port $p_i$ may be calculated according to the following formula:

$$\bar{k}_0^{(p_i)} = n_{\text{shift}} N_{\text{sc}}^{\text{RB}} + \left(k_{\text{TC}}^{(p_i)} + n_{\text{SRS}}^{\text{comb,offset}} + k_{\text{offset}}^{l'}\right) \bmod K_{\text{TC}},$$

where

$$n_{\text{SRS}}^{\text{comb,offset}} = S(f(n_{\text{SRS}}) \bmod Y).$$

When 'combOffsetHoppingSubset' is not configured,

$$S(l) = l, \text{ and } Y = K_{\text{TC}}.$$

When 'combOffsetHoppingSubset' is configured,

$$S(l) = I_1(l, \varphi_b), \text{ and } Y = N_{1,\varphi_b}.$$

'combOffsetHoppingSubset' is a parameter configured by the network device and is a switch indicating whether a CO hopping subset is enabled.

Alternatively, on an $(n_{\text{SRS}})^{\text{th}}$ SRS sending occasion, a CO corresponding to a port $p_i$ may be determined by using $\varphi_{b'}$ and Q. On the $(n_{\text{SRS}})^{\text{th}}$ SRS sending occasion, the CO corresponding to the port $p_i$ may be calculated according to the following formula:

$$\bar{k}_0^{(p_i)} = n_{\text{shift}} N_{\text{sc}}^{\text{RB}} + \left(k_{\text{TC}}^{(p_i)} + n_{\text{SRS}}^{\text{comb,offset}} + k_{\text{offset}}^{l'}\right) \bmod K_{\text{TC}},$$

where

$$n_{\text{SRS}}^{\text{comb,offset}} = S(f(n_{\text{SRS}}) \bmod Y).$$

When 'combOffsetHoppingSubset' is configured,

$$\text{S}(l) = I_1(l, \varphi_b), \text{ and } \text{Y} = N_{1,\varphi_b}.$$

When 'combOffsetHoppingSubset' is not configured,

$$\text{S}(l) = \left(\left\lfloor \frac{l}{N_{1,\varphi_{b'}}} \right\rfloor \times \frac{K_{\text{TC}}}{Q} + I_1\left(l \bmod N_{1,\varphi_{b'}}, \varphi_{b'}\right)\right), \text{ and } \text{Y} = Q \times N_{1,\varphi_{b'}}.$$

'combOffsetHoppingSubset' is a parameter configured by the network device and is a switch indicating whether a CO hopping subset is enabled.

Manner 3.4: Q may be determined based on a quantity $\text{N}_{\text{ap,diffcomb}}^{\text{SRS}}$ of ports that occupy different combs in the SRS resource, and $Q = \text{MAX}(\text{N}_{\text{ap,diffcomb}}^{\text{SRS}}, 2)$, where

$$N_{\text{ap,diffcomb}}^{\text{SRS}} = \begin{cases} 4, \text{if } N_{\text{ap}}^{\text{SRS}} = 8 \text{ and } K_{\text{TC}} = 8 \\ 2, \text{if } N_{\text{ap}}^{\text{SRS}} = 8 \text{ and } K_{\text{TC}} = 4;\ \text{or } N_{\text{ap}}^{\text{SRS}} = 4 \text{ and } K_{\text{TC}} = 8;\ \text{or } N_{\text{ap}}^{\text{SRS}} = 4, K_{\text{TC}} = 4 \text{ and } n_{\text{SRS}}^{\text{cs}} \geq n_{\text{SRS}}^{\text{cs,max}}/2; \\ \quad \text{or } N_{\text{ap}}^{\text{SRS}} = 4, K_{\text{TC}} = 2 \text{ and } n_{\text{SRS}}^{\text{cs}} \geq n_{\text{SRS}}^{\text{cs,max}}/2 \\ 1, \text{otherwise} \end{cases}.$$

A periodic extension manner is used as an example for description. As shown in FIG. 12, if the network device configures $N_{\text{ap}}^{\text{SRS}} = 4$, $K_{\text{TC}} = 8$, $n_{\text{SRS}}^{\text{cs,max}} = 6$, $n_{\text{SRS}}^{\text{cs}} = 0$, $\bar{k}_{\text{TC}} = 0$, and $\varphi_{b'} = 1110$, $N_{\text{ap,diffcomb}}^{\text{SRS}} = 2$, that is, Q = 2 may be determined according to the foregoing formula, $\varphi_b$ = 11101110 may be determined based on $\varphi_{b'}$, and the CO bias value set is CO={0, 1, 2, 4, 5, 6}. If $n_{\text{CS}}^{\text{start,i}}$ corresponding to ports 0, 1, 2, and 3 corresponding to the target terminal device are sequentially 0, 4, 0, and 4, region sets in which CO hopping can be performed and that correspond to all the ports are sequentially CO={0, 1, 2, 4, 5, 6}, CO={4, 5, 6, 0, 1, 2}, CO={0, 1, 2, 4, 5, 6}, and CO={4, 5, 6, 0, 1, 2}.

On an $(n_{\text{SRS}})^{\text{th}}$ SRS sending occasion, a CO corresponding to a port $p_i$ may be calculated according to the following formula:

$$\bar{k}_0^{(p_i)} = n_{\text{shift}} N_{\text{sc}}^{\text{RB}} + \left(k_{\text{TC}}^{(p_i)} + n_{\text{SRS}}^{\text{comb,offset}} + k_{\text{offset}}^{l'}\right) \bmod K_{\text{TC}},$$

where

$$n_{\text{SRS}}^{\text{comb,offset}} = S(f(n_{\text{SRS}}) \bmod Y).$$

When 'combOffsetHoppingSubset' is not configured,

$$\text{S}(l) = l, \text{ and } \text{Y} = K_{\text{TC}}.$$

When 'combOffsetHoppingSubset' is configured,

$$S(l) = I_1(l, \varphi_b), \text{ and } Y = N_{1,\varphi_b}.$$

'combOffsetHoppingSubset' is a parameter configured by the network device and is a switch indicating whether a CO hopping subset is enabled.

Alternatively, on an $(n_{SRS})^{th}$ SRS sending occasion, a CO corresponding to a port $p_i$ may be determined by using $\varphi_{b'}$ and Q. On the $(n_{SRS})^{th}$ SRS sending occasion, the CO corresponding to the port $p_i$ may be calculated according to the following formula:

$$\bar{k}_0^{(p_i)} = n_{\text{shift}} N_{\text{sc}}^{\text{RB}} + \left(k_{\text{TC}}^{(p_i)} + n_{\text{SRS}}^{\text{comb,offset}} + k_{\text{offset}}^{l'}\right) \bmod K_{\text{TC}},$$

where

$$n_{\text{SRS}}^{\text{comb,offset}} = S(f(n_{\text{SRS}}) \text{mod} Y).$$

When 'combOffsetHoppingSubset' is configured,

$$S(l) = I_1(l, \varphi_b), \text{ and } Y = N_{1,\varphi_b}.$$

When 'combOffsetHoppingSubset' is not configured,

$$S(l) = \left(\left\lfloor \frac{l}{N_{1,\varphi_{b'}}} \right\rfloor \times \frac{K_{\text{TC}}}{Q} + I_1\left(l \text{mod} N_{1,\varphi_{b'}}, \varphi_{b'}\right)\right), \text{ and } Y = Q \times N_{1,\varphi_{b'}}.$$

'combOffsetHoppingSubset' is a parameter configured by the network device and is a switch indicating whether a CO hopping subset is enabled.

Manner 3.5: Q may be determined based on $K_{TC}$, and $Q = \begin{cases} 4, \text{if } K_{TC} = 8 \\ 2, \text{otherwise} \end{cases}$.

A periodic extension manner is used as an example for description. As shown in FIG. 12, if the network device configures $N_{\text{ap}}^{\text{SRS}} = 4$, $K_{TC} = 8$, $n_{\text{SRS}}^{\text{cs,max}} = 6$, $n_{\text{SRS}}^{\text{cs}} = 0$, $\bar{k}_{TC} = 0$, and $\varphi_{b'} = 1110$, $Q = 2$ may be determined according to the foregoing formula, $\varphi_b = 11101110$ may be determined based on $\varphi_{b'}$, and the CO bias value set is CO={0, 1, 2, 4, 5, 6}. If $n_{\text{CS}}^{\text{start,i}}$ corresponding to ports 0, 1, 2, and 3 of an SRS resource corresponding to the target terminal device are sequentially 0, 4, 0, and 4, region sets in which CO hopping can be performed and that correspond to all the ports are sequentially CO={0, 1, 2, 4, 5, 6}, CO={4, 5, 6, 0, 1, 2}, CO={0, 1, 2, 4, 5, 6}, and CO={4, 5, 6, 0, 1, 2}.

On an $(n_{SRS})^{th}$ SRS sending occasion, a CO corresponding to a port $p_i$ may be calculated according to the following formula:

$$\bar{k}_0^{(p_i)} = n_{\text{shift}} N_{\text{sc}}^{\text{RB}} + \left(k_{\text{TC}}^{(p_i)} + n_{\text{SRS}}^{\text{comb,offset}} + k_{\text{offset}}^{l'}\right) \bmod K_{\text{TC}},$$

where

$$n_{\text{SRS}}^{\text{comb,offset}} = S(f(n_{\text{SRS}}) \text{mod} Y).$$

When 'combOffsetHoppingSubset' is not configured,

$$S(l) = l, \text{ and } Y = K_{\text{TC}}.$$

When 'combOffsetHoppingSubset' is configured,

$$S(l) = I_1(l, \varphi_b), \text{ and } Y = N_{1,\varphi_b}.$$

'combOffsetHoppingSubset' is a parameter configured by the network device and is a switch indicating whether a CO hopping subset is enabled.

Alternatively, on an $(n_{SRS})^{th}$ SRS sending occasion, a CO corresponding to a port $p_i$ may be determined by using $\varphi_{b'}$ and Q. On the $(n_{SRS})^{th}$ SRS sending occasion, the CO corresponding to the port $p_i$ may be calculated according to the following formula:

$$\bar{k}_0^{(p_i)} = n_{\text{shift}} N_{\text{sc}}^{\text{RB}} + \left(k_{\text{TC}}^{(p_i)} + n_{\text{SRS}}^{\text{comb,offset}} + k_{\text{offset}}^{l'}\right) \bmod K_{\text{TC}}$$

, where

$$n_{\text{SRS}}^{\text{comb,offset}} = S(f(n_{\text{SRS}}) \text{mod} Y).$$

When 'combOffsetHoppingSubset' is configured,

$$S(l) = I_1(l, \varphi_b), \text{ and } Y = N_{1,\varphi_b}.$$

When 'combOffsetHoppingSubset' is not configured,

$$S(l) = \left(\left\lfloor \frac{l}{N_{1,\varphi_{b'}}} \right\rfloor \times \frac{K_{\text{TC}}}{Q} + I_1\left(l \text{mod} N_{1,\varphi_{b'}}, \varphi_{b'}\right)\right), \text{ and } Y = Q \times N_{1,\varphi_{b'}}.$$

'combOffsetHoppingSubset' is a parameter configured by the network device and is a switch indicating whether a CO hopping subset is enabled.

Manner 4: A bitmap is preset, and the network device indicates an index R of the bitmap to notify the bitmap, where the index R may be the index indicated by the network device in the method 800.

For example, the bitmap may be determined based on the following Table 3.

Table 3

| $K_{TC}$ | Q | R | Bitmap |
|---|---|---|---|
| 4 | 1 | 0 | 1110 |
| | | 1 | 1110 |
| | 2 | 2 | 1010 |
| | | 0 | 1010 |
| 8 | 1 or 2 | 0 | 11101110 |
| | | 1 | 11011101 |
| | | 2 | 11001100 |
| | 4 | 0 | 10101010 |

A periodic extension manner is used as an example for description. As shown in FIG. 12, if the network device configures $N_{\text{ap}}^{\text{SRS}} = 4$, $K_{TC} = 8$, $n_{\text{SRS}}^{\text{cs,max}} = 6$, $n_{\text{SRS}}^{\text{cs}} = 0$, $\bar{k}_{TC} = 0$, $\varphi_{b'}$ = 1110, Q = 2, and R=0, $\varphi_b$ = 11101110 may be determined based on Table 3, and the CO bias value set is CO={0, 1, 2, 4, 5, 6}. If $n_{\text{CS}}^{\text{start,i}}$ corresponding to ports 0, 1, 2, and 3 of an SRS resource corresponding to the target terminal device are sequentially 0, 4, 0, and 4, region sets in which CO hopping can be performed and that correspond to all the ports are sequentially CO={0, 1, 2, 4, 5, 6}, CO={4, 5, 6, 0, 1, 2}, CO={0, 1, 2, 4, 5, 6}, and CO={4, 5, 6, 0, 1, 2}.

On an $(n_{SRS})^{th}$ SRS sending occasion, a CO corresponding to a port $p_i$ may be calculated according to the following formula:

$$\bar{k}_0^{(p_i)} = n_{\text{shift}} N_{\text{sc}}^{\text{RB}} + \left(k_{\text{TC}}^{(p_i)} + n_{\text{SRS}}^{\text{comb,offset}} + k_{\text{offset}}^{l'}\right) \bmod K_{\text{TC}},$$

where

$$n_{\text{SRS}}^{\text{comb,offset}} = S(f(n_{\text{SRS}}) \text{mod} Y).$$

When 'combOffsetHoppingSubset' is not configured,

$$\text{S}(l) = l, \text{ and } \text{Y} = K_{\text{TC}}.$$

When 'combOffsetHoppingSubset' is configured,

$$\text{S}(l) = I_1(l, \varphi_b), \text{ and } \text{Y} = N_{1,\varphi_b}.$$

'combOffsetHoppingSubset' is a parameter configured by the network device and is a switch indicating whether a CO hopping subset is enabled.

Alternatively, on an $(n_{\text{SRS}})^{\text{th}}$ SRS sending occasion, a CO corresponding to a port $p_i$ may be determined by using $\varphi_{b'}$ and Q. On the $(n_{\text{SRS}})^{\text{th}}$ SRS sending occasion, the CO corresponding to the port $p_i$ may be calculated according to the following formula:

$$\bar{k}_0^{(p_i)} = n_{\text{shift}} N_{\text{sc}}^{\text{RB}} + \left(k_{\text{TC}}^{(p_i)} + n_{\text{SRS}}^{\text{comb,offset}} + k_{\text{offset}}^{l'}\right) \bmod K_{\text{TC}},$$

where

$$n_{\text{SRS}}^{\text{comb,offset}} = S(f(n_{\text{SRS}}) \text{mod} Y).$$

When 'combOffsetHoppingSubset' is configured,

$$\text{S}(l) = I_1(l, \varphi_b), \text{ and } \text{Y} = N_{1,\varphi_b}.$$

When 'combOffsetHoppingSubset' is not configured,

$$\text{S}(l) = \left(\left\lfloor \frac{l}{N_{1,\varphi_{b'}}} \right\rfloor \times \frac{K_{\text{TC}}}{Q} + I_1\left(l \text{mod} N_{1,\varphi_{b'}}, \varphi_{b'}\right)\right), \text{ and } \text{Y} = Q \times N_{1,\varphi_{b'}}.$$

'combOffsetHoppingSubset' is a parameter configured by the network device and is a switch indicating whether a CO hopping subset is enabled.

With reference to FIG. 13 and FIG. 14, the following describes an SRS resource allocation manner when an SRS resource includes eight ports.

When the SRS resource includes eight ports, in an implementation, the eight ports included in the SRS resource may be divided into two groups, and each group includes four ports. The two groups of ports are respectively mapped to different orthogonal frequency-division multiplexing (orthogonal frequency-division multiplexing, OFDM) symbols, and orthogonal multiplexing is performed on the two groups of ports by using time. For a port $p_i$ of the SRS resource, a CS $\alpha_i$ is defined as:

$$\alpha_i = 2\pi \frac{n_{\text{SRS}}^{\text{cs},i}}{n_{\text{SRS}}^{\text{cs,max}}},$$

where

$$n_{\mathrm{SRS}}^{\mathrm{cs},i} = \begin{cases} \left(n_{\mathrm{SRS}}^{\mathrm{cs}} + \frac{n_{\mathrm{SRS}}^{\mathrm{cs,max}} \lfloor (p_i - 1000)/2 \rfloor}{N_{\mathrm{ap}}^{\mathrm{SRS}}/2}\right) \bmod n_{\mathrm{SRS}}^{\mathrm{cs,max}} & \text{if } N_{\mathrm{ap}}^{\mathrm{SRS}} = 4 \text{ and } n_{\mathrm{SRS}}^{\mathrm{cs,max}} = 6 \\ \left(n_{\mathrm{SRS}}^{\mathrm{cs}} + \frac{n_{\mathrm{SRS}}^{\mathrm{cs,max}} (p_i - 1000)}{N_{\mathrm{ap}}^{\mathrm{SRS}}}\right) \bmod n_{\mathrm{SRS}}^{\mathrm{cs,max}} & \text{otherwise} \end{cases}.$$

For example, the network device configures, for the terminal device, a quantity of ports $N_{\mathrm{ap}}^{\mathrm{SRS}} = 8$, a comb number $K_{\mathrm{TC}} = 4$, a maximum CS value $n_{\mathrm{SRS}}^{\mathrm{cs,max}} = 12$, and a CS start position $n_{\mathrm{SRS}}^{\mathrm{cs}} = 0$ that correspond to the SRS resource, and the eight ports of the SRS resource correspond to port numbers $p_i$ = 1000, 1001, 1002, 1003, 1004, 1005, 1006, and 1007, CSs corresponding to the eight ports are respectively a CS 0, a CS 3, a CS 6, a CS 9, a CS 0, a CS 3, a CS 6, and a CS 9. If ports 1000, 1001, 1002, and 1003 are grouped into one group, ports 1004, 1005, 1006, and 1007 are grouped into one group, and the two groups of ports occupy different symbols, an allocation manner of the eight ports corresponding to the SRS resource may be shown in FIG. 13.

However, when ports 1000, 1001, 1004, and 1005 are grouped into one group, and ports 1002, 1003, 1006, and 1007 are grouped into one group, a resource allocation situation is shown in FIG. 13. Because a same resource is allocated to the port 1000 and the port 1004 (the port 1000 and the port 1004 have a same symbol, a same comb, and a same CS), a collision occurs. Because a same resource is allocated to the port 1001 and the port 1005 (the port 1001 and the port 1005 have a same symbol, a same comb, and a same CS), a collision occurs.

Therefore, when an SRS resource includes eight ports, and port groups are mapped to different symbols, a problem that a resource collision occurs when inconsecutive port numbers are allocated to a same group needs to be urgently resolved.

FIG. 15 shows another communication method according to an embodiment of this application. The communication method may include the following steps.

S1501: A terminal device receives third indication information sent by a network device.

S1502. The terminal device obtains, based on the third indication information, a port number corresponding to an $i^{\mathrm{th}}$ port in N ports corresponding to a sounding reference signal SRS resource.

N is a positive integer, i is less than or equal to N, and the N ports are divided into two groups and the two groups are respectively mapped to different OFDM symbols.

S1503: Determine, based on a cyclic shift reference index and the port number corresponding to the $i^{\mathrm{th}}$ port, a cyclic shift value corresponding to the $i^{\mathrm{th}}$ port; and determine, based on a comb offset value and the port number corresponding to the $i^{\mathrm{th}}$ port, a comb corresponding to the $i^{\mathrm{th}}$ port.

The cyclic shift value corresponding to the $i^{\mathrm{th}}$ port is different from a cyclic shift value corresponding to an $(i+4)^{\mathrm{th}}$ port.

A cyclic shift value $n_{\mathrm{SRS}}^{\mathrm{cs},i}$ of a port may be determined according to the following formula.

Optionally, the following formula may be applied when N=8 and a higher-layer parameter tdm is enabled:

$$n_{\mathrm{SRS}}^{\mathrm{cs},i} = \begin{cases} \left(n_{\mathrm{SRS}}^{\mathrm{cs}} + \frac{n_{\mathrm{SRS}}^{\mathrm{cs,max}} \lfloor ((p_i - 1000) + 2\lfloor (p_i - 1000)/4 \rfloor)/2 \rfloor}{N_{\mathrm{ap}}^{\mathrm{SRS}}/2}\right) \bmod n_{\mathrm{SRS}}^{\mathrm{cs,max}} & \text{if } N_{\mathrm{ap}}^{\mathrm{SRS}} = 8, \text{higher layer parameter } tdm \text{ is set to 'enabled' and } n_{\mathrm{SRS}}^{\mathrm{cs,max}} = 6 \\ \left(n_{\mathrm{SRS}}^{\mathrm{cs}} + \frac{n_{\mathrm{SRS}}^{\mathrm{cs,max}} ((p_i - 1000) + 2\lfloor (p_i - 1000)/4 \rfloor)}{N_{\mathrm{ap}}^{\mathrm{SRS}}}\right) \bmod n_{\mathrm{SRS}}^{\mathrm{cs,max}} & \text{if } N_{\mathrm{ap}}^{\mathrm{SRS}} = 8 \text{ and higher layer parameter } tdm \text{ is set to 'enabled' } and \ n_{\mathrm{SRS}}^{\mathrm{cs,max}} \neq 6 \end{cases},$$

or

$$n_{\mathrm{SRS}}^{\mathrm{cs},i} = \begin{cases} \left(n_{\mathrm{SRS}}^{\mathrm{cs}} + \frac{n_{\mathrm{SRS}}^{\mathrm{cs,max}} \lfloor ((p_i - 1000) - 2\lfloor (p_i - 1000)/4 \rfloor)/2 \rfloor}{N_{\mathrm{ap}}^{\mathrm{SRS}}/2}\right) \bmod n_{\mathrm{SRS}}^{\mathrm{cs,max}} & \text{if } N_{\mathrm{ap}}^{\mathrm{SRS}} = 8, \text{higher layer parameter } tdm \text{ is set to 'enabled' and } n_{\mathrm{SRS}}^{\mathrm{cs,max}} = 6 \\ \left(n_{\mathrm{SRS}}^{\mathrm{cs}} + \frac{n_{\mathrm{SRS}}^{\mathrm{cs,max}} ((p_i - 1000) - 2\lfloor (p_i - 1000)/4 \rfloor)}{N_{\mathrm{ap}}^{\mathrm{SRS}}}\right) \bmod n_{\mathrm{SRS}}^{\mathrm{cs,max}} & \text{if } N_{\mathrm{ap}}^{\mathrm{SRS}} = 8 \text{ and higher layer parameter } tdm \text{ is set to 'enabled' } and \ n_{\mathrm{SRS}}^{\mathrm{cs,max}} \neq 6 \end{cases}.$$

Alternatively, when a quantity of ports of the SRS resource is equal to 8, the higher-layer parameter tdm is set to be enabled, and a maximum cyclic shift value is 6, the cyclic shift value corresponding to the port i is determined according to the following formula:

$$n_{\mathrm{SRS}}^{\mathrm{cs},i} = \left(n_{\mathrm{SRS}}^{\mathrm{cs}} + \frac{n_{\mathrm{SRS}}^{\mathrm{cs,max}} \lfloor ((p_i - 1000) + 2\lfloor (p_i - 1000)/4 \rfloor)/2 \rfloor}{N_{\mathrm{ap}}^{\mathrm{SRS}}/2}\right) \bmod n_{\mathrm{SRS}}^{\mathrm{cs,max}}.$$

When a quantity of ports of the SRS resource is equal to 8, the higher-layer parameter tdm is set to be enabled, and a maximum cyclic shift value is not 6, the cyclic shift value corresponding to the port i is determined according to the following formula:

$$n_{\mathrm{SRS}}^{\mathrm{cs},i} = \left(n_{\mathrm{SRS}}^{\mathrm{cs}} + \frac{n_{\mathrm{SRS}}^{\mathrm{cs,max}}\left((p_i-1000)+2\lfloor(p_i-1000)/4\rfloor\right)}{N_{\mathrm{ap}}^{\mathrm{SRS}}}\right) \bmod n_{\mathrm{SRS}}^{\mathrm{cs,max}}.$$

Alternatively, when a quantity of ports of the SRS resource is equal to 8, the higher-layer parameter tdm is set to be enabled, and a maximum cyclic shift value is 6, the cyclic shift value corresponding to the port i is determined according to the following formula:

$$n_{\mathrm{SRS}}^{\mathrm{cs},i} = \left(n_{\mathrm{SRS}}^{\mathrm{cs}} + \frac{n_{\mathrm{SRS}}^{\mathrm{cs,max}}\left\lfloor\left((p_i-1000)-2\lfloor(p_i-1000)/4\rfloor\right)/2\right\rfloor}{N_{\mathrm{ap}}^{\mathrm{SRS}}/2}\right) \bmod n_{\mathrm{SRS}}^{\mathrm{cs,max}}.$$

When a quantity of ports of the SRS resource is equal to 8, the higher-layer parameter tdm is set to enable, and a maximum cyclic shift value is not 6, the cyclic shift value corresponding to the port i is determined according to the following formula:

$$n_{\mathrm{SRS}}^{\mathrm{cs},i} = \left(n_{\mathrm{SRS}}^{\mathrm{cs}} + \frac{n_{\mathrm{SRS}}^{\mathrm{cs,max}}\left((p_i-1000)-2\lfloor(p_i-1000)/4\rfloor\right)}{N_{\mathrm{ap}}^{\mathrm{SRS}}}\right) \bmod n_{\mathrm{SRS}}^{\mathrm{cs,max}}.$$

A comb offset value $k_{\mathrm{TC}}^{(p_i)}$ corresponding to a port is determined according to the following formula:

$$k_{\mathrm{TC}}^{(p_i)} = \begin{cases} \left(\bar{k}_{\mathrm{TC}} + K_{\mathrm{TC}}/2\right) \bmod K_{\mathrm{TC}} \text{ if } N_{\mathrm{ap}}^{\mathrm{SRS}} = 8, p_i \in \{1001, 1003, 1005, 1007\}, \text{ higher layer parameter } tdm \text{ is set to 'enabled' and } n_{\mathrm{SRS}}^{\mathrm{cs,max}} = 6 \\ \left(\bar{k}_{\mathrm{TC}} + K_{\mathrm{TC}}/2\right) \bmod K_{\mathrm{TC}} \text{ if } N_{\mathrm{ap}}^{\mathrm{SRS}} = 8, p_i \in \{1001, 1003, 1005, 1007\}, \text{ higher layer parameter } tdm \text{ is set to 'enabled' and } n_{\mathrm{SRS}}^{\mathrm{cs}} \in \left\{n_{\mathrm{SRS}}^{\mathrm{cs,max}}/2, \ldots, n_{\mathrm{SRS}}^{\mathrm{cs,max}} - 1\right\}, \\ \bar{k}_{\mathrm{TC}} \text{ otherwise} \end{cases}$$

or

$$k_{\mathrm{TC}}^{(p_i)} = \begin{cases} \left(\bar{k}_{\mathrm{TC}} + K_{\mathrm{TC}}/2\right) \bmod K_{\mathrm{TC}} \text{ if } N_{\mathrm{ap}}^{\mathrm{SRS}} = 8, p_i \in \{1001, 1003, 1005, 1007\}, \text{ higher layer parameter } tdm \text{ is set to 'enabled' and } n_{\mathrm{SRS}}^{\mathrm{cs,max}} = 6 \\ \left(\bar{k}_{\mathrm{TC}} + K_{\mathrm{TC}}/2\right) \bmod K_{\mathrm{TC}} \text{ if } N_{\mathrm{ap}}^{\mathrm{SRS}} = 8, p_i \in \{1001, 1003, 1005, 1007\}, \text{ higher layer parameter } tdm \text{ is set to 'enabled' and } n_{\mathrm{SRS}}^{\mathrm{cs}} \in \left\{n_{\mathrm{SRS}}^{\mathrm{cs,max}}/2, \ldots, n_{\mathrm{SRS}}^{\mathrm{cs,max}} - 1\right\}. \\ \bar{k}_{\mathrm{TC}} \text{ otherwise} \end{cases}$$

Alternatively, when a quantity of ports of the SRS resource is equal to 8, the higher-layer parameter tdm is set to be enabled, a maximum cyclic shift value is 6, and the port number corresponding to the port i belongs to {1001, 1003, 1005,1007} , the cyclic shift value corresponding to the port i is determined according to the following formula:

$$k_{\mathrm{TC}}^{(p_i)} = \left(\bar{k}_{\mathrm{TC}} + K_{\mathrm{TC}}/2\right) \bmod K_{\mathrm{TC}}.$$

When a quantity of ports of the SRS resource is equal to 8, the higher-layer parameter tdm is set to be enabled, the port number corresponding to the port i belongs to {1001, 1003, 1005,1007} , and the initial cyclic shift value $n_{\mathrm{SRS}}^{\mathrm{cs}}$ belongs to $\left\{n_{\mathrm{SRS}}^{\mathrm{cs,max}}/2, \ldots, n_{\mathrm{SRS}}^{\mathrm{cs,max}} - 1\right\}$ , the cyclic shift value corresponding to the port i is determined according to the following formula:

$$k_{\mathrm{TC}}^{(p_i)} = \left(\bar{k}_{\mathrm{TC}} + K_{\mathrm{TC}}/2\right) \bmod K_{\mathrm{TC}}.$$

When a quantity of ports of the SRS resource is equal to 8, the higher-layer parameter tdm is set to be enabled, but the port number corresponding to the port i does not belong to {1001, 1003, 1005,1007} and the initial cyclic shift value $n_{\mathrm{SRS}}^{\mathrm{cs}}$ does not belong to $\left\{n_{\mathrm{SRS}}^{\mathrm{cs,max}}/2, \ldots, n_{\mathrm{SRS}}^{\mathrm{cs,max}} - 1\right\}$ , or a maximum cyclic shift value is not 6 and the port number corresponding to the port i does not belong to {1001, 1003, 1005,1007}, the cyclic shift value corresponding to the port i is determined according to the following formula:

$$k_{\mathrm{TC}}^{(p_i)} = \bar{k}_{\mathrm{TC}}.$$

In an embodiment, N=8, a port 0, a port 4, and a port 5 occupy a first OFDM symbol, a port 2, a port 3, a port 6, and a port 7 occupy a second symbol, and the first symbol is different from the second symbol.

In embodiments of this application, the cyclic shift value corresponding to the $i^{th}$ port may be determined by using the port number corresponding to the $i^{th}$ port and the cyclic shift reference index. Because the cyclic shift value corresponding to the $i^{th}$ port is different from the cyclic shift value corresponding to the $(i+4)^{th}$ port, when the SRS resource includes eight ports, and port groups are mapped to different symbols, a resource collision caused by allocating inconsecutive port numbers to a same group can be avoided.

The foregoing describes the communication method provided in embodiments of this application. The following describes an apparatus and a device in embodiments of this application with reference to FIG. 16 and FIG. 17.

FIG. 16 is a diagram of a communication apparatus 1600 according to an embodiment of this application. The apparatus 1600 may include a transceiver unit 1610, a storage unit 1620, and a processing unit 1630. The transceiver unit 1610 is configured to receive or send instructions and/or data. The transceiver unit 1610 may also be referred to as a communication interface or a communication unit. The storage unit 1620 is configured to implement a corresponding storage function, and store corresponding instructions and/or data. The processing unit 1630 may read the instructions and/or the data in the storage unit, for the apparatus 1600 to implement the foregoing communication method.

In a design, the apparatus 1600 may be configured to perform an action performed by the terminal device in the foregoing method embodiments.

In an embodiment, the apparatus 1600 includes: the processing unit 1630, configured to obtain an initial cyclic shift value of an $i^{th}$ port in N ports corresponding to a sounding reference signal SRS resource and first cyclic shift bias sets corresponding to the N ports, where N is a positive integer, i is less than or equal to N, the first cyclic shift bias set is associated with a first bitmap, and a length of the first bitmap is less than or equal to a maximum cyclic shift value; and the transceiver unit 1610, configured to send an SRS based on the initial cyclic shift value and a first cyclic bias of the $i^{th}$ port in the first cyclic shift bias set.

In a possible implementation, the length of the first bitmap is equal to the maximum cyclic shift value.

In a possible implementation, the first cyclic shift bias set is an index of a bit 1 or a bit 0 in the first bitmap.

In a possible implementation, the first bitmap is obtained by adding 0 or 1 to a most significant bit of a bit in a second bitmap, and a length of the second bitmap is the maximum cyclic shift value minus 1.

In a possible implementation, the first bitmap is associated with a third bitmap and a value of Q, and the maximum cyclic shift value is equal to Q times a length of the third bitmap.

In a possible implementation, the value of Q is associated with at least one of the following content: a quantity of ports that occupy a same comb in the SRS resource, a quantity of ports that occupy different cyclic shifts in the SRS resource, or the maximum cyclic shift value.

In a possible implementation, the first bitmap is associated with an index indicated by a network device.

In an embodiment, the apparatus 1600 includes: the processing unit 1630, configured to obtain an initial comb offset value of an $i^{th}$ port in N ports corresponding to an SRS resource and first comb offset bias sets corresponding to the N ports, where N is a positive integer, i is less than or equal to N, the first comb offset bias set is associated with a first bitmap, and a length of the first bitmap is less than or equal to a comb number; and the transceiver unit 1610, configured to send an SRS based on the initial comb offset value and a first comb bias of the $i^{th}$ port in the first comb offset bias set.

In a possible implementation, the length of the first bitmap is equal to the comb number.

In a possible implementation, the first comb offset bias set is an index of a bit 1 or a bit 0 in the first bitmap.

In a possible implementation, the first bitmap is obtained by adding 0 or 1 to a most significant bit of a bit in a second bitmap, and a length of the second bitmap is the comb number minus 1.

In a possible implementation, the first bitmap is associated with a third bitmap and a value of Q, and the comb number is equal to Q times a length of the third bitmap.

In a possible implementation, the value of Q is associated with at least one of the following content: a quantity of ports that occupy a same cyclic shift in the SRS resource, a quantity of ports that occupy different combs in the SRS resource, or the comb number.

In a possible implementation, the first bitmap is associated with an index indicated by a network device.

In an embodiment, the apparatus 1600 includes: the processing unit 1630, configured to obtain an initial cyclic shift value of an $i^{th}$ port in N ports corresponding to a sounding reference signal SRS resource and first cyclic shift bias sets corresponding to the N ports, where N is a positive integer, i is less than or equal to N, the first cyclic shift bias set is associated with a third bitmap and a value of Q, and a length of the third bitmap is less than or equal to a maximum cyclic shift value; and the transceiver unit 1610, configured to send an SRS based on the initial cyclic shift value and a first cyclic bias of the $i^{th}$ port in the first cyclic shift bias set.

In a possible implementation, the value of Q is associated with at least one of the following content: a quantity of ports that occupy a same comb in the SRS resource, a quantity of ports that occupy different cyclic shifts in the SRS resource, or the maximum cyclic shift value.

In an embodiment, the apparatus 1600 includes: the processing unit 1630, configured to obtain an initial comb offset value of an $i^{th}$ port in N ports corresponding to an SRS resource and first comb offset bias sets corresponding to the N ports, where N is a positive integer, i is less than or equal to N, the first comb offset bias set is associated with a third bitmap and a value of Q, and a length of the third bitmap is less than or equal to a comb number; and the transceiver unit 1610, configured to send an SRS based on the initial comb offset value and a first comb bias of the $i^{th}$ port in the first comb offset bias set.

In a possible implementation, the value of Q is associated with at least one of the following content: a quantity of ports that occupy a same cyclic shift in the SRS resource, a quantity of ports that occupy different combs in the SRS resource, or the comb number.

In an embodiment, a communication apparatus is provided, including: a processing unit, configured to obtain a port number corresponding to an $i^{th}$ port in N ports corresponding to a sounding reference signal SRS resource, where N is a positive integer, i is less than or equal to N, the N ports are divided into two groups, and the two groups are respectively mapped to different OFDM symbols; determine, based on a cyclic shift reference index and the port number corresponding to the $i^{th}$ port, a cyclic shift value corresponding to the $i^{th}$ port; and determine, based on a comb offset value and the port number corresponding to the $i^{th}$ port, a comb corresponding to the $i^{th}$ port, where the cyclic shift value corresponding to the $i^{th}$ port is different from a cyclic shift value corresponding to an $(i+4)^{th}$ port.

In a design, the communication apparatus is configured to perform an action performed by the terminal device in the foregoing method embodiments.

In an embodiment, the apparatus 1600 includes: the processing unit 1630, configured to configure an initial cyclic shift value of an $i^{th}$ port in N ports corresponding to an SRS resource and first cyclic shift bias sets corresponding to the N ports, where N is a positive integer, i is less than or equal to N, the first cyclic shift bias set is associated with a first bitmap, and a length of the first bitmap is less than or equal to a maximum cyclic shift value; and the transceiver unit 1610, configured to send first indication information to a terminal device, where the first indication information includes the initial cyclic shift value and the first cyclic shift bias sets.

In a possible implementation, the length of the first bitmap is equal to the maximum cyclic shift value.

In a possible implementation, the first cyclic shift bias set is an index of a bit 1 or a bit 0 in the first bitmap.

In a possible implementation, the first bitmap is obtained by adding 0 or 1 to a most significant bit of a bit in a second bitmap, and a length of the second bitmap is the maximum cyclic shift value minus 1.

In a possible implementation, the first bitmap is associated with a third bitmap and a value of Q, and the maximum cyclic shift value is equal to Q times a length of the third bitmap.

In a possible implementation, the value of Q is associated with at least one of the following content: a quantity of ports that occupy a same comb in the SRS resource, a quantity of ports that occupy different cyclic shifts in the SRS resource, or the maximum cyclic shift value.

In an embodiment, the apparatus 1600 includes: the processing unit 1630, configured to configure an initial comb offset value of an $i^{th}$ port in N ports corresponding to an SRS resource and first comb offset bias sets corresponding to the N ports, where N is a positive integer, i is less than or equal to N, the first comb offset bias set is associated with a first bitmap, and a length of the first bitmap is less than or equal to a comb number; and the transceiver unit 1610, configured to send second indication information to a terminal device, where the second indication information includes the initial comb offset value and the first comb offset bias sets.

In a possible implementation, the length of the first bitmap is equal to the comb number.

In a possible implementation, the first comb offset bias set is an index of a bit 1 or a bit 0 in the first bitmap.

In a possible implementation, the first bitmap is obtained by adding 0 or 1 to a most significant bit of a bit in a second bitmap, and a length of the second bitmap is the comb number minus 1.

In a possible implementation, the first bitmap is associated with a third bitmap and a value of Q, and the comb number is equal to Q times a length of the third bitmap.

In a possible implementation, the value of Q is associated with at least one of the following content: a quantity of ports that occupy a same cyclic shift in the SRS resource, a quantity of ports that occupy different combs in the SRS resource, or the comb number.

In a possible implementation, the first bitmap is associated with an index indicated by a network device.

FIG. 17 is a diagram of another communication apparatus 1700 according to an embodiment of this application.

The apparatus 1700 includes a memory 1710, a processor 1720, and a communication interface 1730. The memory 1710, the processor 1720, and the communication interface 1730 are connected through an internal connection path. The memory 1710 is configured to store instructions. The processor 1720 is configured to execute the instructions stored in the memory 1710, to control the communication interface 1730 to obtain information, so that the apparatus 1700 implements the foregoing communication method. Optionally, the memory 1710 may be coupled to the processor 1720 through an interface, or integrated with the processor 1720.

It should be noted that the communication interface 1730 uses a transceiver apparatus, for example, but not limited to, a transceiver. The communication interface 1730 may further include an input/output interface (input/output interface).

The processor 1720 stores one or more computer programs, and the one or more computer programs include instructions. When the instructions are run by the processor 1720, the communication apparatus 1700 is enabled to perform the communication method in the foregoing embodiments.

It should be understood that in embodiments of this application, the processor may be a central control unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should also be understood that in embodiments of this application, the memory may include a read-only memory and a random access memory, and provide instructions and data to the processor. A part of the processor may further include a non-volatile random access memory. For example, the processor may further store information of a device type.

In an implementation process, steps of the foregoing methods may be accomplished by using an integrated logic circuit of hardware in the processor 1720 or instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1710. The processor 1720 reads information in the memory 1710, and implements the steps of the foregoing methods in combination with hardware of the processor 1720. To avoid repetition, details are not described herein again.

Optionally, the communication interface 1730 in FIG. 17 may implement the transceiver unit 1610 in FIG. 16, the memory 1710 in FIG. 17 may implement the storage unit 1620 in FIG. 16, and the processor 1720 in FIG. 17 may implement the processing unit 1630 in FIG. 16.

An embodiment of this application further provides a computer-readable storage medium. The computer-readable storage medium stores program code. When the computer program code is run on a computer, the computer is enabled to perform any method in FIG. 7 to FIG. 15.

An embodiment of this application further provides a computer program product. The computer product includes a computer program. When the computer program is run, a computer is enabled to perform any method in FIG. 7 to FIG. 15.

An embodiment of this application further provides a chip, including a circuit. The circuit is configured to perform any method in FIG. 7 to FIG. 15.

An embodiment of this application further provides a terminal device, including the communication apparatus shown in FIG. 16 or FIG. 17.

An embodiment of this application further provides a network device, including the communication apparatus shown in FIG. 16 or FIG. 17.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A communication method, wherein the method comprises:

obtaining an initial cyclic shift value of an $i^{th}$ port in N ports corresponding to a sounding reference signal SRS resource and first cyclic shift bias sets corresponding to the N ports, wherein N is a positive integer, i is less than or equal to N, the first cyclic shift bias set is associated with a first bitmap, and a length of the first bitmap is less than or equal to a maximum cyclic shift value; and

sending an SRS based on the initial cyclic shift value and a first cyclic bias of the $i^{th}$ port in the first cyclic shift bias set.

**2.** The method according to claim 1, wherein the length of the first bitmap is equal to the maximum cyclic shift value.

**3.** The method according to claim 2, wherein the first cyclic shift bias set is an index of a bit 1 or a bit 0 in the first bitmap.

**4.** The method according to claim 2, wherein the first bitmap is obtained by adding 0 or 1 to a most significant bit of a bit in a second bitmap, and a length of the second bitmap is the maximum cyclic shift value minus 1.

**5.** The method according to claim 1, wherein the first bitmap is associated with a third bitmap and a value of Q, and the maximum cyclic shift value is equal to Q times a length of the third bitmap.

**6.** The method according to claim 4, wherein a value of Q is associated with at least one of the following content: a quantity of ports that occupy a same comb in the SRS resource, a quantity of ports that occupy different cyclic shifts in the SRS resource, or the maximum cyclic shift value.

**7.** The method according to claim 1, wherein the first bitmap is associated with an index indicated by a network device.

**8.** A communication method, wherein the method comprises:

obtaining an initial comb offset value of an $i^{th}$ port in N ports corresponding to an SRS resource and first comb offset bias sets corresponding to the N ports, wherein N is a positive integer, i is less than or equal to N, the first comb offset bias set is associated with a first bitmap, and a length of the first bitmap is less than or equal to a comb number; and

sending an SRS based on the initial comb offset value and a first comb bias of the $i^{th}$ port in the first comb offset bias set.

**9.** The method according to claim 8, wherein the length of the first bitmap is equal to the comb number.

**10.** The method according to claim 9, wherein the first comb offset bias set is an index of a bit 1 or a bit 0 in the first bitmap.

**11.** The method according to claim 9, wherein the first bitmap is obtained by adding 0 or 1 to a most significant bit of a bit in a second bitmap, and a length of the second bitmap is the comb number minus 1.

**12.** The method according to claim 8, wherein the first bitmap is associated with a third bitmap and a value of Q, and the comb number is equal to Q times a length of the third bitmap.

13. The method according to claim 12, wherein the value of Q is associated with at least one of the following content: a quantity of ports that occupy a same cyclic shift in the SRS resource, a quantity of ports that occupy different combs in the SRS resource, or the comb number.

14. The method according to claim 8, wherein the first bitmap is associated with an index indicated by a network device.

15. A communication apparatus, wherein the apparatus comprises:

a processing unit, configured to obtain an initial cyclic shift value of an $i^{th}$ port in N ports corresponding to a sounding reference signal SRS resource and first cyclic shift bias sets corresponding to the N ports, wherein N is a positive integer, i is less than or equal to N, the first cyclic shift bias set is associated with a first bitmap, and a length of the first bitmap is less than or equal to a maximum cyclic shift value; and
a transceiver unit, configured to send an SRS based on the initial cyclic shift value and a first cyclic bias of the $i^{th}$ port in the first cyclic shift bias set.

16. The apparatus according to claim 15, wherein the length of the first bitmap is equal to the maximum cyclic shift value.

17. The apparatus according to claim 16, wherein the first cyclic shift bias set is an index of a bit 1 or a bit 0 in the first bitmap.

18. The apparatus according to claim 16, wherein the first bitmap is obtained by adding 0 or 1 to a most significant bit of a bit in a second bitmap, and a length of the second bitmap is the maximum cyclic shift value minus 1.

19. The apparatus according to claim 15, wherein the first bitmap is associated with a third bitmap and a value of Q, and the maximum cyclic shift value is equal to Q times a length of the third bitmap.

20. The apparatus according to claim 19, wherein the value of Q is associated with at least one of the following content: a quantity of ports that occupy a same comb in the SRS resource, a quantity of ports that occupy different cyclic shifts in the SRS resource, or the maximum cyclic shift value.

21. The apparatus according to claim 15, wherein the first bitmap is associated with an index indicated by a network device.

22. A communication apparatus, wherein the apparatus comprises:

a processing unit, configured to obtain an initial comb offset value of an $i^{th}$ port in N ports corresponding to an SRS resource and first comb offset bias sets corresponding to the N ports, wherein N is a positive integer, i is less than or equal to N, the first comb offset bias set is associated with a first bitmap, and a length of the first bitmap is less than or equal to a comb number; and
a transceiver unit, configured to send an SRS based on the initial comb offset value and a first comb bias of the $i^{th}$ port in the first comb offset bias set.

23. The apparatus according to claim 22, wherein the length of the first bitmap is equal to the comb number.

24. The apparatus according to claim 23, wherein the first comb offset bias set is an index of a bit 1 or a bit 0 in the first bitmap.

25. The apparatus according to claim 23, wherein the first bitmap is obtained by adding 0 or 1 to a most significant bit of a bit in a second bitmap, and a length of the second bitmap is the comb number minus 1.

26. The apparatus according to claim 22, wherein the first bitmap is associated with a third bitmap and a value of Q, and the comb number is equal to Q times a length of the third bitmap.

27. The apparatus according to claim 26, wherein the value of Q is associated with at least one of the following content: a quantity of ports that occupy a same cyclic shift in the SRS resource, a quantity of ports that occupy different combs in the SRS resource, or the comb number.

28. The apparatus according to claim 22, wherein the first bitmap is associated with an index indicated by a network device.

**29.** A communication apparatus, comprising a processor and a memory, wherein the processor is coupled to the memory, and is configured to: read and execute instructions in the memory, to perform the method according to any one of claims 1 to 7

**30.** A communication apparatus, comprising a processor and a memory, wherein the processor is coupled to the memory, and is configured to: read and execute instructions in the memory, to perform the method according to any one of claims 8 to 14

**31.** A computer-readable storage medium, wherein the computer-readable storage medium stores program code, and when the computer program code is run on a computer, the computer is enabled to perform the method according to any one of claims 1 to 14.

**32.** A chip, comprising a circuit, wherein the circuit is configured to perform the method according to any one of claims 1 to 14.

**33.** A terminal device, comprising the apparatus according to any one of claims 15 to 30.

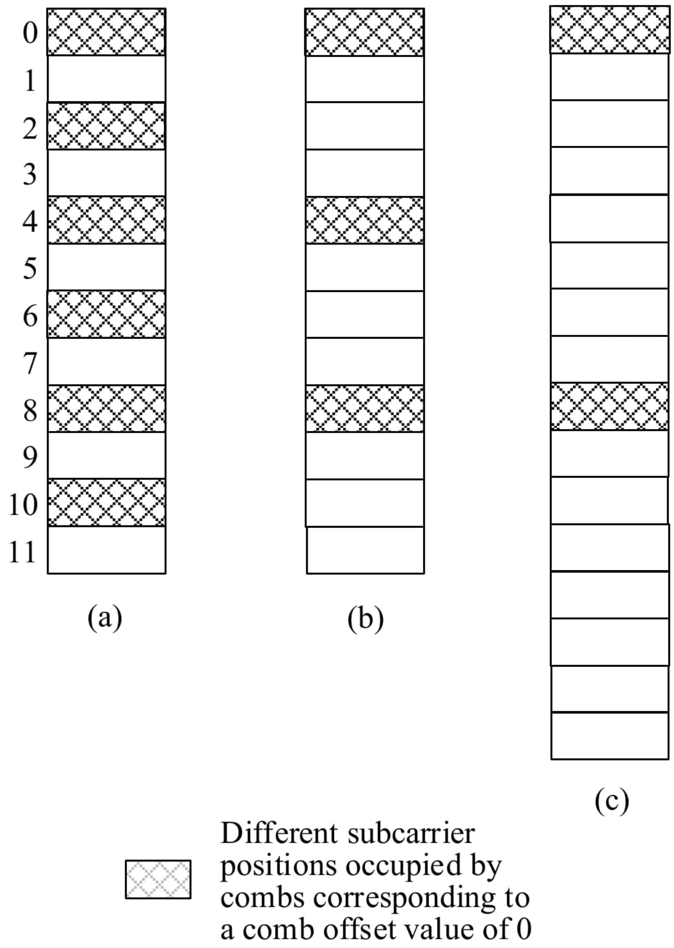
0
1
2
3
4
5
6
7
8
9
10
11
(a)
(b)
(c)
Different subcarrier positions occupied by combs corresponding to a comb offset value of 0

FIG. 1

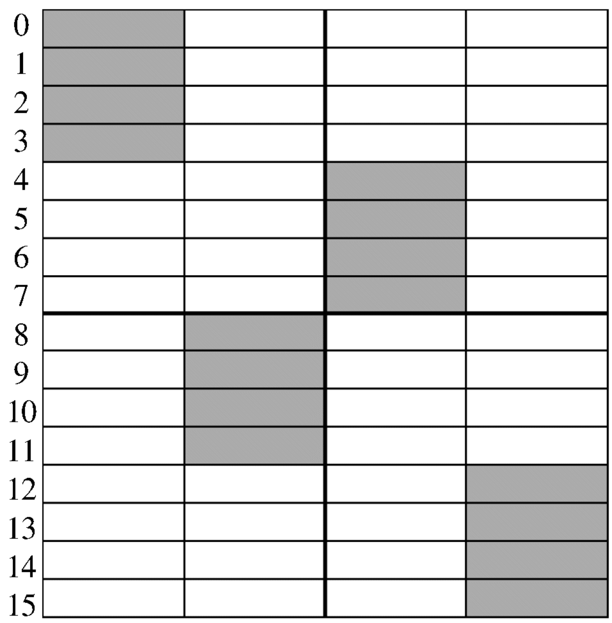
0
1
2
3
4
5
6
7
8
9
10
11
12
13
14
15

FIG. 2

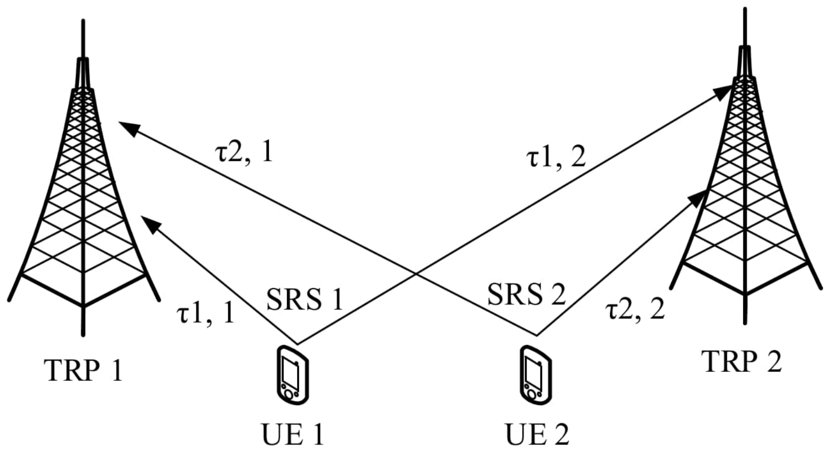


FIG. 3

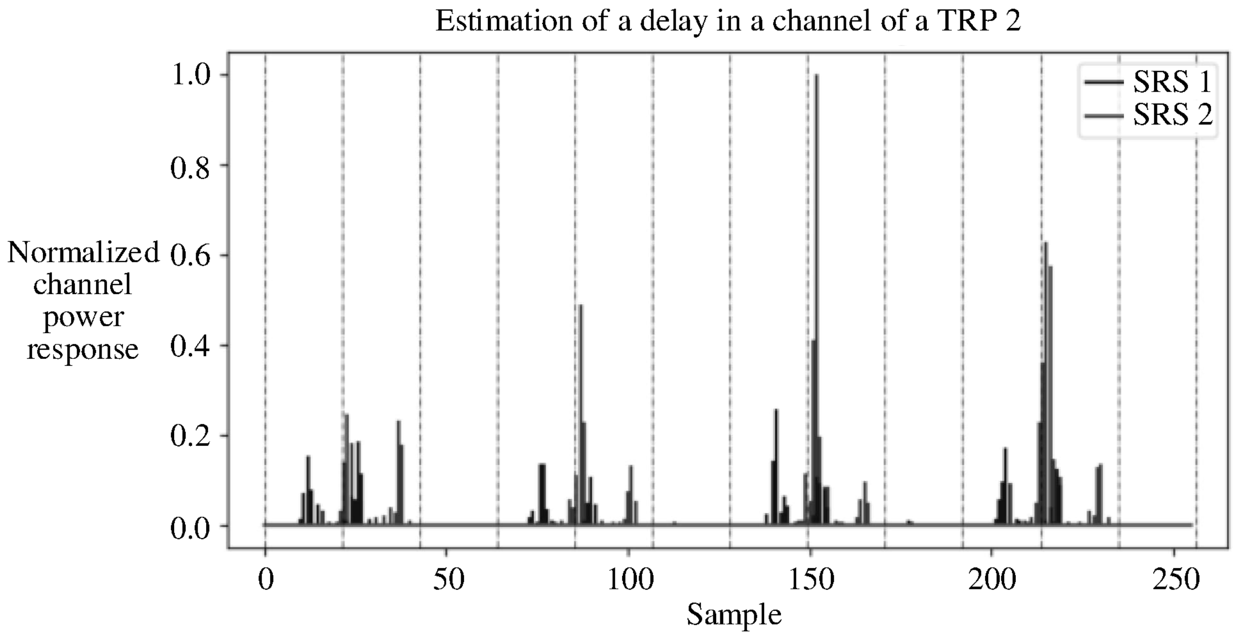


FIG. 4

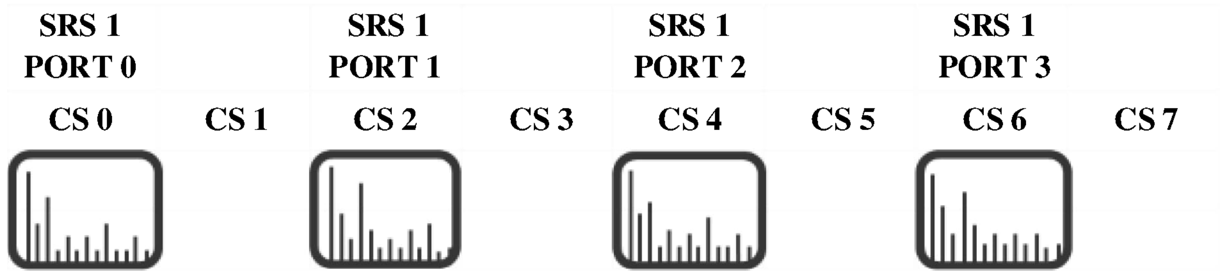


FIG. 5

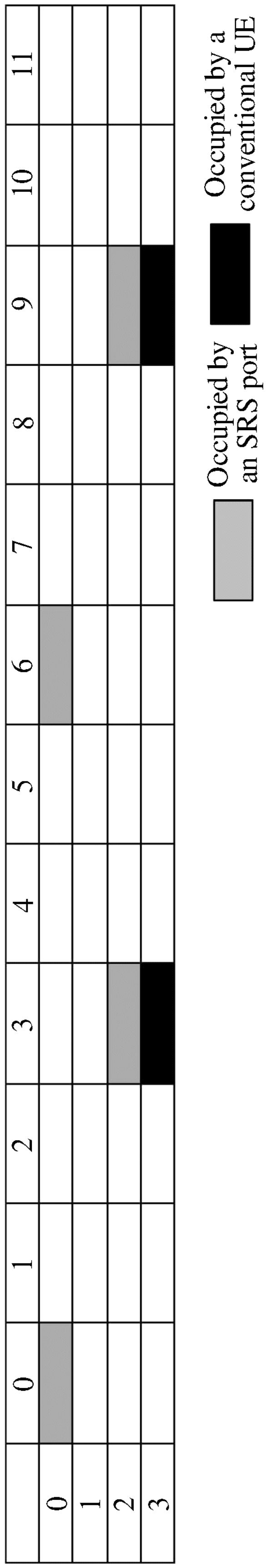
0
1
2
3
4
5
6
7
8
9
10
11
0
1
2
3
Occupied by an SRS port
Occupied by a conventional UE

FIG. 6

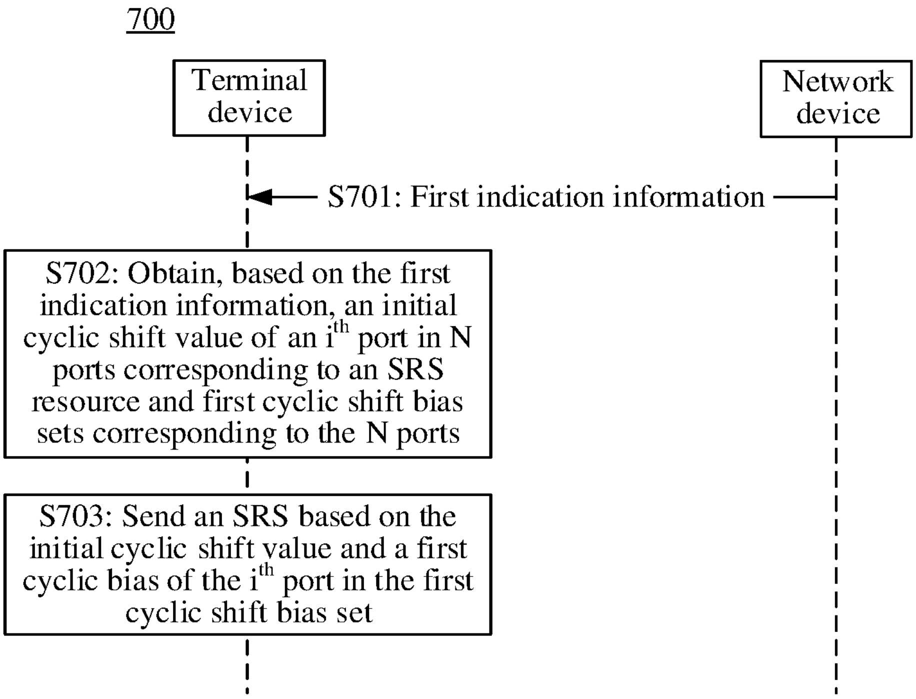
700
Terminal device
Network device
S701: First indication information
S702: Obtain, based on the first indication information, an initial cyclic shift value of an ith port in N ports corresponding to an SRS resource and first cyclic shift bias sets corresponding to the N ports
S703: Send an SRS based on the initial cyclic shift value and a first cyclic bias of the ith port in the first cyclic shift bias set

FIG. 7

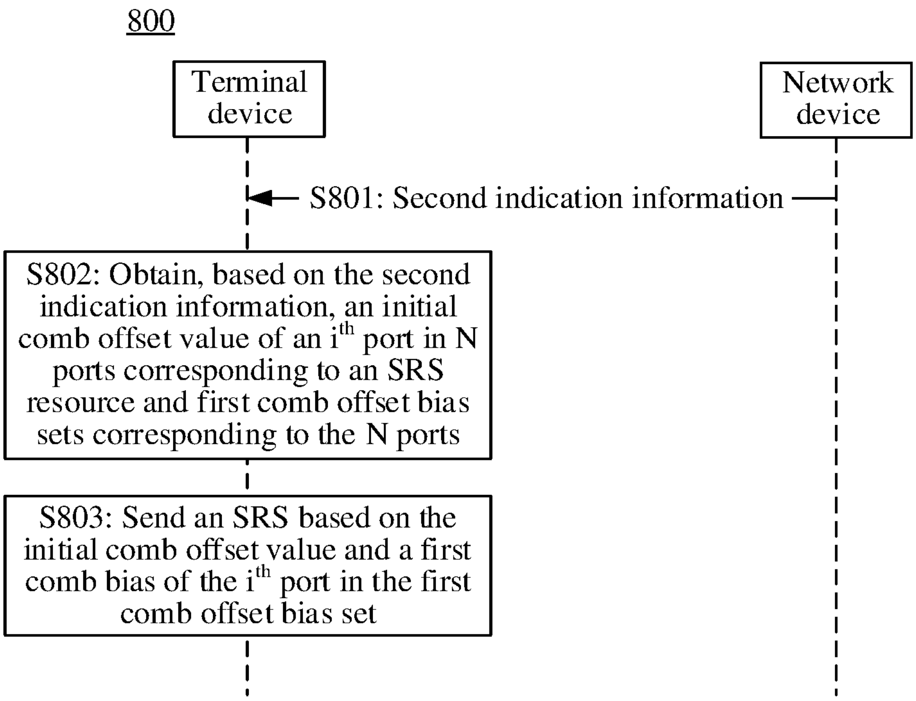
800
Terminal device
Network device
S801: Second indication information
S802: Obtain, based on the second indication information, an initial comb offset value of an ith port in N ports corresponding to an SRS resource and first comb offset bias sets corresponding to the N ports
S803: Send an SRS based on the initial comb offset value and a first comb bias of the ith port in the first comb offset bias set

FIG. 8

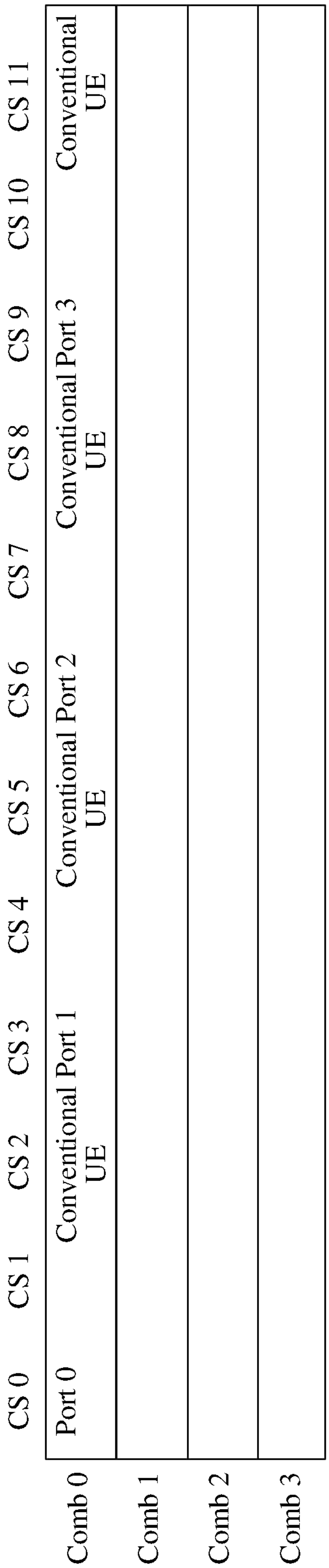
CS 0
CS 1
CS 2
CS 3
CS 4
CS 5
CS 6
CS 7
CS 8
CS 9
CS 10
CS 11
Comb 0
Comb 1
Comb 2
Comb 3
Port 0
Conventional Port 1 UE
Conventional Port 2 UE
Conventional Port 3 UE
Conventional UE

FIG. 9

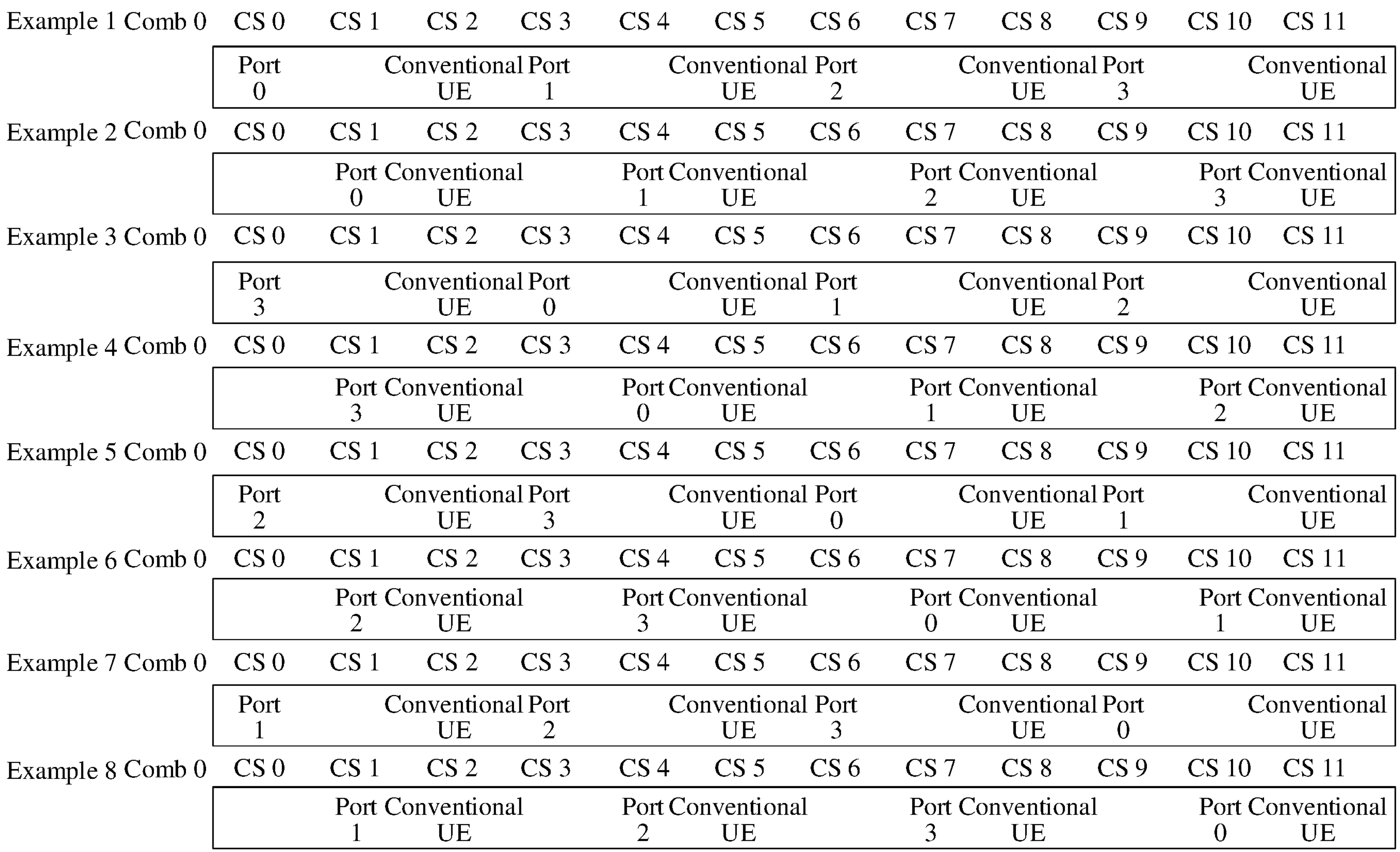
Example 1 Comb 0 CS 0 CS 1 CS 2 CS 3 CS 4 CS 5 CS 6 CS 7 CS 8 CS 9 CS 10 CS 11
Port 0
Conventional UE
Port 1
Conventional UE
Port 2
Conventional UE
Port 3
Conventional UE
Example 2 Comb 0 CS 0 CS 1 CS 2 CS 3 CS 4 CS 5 CS 6 CS 7 CS 8 CS 9 CS 10 CS 11
Port 0
Conventional UE
Port 1
Conventional UE
Port 2
Conventional UE
Port 3
Conventional UE
Example 3 Comb 0 CS 0 CS 1 CS 2 CS 3 CS 4 CS 5 CS 6 CS 7 CS 8 CS 9 CS 10 CS 11
Port 3
Conventional UE
Port 0
Conventional UE
Port 1
Conventional UE
Port 2
Conventional UE
Example 4 Comb 0 CS 0 CS 1 CS 2 CS 3 CS 4 CS 5 CS 6 CS 7 CS 8 CS 9 CS 10 CS 11
Port 3
Conventional UE
Port 0
Conventional UE
Port 1
Conventional UE
Port 2
Conventional UE
Example 5 Comb 0 CS 0 CS 1 CS 2 CS 3 CS 4 CS 5 CS 6 CS 7 CS 8 CS 9 CS 10 CS 11
Port 2
Conventional UE
Port 3
Conventional UE
Port 0
Conventional UE
Port 1
Conventional UE
Example 6 Comb 0 CS 0 CS 1 CS 2 CS 3 CS 4 CS 5 CS 6 CS 7 CS 8 CS 9 CS 10 CS 11
Port 2
Conventional UE
Port 3
Conventional UE
Port 0
Conventional UE
Port 1
Conventional UE
Example 7 Comb 0 CS 0 CS 1 CS 2 CS 3 CS 4 CS 5 CS 6 CS 7 CS 8 CS 9 CS 10 CS 11
Port 1
Conventional UE
Port 2
Conventional UE
Port 3
Conventional UE
Port 0
Conventional UE
Example 8 Comb 0 CS 0 CS 1 CS 2 CS 3 CS 4 CS 5 CS 6 CS 7 CS 8 CS 9 CS 10 CS 11
Port 1
Conventional UE
Port 2
Conventional UE
Port 3
Conventional UE
Port 0
Conventional UE

FIG. 10

| | CS 0 | CS 1 | CS 2 | CS 3 | CS 4 | CS 5 |
|---|---|---|---|---|---|---|
| Comb 0 | Port 0 | | | Port 2 | | |
| Comb 1 | | | | | | |
| Comb 2 | | | | | | |
| Comb 3 | Conventional UE | | | Conventional UE | | |
| Comb 4 | Port 1 | | | Port 3 | | |
| Comb 5 | | | | | | |
| Comb 6 | | | | | | |
| Comb 7 | Conventional UE | | | Conventional UE | | |

FIG. 11

| | CS 0 | CS 1 | CS 2 | CS 3 | CS 4 | CS 5 |
|---|---|---|---|---|---|---|
| Comb 0 | Port 0 | | | Port 2 | | |
| Comb 1 | | | | | | |
| Comb 2 | | | | | | |
| Comb 3 | Conventional UE | | | Conventional UE | | |
| Comb 4 | Port 1 | | | Port 3 | | |
| Comb 5 | | | | | | |
| Comb 6 | | | | | | |
| Comb 7 | Conventional UE | | | Conventional UE | | |

| | CS 0 | CS 1 | CS 2 | CS 3 | CS 4 | CS 5 |
|---|---|---|---|---|---|---|
| Comb 0 | Port 1 | | | Port 3 | | |
| Comb 1 | | | | | | |
| Comb 2 | | | | | | |
| Comb 3 | Conventional UE | | | Conventional UE | | |
| Comb 4 | Port 0 | | | Port 2 | | |
| Comb 5 | | | | | | |
| Comb 6 | | | | | | |
| Comb 7 | Conventional UE | | | Conventional UE | | |

| | CS 0 | CS 1 | CS 2 | CS 3 | CS 4 | CS 5 |
|---|---|---|---|---|---|---|
| Comb 0 | | | | | | |
| Comb 1 | Port 0 | | | Port 2 | | |
| Comb 2 | | | | | | |
| Comb 3 | Conventional UE | | | Conventional UE | | |
| Comb 4 | | | | | | |
| Comb 5 | Port 1 | | | Port 3 | | |
| Comb 6 | | | | | | |
| Comb 7 | Conventional UE | | | Conventional UE | | |

| | CS 0 | CS 1 | CS 2 | CS 3 | CS 4 | CS 5 |
|---|---|---|---|---|---|---|
| Comb 0 | | | | | | |
| Comb 1 | Port 1 | | | Port 3 | | |
| Comb 2 | | | | | | |
| Comb 3 | Conventional UE | | | Conventional UE | | |
| Comb 4 | | | | | | |
| Comb 5 | Port 0 | | | Port 2 | | |
| Comb 6 | | | | | | |
| Comb 7 | Conventional UE | | | Conventional UE | | |

| | CS 0 | CS 1 | CS 2 | CS 3 | CS 4 | CS 5 |
|---|---|---|---|---|---|---|
| Comb 0 | | | | | | |
| Comb 1 | | | | | | |
| Comb 2 | Port 0 | | | Port 2 | | |
| Comb 3 | Conventional UE | | | Conventional UE | | |
| Comb 4 | | | | | | |
| Comb 5 | | | | | | |
| Comb 6 | Port 1 | | | Port 3 | | |
| Comb 7 | Conventional UE | | | Conventional UE | | |

| | CS 0 | CS 1 | CS 2 | CS 3 | CS 4 | CS 5 |
|---|---|---|---|---|---|---|
| Comb 0 | | | | | | |
| Comb 1 | | | | | | |
| Comb 2 | Port 1 | | | Port 3 | | |
| Comb 3 | Conventional UE | | | Conventional UE | | |
| Comb 4 | | | | | | |
| Comb 5 | | | | | | |
| Comb 6 | Port 0 | | | Port 2 | | |
| Comb 7 | Conventional UE | | | Conventional UE | | |

FIG. 12

| | CS 0 | CS 1 | CS 2 | CS 3 | CS 4 | CS 5 | CS 6 | CS 7 | CS 8 | CS 9 | CS 10 | CS 11 |
|---|---|---|---|---|---|---|---|---|---|---|---|---|
| Comb 0 | Port 0 | | | Port 1 | | | Port 2 | | | Port 3 | | |
| Comb 1 | | | | | | | | | | | | |
| Comb 2 | | | | | | | | | | | | |
| Comb 3 | | | | | | | | | | | | |

OFDM symbol 1

| | CS 0 | CS 1 | CS 2 | CS 3 | CS 4 | CS 5 | CS 6 | CS 7 | CS 8 | CS 9 | CS 10 | CS 11 |
|---|---|---|---|---|---|---|---|---|---|---|---|---|
| Comb 0 | Port 4 | | | Port 5 | | | Port 6 | | | Port 7 | | |
| Comb 1 | | | | | | | | | | | | |
| Comb 2 | | | | | | | | | | | | |
| Comb 3 | | | | | | | | | | | | |

OFDM symbol 2

FIG. 13

| | CS 0 | CS 1 | CS 2 | CS 3 | CS 4 | CS 5 | CS 6 | CS 7 | CS 8 | CS 9 | CS 10 | CS 11 |
|---|---|---|---|---|---|---|---|---|---|---|---|---|
| Comb 0 | Ports 0 and 4 | | | Ports 1 and 5 | | | | | | | | |
| Comb 1 | | | | | | | | | | | | |
| Comb 2 | | | | | | | | | | | | |
| Comb 3 | | | | | | | | | | | | |

Symbol 1

| | CS 0 | CS 1 | CS 2 | CS 3 | CS 4 | CS 5 | CS 6 | CS 7 | CS 8 | CS 9 | CS 10 | CS 11 |
|---|---|---|---|---|---|---|---|---|---|---|---|---|
| Comb 0 | | | | | | | Ports 2 and 6 | | | Ports 3 and 7 | | |
| Comb 1 | | | | | | | | | | | | |
| Comb 2 | | | | | | | | | | | | |
| Comb 3 | | | | | | | | | | | | |

Symbol 2

FIG. 14

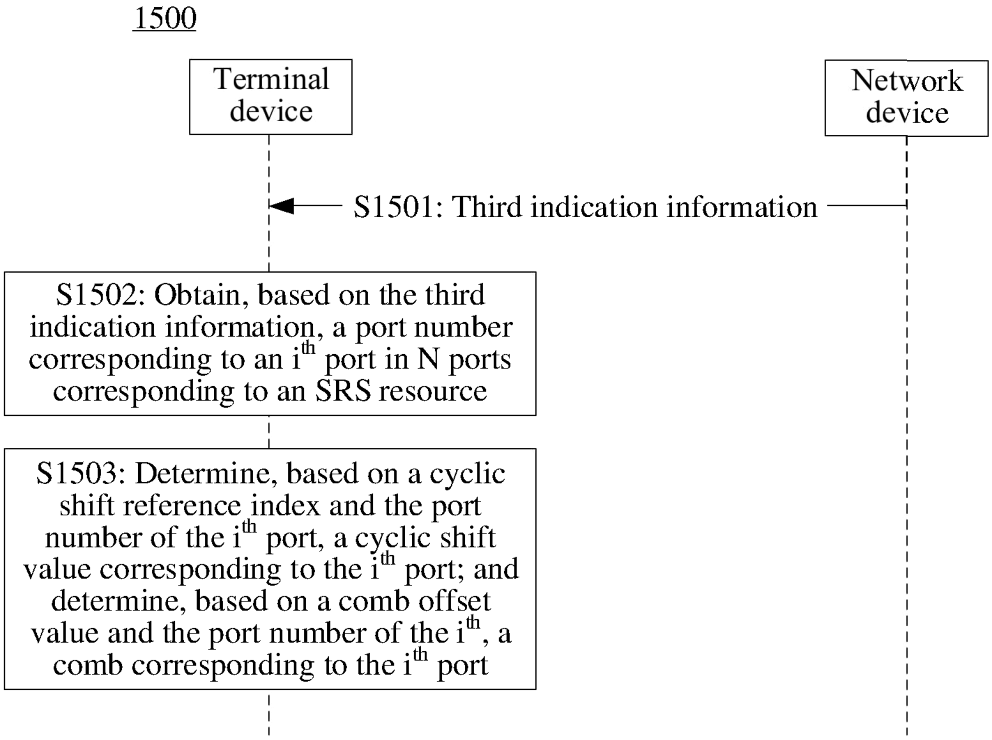


FIG. 15

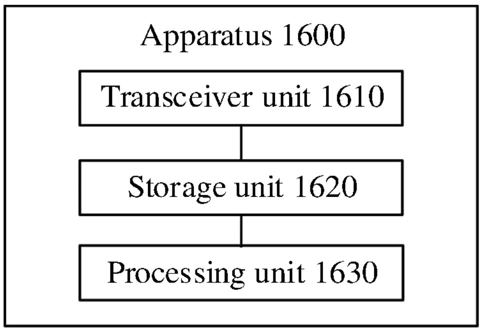


FIG. 16

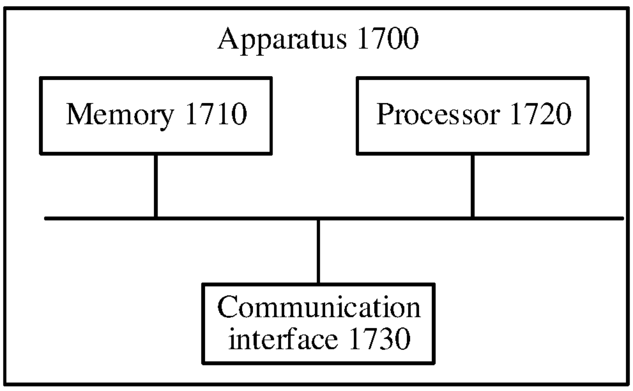


FIG. 17

**INTERNATIONAL SEARCH REPORT**

International application No. **PCT/CN2024/105887**

**A. CLASSIFICATION OF SUBJECT MATTER**

H04L5/00(2006.01)i

According to International Patent Classification (IPC) or to both national classification and IPC

**B. FIELDS SEARCHED**

Minimum documentation searched (classification system followed by classification symbols)

IPC: H04L，H04W，H04B

Documentation searched other than minimum documentation to the extent that such documents are included in the fields searched

Electronic data base consulted during the international search (name of data base and, where practicable, search terms used)

3GPP, CNTXT, ENTXTC, WPABS, DWPI, ENTXT: 探测参考信号, SRS, 传统UE, 冲突, 碰撞, 占用, 干扰, 可用, 位图, 跳转, 循环移位, CS, 梳齿偏移, CO, sounding reference signal, legacy, conflict, collide, occupy, interfere, hopping, cyclic shift, comb offset, available, bitmap

**C. DOCUMENTS CONSIDERED TO BE RELEVANT**

| Category* | Citation of document, with indication, where appropriate, of the relevant passages | Relevant to claim No. |
|---|---|---|
| Y | WO 2020221081 A1 (HUAWEI TECHNOLOGIES CO., LTD.) 05 November 2020 (2020-11-05) description, page 10, line 3-page 14, line 13, and page 14, line 36-page 15, line 7, and figures 3-6, 8, and 10-11 | 1-33 |
| Y | CN 115883290 A (HUAWEI TECHNOLOGIES CO., LTD.) 31 March 2023 (2023-03-31) description, paragraphs [0349]-[0382], and figure 12 | 1-33 |
| A | US 2020028638 A1 (QUALCOMM INC.) 23 January 2020 (2020-01-23) entire document | 1-33 |
| A | US 2021409152 A1 (QUALCOMM INC.) 30 December 2021 (2021-12-30) entire document | 1-33 |
| A | WO 2022151439 A1 (HUAWEI TECHNOLOGIES CO., LTD.) 21 July 2022 (2022-07-21) entire document | 1-33 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 October 2024** | **16 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/105887**

| Patent document cited in search report | Publication date (day/month/year) | Patent family member(s) | Publication date (day/month/year) |
|---|---|---|---|
| WO 2020221081 A1 | 05 November 2020 | CN 111865524 A | 30 October 2020 |
| CN 115883290 A | 31 March 2023 | WO 2023051470 A1 | 06 April 2023 |
| | | KR 20240073089 A | 24 May 2024 |
| | | US 2024259146 A1 | 01 August 2024 |
| | | EP 4412163 A1 | 07 August 2024 |
| US 2020028638 A1 | 23 January 2020 | WO 2020018811 A2 | 23 January 2020 |
| | | EP 3824586 A2 | 26 May 2021 |
| | | SG 11202013072 TA | 25 February 2021 |
| | | KR 20210025045 A | 08 March 2021 |
| | | IN 202047056679 A | 22 January 2021 |
| | | CN 112438031 A | 02 March 2021 |
| US 2021409152 A1 | 30 December 2021 | EP 4173213 A1 | 03 May 2023 |
| | | WO 2022005766 A1 | 06 January 2022 |
| | | EP 4383662 A2 | 12 June 2024 |
| | | US 2023124754 A1 | 20 April 2023 |
| | | IN 202247060339 A | 28 October 2022 |
| | | CN 115735345 A | 03 March 2023 |
| WO 2022151439 A1 | 21 July 2022 | BR 112023014324 A2 | 26 September 2023 |
| | | EP 4270801 A1 | 01 November 2023 |
| | | JP 2024506479 A | 14 February 2024 |
| | | US 2024048310 A1 | 08 February 2024 |
| | | KR 20230131908 A | 14 September 2023 |
| | | CA 3208342 A1 | 21 July 2022 |
| | | AU 2021420388 A1 | 10 August 2023 |
| | | CN 116783831 A | 19 September 2023 |
| | | IN 202337049794 A | 06 October 2023 |
| | | VN 99646 A | 25 December 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311021987